# EUROPEAN PATENT APPLICATION

(11) **EP 2 860 683 A1**
(43) Date of publication of application: **15.04.2015**
(21) Application number: 13803996.1
(22) Date of filing: 11.06.2013
(51) Int. Cl.: G06Q 30/02

(54) **USER TERMINAL DEVICE, SERVER DEVICE, SYSTEM COMPRISING SAME, AND ADVERTISEMENT SERVICE METHOD THEREOF**

(30) Priority: 11.06.2012 US 201261658156 P; 07.01.2013 KR 20130001818; 01.02.2013 KR 20130012022
(71) Applicant: Samsung Electronics Co., Ltd., Suwon-si, Gyeonggi-do 443-742 (KR)
(72) Inventor: RHEE, Young-ho, Yongin-si Gyeonggi-do 448-914 (KR); KIM, Jae-hwan, Suwon-si Gyeonggi-do 443-472 (KR); KIM, Chang-won, Asan-si Chungcheongnam-do 336-750 (KR)
(74) Representative: Jenkins, Richard Gavin
(86) International application number: PCT/KR2013/005152
(87) International publication number: WO 2013/187680

(57) **Abstract**

An advertisement service method is disclosed. The present method comprises the steps of: registering contact information of at least one advertiser in a phonebook; Receiving, from a server device, advertisement information issued from the advertiser registered in the phone book; informing of the reception of the advertisement information; and displaying the received advertisement information when receiving a confirmation request signal for the advertisement information. Accordingly, it is possible to conveniently provide an advertisement service.

## Description

### CROSS-REFERENCE TO RELATED APPLICATIONS

This application claims priority from Korean Patent Application Nos. 10-2013-0001818 filed in the Korean Intellectual Property Office on January 7, 2013 and 10-2013-0012022 filed in the Korean Intellectual Property Office on February 1, 2013, and U.S. Provisional Patent Application No. 61/658,156, filed in the United States Patent and Trademark Office on June 11, 2012, the entire disclosures of which are incorporated herein by reference.

### BACKGROUND OF THE INVENTION

### 1. Field of the Invention

Aspects of the exemplary embodiments relate to a user terminal device, a server device, a system including the same, and an advertisement method thereof, and more particularly, to a user terminal device which provides advertisement information using a phone book function, a server device, a system including the same, and an advertisement method thereof.

### 2. Description of the Related Art

With the recent remarkable advancement of information and communication technology, semiconductor technology, etc., user terminal devices have been widely distributed, and the number of people using user terminal devices has rapidly increased. Recently, user terminal devices do not limit themselves to the existing unique areas, but provide more complicated functions which are supported by other terminals.

For example, a mobile communication terminal provides not only a general communication function such as a voice call and transceiving of messages but also various functions such as a TV broadcasting function (for example, mobile broadcasting including Digital Multimedia Broadcasting (DMB)), a music play function (for example, MPEG Audio Layer-3 (MP3)), a photographing function, a data communication function, an Internet connection function, a short range wireless communication function, etc.

Meanwhile, with the advancement of mobile communication services, a small-scale mobile user terminal device such as a mobile phone, a tablet PC, a PDA, an electronic note, and a lap-top computer has become a must-have item. Accordingly, there has been increasing interest on advertisement services targeting such a small-scale user terminal device and a shopping service for allowing a user to purchase products using such a device.

A current advertisement service provides advertisement messages to many and unspecified persons unilaterally, regardless of their preferences. Thus, those who do not want to receive such advertisement messages may often feel displeased when they receive random spam-like advertisement messages. In this case, those who received the unwelcome messages may register the number from which the messages are received as a spam number to prevent further unpleasant messages being received or just delete the advertisement messages without checking them. In other words, with the conventional advertisement service method, it is difficult to expect any advertisement exposure or information-providing effect.

In addition, a shopping service which can be used on a user terminal device conveniently has not been supported yet.

Accordingly, a technology for providing services related to shopping using a user terminal device is required.

### SUMMARY OF THE INVENTION

An aspect of the exemplary embodiments relates to a user terminal device which provides various services related to shopping based on an application, a server device, a system including the same and a service method thereof.

A method of providing an advertisement service of a user terminal device according to an exemplary embodiment includes registering a contact number of at least one advertiser in a phone book, receiving advertisement information issued from an advertiser registered in the phone book from a server device, alarming a reception of the advertisement information, and displaying the received advertisement information in response to a confirmation request signal regarding the advertisement information being received.

The alarming may include displaying a number icon indicating a number of advertisement information which is not confirmed on a home screen, and displaying an alarm message regarding the unconfirmed advertisement information in response to the number icon being selected.

The alarming may include displaying an alarm menu on a phone book screen, and displaying an alarm message regarding unconfirmed advertisement information on the phone book screen in response to the alarm menu being selected.

The alarming may include displaying a sliding dialogue window including an alarm message indicating that there is unconfirmed advertisement message.

The registering may include reading a QR code or a bar code, and detecting contact information of an advertiser from the QR code or the bar code, and adding the detected contact information to the phone book.

The method may further include, in response to a confirmation request signal regarding the advertisement not being input for a predetermined time, deleting the received advertisement information.

A method of providing an advertisement service of a user terminal device according to an exemplary embodiment includes registering contact information of at least one advertiser in a phone book, alarming an issuance of advertisement information of an advertiser registered in the phone book, and in response to a confirmation request regarding the advertisement information being input, receiving the advertisement information issued from the advertiser from a server device, and displaying the received advertisement information.

A method of providing an advertisement service of a user terminal device according to an exemplary embodiment includes displaying an execution screen of an application installed in the user terminal device, in response to intrinsic information being input through the execution screen, transmitting the intrinsic information to a server device, and receiving and displaying advertisement information issued from an advertiser corresponding to the intrinsic information from the server device.

The receiving and displaying advertisement information may include displaying an alarm message regarding advertisement information issued from an advertiser corresponding to the intrinsic information, in response to the alarm message being selected, downloading the advertisement information from the server device, and displaying the downloaded advertisement information, and the application may be at least one of phone book program, calendar program, and gallery program.

The advertisement information may include at least one of photo, image, message, coupon, stamp card, invitation letter, and event card.

A method of managing data of a server device according to an exemplary embodiment includes receiving a contact number of an advertiser who subscribes to a mobile advertisement service, receiving intrinsic information stored in a user terminal device of a subscriber who subscribes to the mobile advertisement service, searching whether the contact number of an advertiser is included in the intrinsic information, and in response to the contact number of an advertiser being included in the intrinsic information, registering information of the subscriber in client information database automatically.

A method of providing an advertisement service of a server device according to an exemplary embodiment includes receiving and storing intrinsic information stored in a user terminal device, in response to an advertiser corresponding to the intrinsic information issuing advertisement information, notifying the issuance of advertisement information to the user terminal device, and in response to a confirmation request regarding the advertisement information being transmitted from the user terminal device, transmitting the advertisement information to the user terminal device.

The intrinsic information may include at least one of phone book of the user terminal device, contact information of an advertiser stored in the phone book, schedule information written in a calendar screen, photo stored in the user terminal device, and metadata of the photo.

A method of providing an advertisement service of a user terminal device according to an exemplary embodiment includes displaying a phone book screen including a contact information search area, in response to a search word being input to the contact information search area, transmitting the search word to a server device, receiving advertisement information corresponding to the search word from among advertisement information registered in database of the server device, searching contact information corresponding to the search word from among contact information stored in the user terminal device, and displaying the searched contact information and the received advertisement information on the phone book screen.

The method may further include, in response to new contact information being stored, transmitting the new contact information to the server device and registering the new contact information in database of the server device.

The received advertisement information may be aligned and displayed on the phone book screen with reference to at least one of a distance from a location of the user terminal device, a number of registrations, a number of calls, and a number of recommendations.

A user terminal device according to an exemplary embodiment includes a storage configured to store an application, a display configured to display an execution screen of the application, a communicator configured to perform communication with a server device, and a controller configured to, in response to intrinsic information being input on the execution screen, transmit the intrinsic information to the server device, and in response to available information corresponding to the intrinsic information being registered in the server device, display an alarm message corresponding to the available information on the execution screen.

The controller, in response to the alarm message being selected, may receive the available information from the server device and store the information in the storage so as that a wallet program shares the available information stored in the storage, and in response to the wallet program being executed, provide a settlement service which reflects the available information by the wallet program.

The application may be at least one of phone book program, calendar program, and gallery program, and intrinsic information includes at least one of phone book of the user terminal device, contact information of an advertiser stored in the phone book, schedule information written in a calendar screen, a photo stored in the user terminal device, and metadata of the photo, and the available information may include at least one of coupon, stamp card, invitation letter, and event card.

A user terminal according to an exemplary embodiment includes a storage configured to contact information, a display configured to display a phone book screen including a contact information search area, a communicator configured to, in response to a search word being input to the contact information search area, transmit the search word to a server device, and receive advertisement information corresponding to the search word from among advertisement information registered in database of the server device, and a controller configured to search contact information corresponding to the search word from among contact information stored in the storage, and display the searched contact information and the received advertisement information, and the controller, in response to new contact information being stored in the storage, transmits the new contact information to the server device and registers the new contact information in database of the server device.

A method of providing an advertisement service of a server device according to an exemplary embodiment includes performing communication with a plurality of user terminal devices, and receiving information stored in each of the plurality of user terminal devices, updating database where advertisement information is stored using the received information, in response to a search word being input on a phone book screen of a user terminal device from among the plurality of user terminal devices, searching advertisement information corresponding to the search word from the database, and transmitting a search result to the user terminal device.

The method may further include arranging the search result with reference to at least one of a distance from a location of the user terminal device, a number of registrations, a number of calls, and a number of recommendations, and configuring the search result with a format in accordance with a phone book screen of the user terminal device.

A searching method of a user terminal device according to an exemplary embodiment includes displaying a phone book screen, in response to a search word is input on the phone book screen, transmitting the search word to a server device, receiving information corresponding to the search word from among information stored in the server device, and displaying the received information on the phone book screen.

A server device according to an exemplary embodiment includes a communication interface configured to perform communication with a shop management system and a user terminal device, shop database configured to record shop information received from the shop management system for each shop, user database configured to record user information received from the user terminal device for each user, and a controller configured to compare shop information recorded in the shop database and user information recorded in the user database to search matched information, and in response to matching user information and shop information being searched, issue a coupon included in the searched shop information to a user terminal device corresponding to the searched user information.

A shop management system according to an exemplary embodiment includes a storage configured to store a coupon, a communicator configured to perform communication with a server device and transmit the coupon to the server device, a settlement unit configured to perform a settlement by communicating with a user terminal device which receives the coupon through the server device using a short range wireless communication method, and a controller configured to, in response to the coupon being used in the settlement process, generate an updated coupon, store the updated coupon in the storage, and transmit the updated coupon to the server device.

In a non-transitory readable medium storing a program to perform a searching method, the searching method includes displaying a phone book screen, in response to a search word being input on the phone book screen, transmitting the search word to a server device, receiving information corresponding to the search word from among information stored in the server device, and displaying the received information on the phone book screen.

In a non-transitory readable medium storing a program to perform a method of providing a shopping service, the shopping service providing method includes displaying advertisement information on an execution screen of an application, in response to advertisement information being selected, displaying a settlement screen including a settlement means by executing a wallet program automatically, and in response to a settlement means being selected on the settlement screen, performing a settlement using the selected settlement means.

In a non-transitory readable medium storing a program to perform a data sharing method, the data sharing method includes displaying an application execution screen including an alarm message received from a server device, in response to the alarm message being selected, downloading available information corresponding to the alarm message from the server device, and registering the downloaded available information in a settlement program.

In a non-transitory readable medium storing a program to perform a settlement method, the settlement method includes receiving available information downloaded from a server device through another application, storing the available information, in response to a shop management system being accessed, searching available information corresponding to the shop management system from among pre-stored available information, and performing a settlement with a settlement system of the shop management system by applying the searched available information.

In a non-transitory readable medium storing a program to perform a settlement method, the settlement method may include registering available information downloaded from a server device by another application, in response to a settlement being initiated, calculating a settlement amount by applying the registered available information, and proceeding with a settlement process regarding the settlement amount.

A user terminal device according to an exemplary embodiment includes a communicator configured to perform communication with a server device, a storage configured to store available information received from the server device, a detector configured to detect a location of the user terminal device, a display configured to display a screen for recommending available information corresponding to the location from among the stored available information, and a controller configured to, in response to at least one available information being selected on the screen, perform an electronic shopping using the selected available information.

The controller may calculate a distance between a location of the user terminal device and a shop which issues the available information for each available information, and recommend a predetermined number of available information in an order of a shortest distance.

The controller may recommend the available information based on popularity from among available information which is issued from a shop within a predetermined distance with reference to a location of the user terminal device.

The available information may be at least one of coupon information and event information, and in response to an event for performing the electronic shopping occurring, the controller may recommend the available information by executing a wallet application and a location-based recommendation application respectively, and in response to at least one available information being selected from among the recommended available information, the controller may calculate a settlement amount using the selected available information.

A user terminal device according to an exemplary embodiment includes a storage configured to store phone book information, a location detector configured to detect a location of a user terminal device, a display configured to display a screen including a location-based recommendation menu, a communicator configured to, in response to the location-based recommendation menu being selected, receive entrepreneur information which corresponds to an entrepreneur located within a predetermined area with respect to a location of the user terminal device, from among entrepreneur information registered in a server device, and a controller configured to add the received entrepreneur information to the phone book information.

The controller may display a phone book screen using the phone book information when a phone book program is executed, and additionally display a new group of the received entrepreneur information in a group menu of the phone book screen.

A user terminal device according to an exemplary embodiment includes a display, a call processor for telephone call, a communicator configured to, in response to an outgoing call being made, transmit outgoing call information to a server device, and receive information issued from a counterpart from the server device, and a controller configured to compose a call standby screen including the information until the outgoing call is connected.

The information may include at least one of advertisement phrase, image, coupon, event guide card, and message to inform on a currently-issued coupon.

A user terminal device according to an exemplary embodiment includes a display, a storage configured to store phone book information, a location detector configured to detect a location of the user terminal device, a communicator configured to transmit a location of the user terminal device to a server device, and a controller configured to, in response to advertisement information issued from an entrepreneur corresponding to the location from among entrepreneurs registered in the phone book information being received from the server device, display the received advertisement information on the display.

A server device according to an exemplary embodiment includes a database configured to store information issued from a pre-registered entrepreneur, a communicator configured to receive location information from a user terminal device, and a controller configured to detect information issued from an entrepreneur registered in a phone book program of the user terminal device, and transmit the detected information to the user terminal device.

A server device according to an exemplary embodiment includes a communicator configured to, in response to an outgoing call being made by a user terminal device, obtain outgoing call information, a database configured to store information issued from a pre-registered entrepreneur, and a controller configured to detect information issued from an entrepreneur corresponding to outgoing call information of the user terminal device and transmit the detected information to the user terminal device.

The information may include at least one of advertisement phrase, image, coupon, event guide card, and message to inform on a currently-issued coupon.

The controller, in response to information regarding the user terminal device which transmits the outgoing call information not being stored, may register a user of the user terminal device in the database as a new customer, and in response to a new customer confirmation request being input from an entrepreneur having the outgoing call information, may transmit information regarding the registered new customer to the entrepreneur.

A service providing method of a server device according to an exemplary embodiment includes, in response to an available information generation request being input from a registered entrepreneur, generating available information regarding the entrepreneur, storing the available information, in response to a predetermined condition being satisfied, transmitting the available information to a user, storing history information regarding the available information, and in response to a request for the history information being input from the entrepreneur, providing the history information to the entrepreneur.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a block diagram illustrating configuration of a network system according to an exemplary embodiment;
FIG. 2 is a block diagram illustrating configuration of a user terminal device according to an exemplary embodiment;
FIG. 3 is a flowchart provided to explain a method of providing an advertisement service according to an exemplary embodiment;
FIGS. 4 to 10 are views provided to explain a method of alarming an advertisement according to various exemplary embodiments;
FIG. 11 is a flowchart provided to explain a method of providing an advertisement service according to another exemplary embodiment;
FIGS. 12 to 16 are views provided to explain a method of providing advertisement information according to various exemplary embodiments;
FIG. 17 is a timing diagram provided to explain a method of providing an advertisement service according to another exemplary embodiment;
FIG. 18 is a view provided to explain a method of generating database of a service device;
FIG. 19 is a flowchart provided to explain a method of storing intrinsic information;
FIG. 20 is a view provided to explain a method of storing intrinsic information using a user terminal device;
FIG. 21 is a flowchart provided to explain a method of providing an advertisement service according to another exemplary embodiment;
FIG. 22 is a view provided to explain the method of providing an advertisement service of FIG. 21;
FIG. 23 is a flowchart provided to explain a method of providing an advertisement service according to another exemplary embodiment;
FIGS. 24 to 26 are views illustrating an example of screen configuration of a user terminal device which provides an advertisement service;
FIG. 27 is a view illustrating another configuration example of a network system;
FIG. 28 is a flowchart provided to explain a method of providing an advertisement service using an advertisement application;
FIGS. 29 to 38 are views illustrating various examples of the execution screen of an advertisement application;
FIG. 39 is a block diagram illustrating an example of configuration of a server device;
FIG. 40 is a flowchart provided to explain a data management method of a server device;
FIG. 41 is a flowchart provided to explain a method of issuing advertisement information using an advertisement providing server;
FIG. 42 is a flowchart provided to explain a method of generating a QR code using an advertisement providing server;
FIGS. 43 to 54 are views illustrating various examples of an advertisement generation screen which is provided by an advertisement providing server;
FIG. 55 is a view illustrating another configuration example of a network system;
FIG. 56 is a view provided to explain configuration and operation of a network system according to another exemplary embodiment;
FIG. 57 is a timing diagram provided to explain a method of providing a shopping service in a network system;
FIG. 58 is a view provided to explain configuration and operation of a network system according to another exemplary embodiment;
FIG. 59 is a view provided to explain a process of receiving available information using an alarm message;
FIG. 60 is a view provided to explain another example of operation of a network system;
FIG. 61 is a view illustrating an example of detailed configuration of a network system;
FIG. 62 is a view illustrating configuration of a settlement system according to an exemplary embodiment;
FIG. 63 is a view illustrating an example of information structure which is managed by a wallet program;
FIG. 64 is a view illustrating an example of information structure which is managed by a PoS system;
FIG. 65 is a flowchart provided to explain a settlement method according to an exemplary embodiment;
FIG. 66 is a view provided to explain another operation of a network system;
FIG. 67 is a block diagram illustrating an example of configuration of a shop management system which is used in a network system;
FIG. 68 is a block diagram illustrating an example of configuration of a server device which is used in a network system;
FIG. 69 is a flowchart provided to explain a method of searching a coupon automatically by a wallet program;
FIG. 70 is a block diagram illustrating configuration of a user terminal device according to an exemplary embodiment;
FIG. 71 is a view illustrating an example of configuration of a program which is used in a user terminal device;
FIG. 72 is a block diagram illustrating configuration of a user terminal device according to another exemplary embodiment;
FIG. 73 is a view illustrating configuration of a service providing system according to another exemplary embodiment;
FIG. 74 is a view illustrating an example of screen for generating a coupon;
FIG. 75 is a view provided to explain a method of providing a service of the service providing system of FIG. 73;
FIG. 76 is a view illustrating an example of a management screen which is provided by a server device 200;
FIG. 77 is a block diagram illustrating configuration of a user terminal device according to another exemplary embodiment;
FIG. 78 is a flowchart provided to explain a method of recommending available information;
FIGS. 79 to 81 are views illustrating examples of various methods of recommending available information;
FIG. 82 is a flowchart provided to explain a method of providing information using phone book information and location information;
FIG. 83 is a flowchart provided to explain a method of receiving entrepreneur information using location information;
FIGS. 84 and 85 are views illustrating an example of a method of receiving and using entrepreneur information;
FIG. 86 is a block diagram illustrating configuration of a user terminal device which provides a service using sender information;
FIG. 87 is a flowchart provided to explain an operation of the user terminal device of FIG. 86;
FIG. 88 is a view provided to explain a method for configuring a call standby screen using information received from a server device;
FIG. 89 is a view illustrating configuration of a network system which provides a service using sender information; and
FIG. 90 is a block diagram illustrating configuration of a server device which is used for a network system.

### DETAILED DESCRIPTION

Hereinafter, an exemplary embodiment will be described in detail with reference to accompanying drawings. In the following description, same reference numerals are used for analogous elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

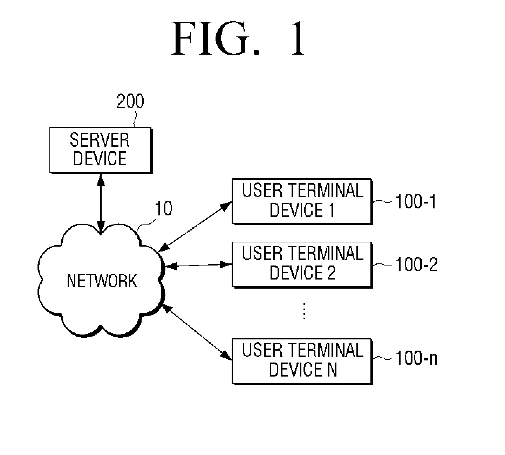

FIG. 1 is a block diagram illustrating configuration of a system according to an exemplary embodiment. According to FIG. 1, the system includes a server device 200 and a plurality of user terminal devices 100-1∼100-n. The server device 200 and the plurality of user terminal devices 100-1∼100-n may perform communication via network 10.

The network 10 may be realized in various forms. For examples, various communication networks such as 3Generation (3G) or 4G mobile communication network, WiFi, Zigbee, IEEE wireless communication network, and cloud network can be used. The user terminal devices 100-1∼100-n may be realized as various types of electronic apparatuses such as mobile phone, wire phone, tablet PC, PDA, PC, MP3 player, TV, etc. The server device 200 may be realized as web server, cloud server, etc. In FIG. 1, only one server device 200 is illustrated for convenience of explanation, but the type and number of server device 200 may vary depending on exemplary embodiments.

The server device 200 may provide various services in association with each of the plurality of user terminal devices 100-1∼100-n. Specifically, the server device 200 may provide an advertisement service for providing various pieces of advertisement information, a contact information providing service, a shopping service for purchasing products, and a service combining the above services. The system in FIG. 1 may be referred to various names such as an advertisement system, a shopping system, and a contact information providing system according to the type of services provided, but will be referred to a network system in this exemplary embodiment for convenience of explanation.

The server 200 may perform communication with each of the user terminal devices 100-1∼100-n, and receive information which is stored in each of the user terminal devices 100-1∼100-n. A server device 3300 updates database using the received information. The database may record various information such as telephone number, title, address information, mail address, homepage address, advertisement phrase, etc., which is stored in each of the user terminal devices 3200-1∼3200-n.

The user terminal devices 100-1∼100-n may be realized as various apparatuses such as mobile devices like mobile phone, tablet PC, laptop PC, PDA, digital diary, electronic book, MP3 player, etc. or non-mobile devices like PC, TV, kiosk, electronic album, etc. In this specification, they are referred to as a user terminal device.

The user terminal devices 100-1∼100-n may be categorized in various manners according to their characteristics. For example, the user terminal devices 100-1∼100-n may be categorized as a device for common use for general users, a device for business purposes, which is used in various shops, a device exclusively for an advertiser who provides advertisement contents, etc.

Depending on exemplary embodiments, a network system may include one or more user terminal devices from among a device for common use, a device for business purposes, and an exclusive device. Accordingly, the network system may provide various services such as various advertisement services, a search service, a settlement service, a shopping service, etc. In particular, the server device 200 may provide the above-described services in association with an application installed in each of the user terminal devices 100-1∼100-n. Hereinafter, various exemplary embodiments will be described in detail.

### <Exemplary embodiment of providing an advertisement service according to push method>

According to the first exemplary embodiment, the server device 200 may provide various information in association with an application installed in each of the user terminal devices 100-1∼100-n.

According to the exemplary embodiment, the information that each of the user terminal devices 100-1∼100-n receives include various information such as advertisement message, alarm message, coupon, invitation letter, news, stamp card, etc. Among this information, the alarm message refers to a message for informing whether an advertisement is received or updated, and the advertisement message refers to a message including image, text, and so on, which is intended for advertisement, from among messages transmitted via mobile network. In this exemplary embodiment, this information is referred to as advertisement information for convenience of explanation.

The user terminal device 100 may provide an advertisement service by synchronizing various applications with the server device 200. Specifically, data used in a phone book application, a calendar application, a gallery program, and so on may be synchronized with the server device 200.

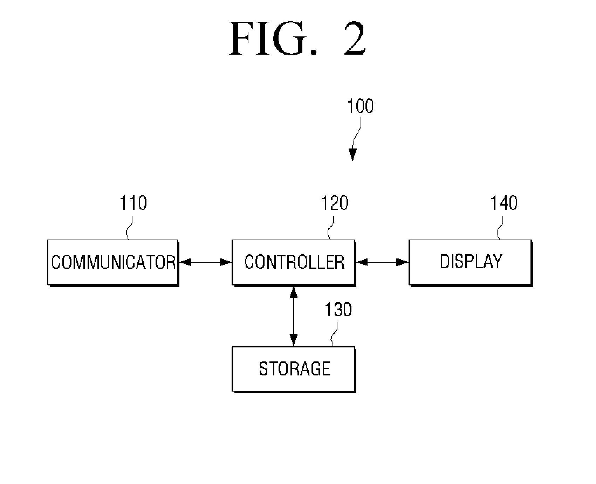

FIG. 2 is a block diagram illustrating configuration of the user terminal device 100 according to an exemplary embodiment. The user terminal device 100 of FIG. 2 may be one of the user terminal devices 100-1∼100-n which constitute the network system of FIG. 1 .According to FIG. 2, the user terminal device 100 includes a communicator 110, a controller 120, a storage 130, and a display 140.

The communicator 110 performs communication with various types of external apparatuses including the server device 200. The communicator 110 may perform communication according to various communication methods such as 3G, 4G, WiFi, Zigbee, IEEE, etc.

The storage 130 may store various programs such as an Operating System (O/S), firmware, an application, and so on to derive the user terminal device 100, and data and contents necessary to execute a program. For example, the storage 130 may store programs such as a phone book application, a calendar application, a gallery application, etc. The phone book application refers to an application which manages various intrinsic information such as name, telephone number, photo, address, e-mail, messenger address, SNS address, and so on, which is input from a user or received from an external apparatus, and when such intrinsic information is selected, associates the selected intrinsic information with the corresponding function. The calendar application refers to an application which provides a calendar where dates and days are divided, and manages various schedules that a user writes down in the calendar. The gallery application refers to an application which provides a moving image or a still image that a user photographs or downloads so that the images can be viewed according to a user manipulation.

The controller 120 configures various screens using programs and data stored in the storage 130 according to a user's selection. Specifically, the controller 120 may configure various application execution screens, home screen, icon screen, content play screen, etc.

The display 140 displays a screen configured by the controller 120.

As described above, the controller 120 may perform synchronization by transmitting data which is used in a phone book application, a calendar application, a gallery application, and so on to external apparatuses such as the server device 200.

In the case of the phone book application, the controller 120 may synchronize the server device 200 and phone book information when a predetermined time period arrives, or whenever the phone book information is changed (deleted, added, or modified).

For example, if various intrinsic information such as name, telephone number, address, home page address, e-mail address, ID, etc. of at least one advertiser (that is, various shops) is registered, the controller 120 may transmit information registered in the phone book to the server device 200 through the communicator 110.

The intrinsic information may be registered manually through a phone book menu of the user terminal device 100, through a contact information add menu after selecting the log history of a specific advertiser in a call or message exchange log history, or through a contact information add menu included in a previously-received mobile advertisement message.

According to an exemplary embodiment, the controller 120 may transmit information regarding only an advertiser registered in the phone book to the server device 200, or may transmit the entire phone book to the server device 200. Alternatively, the controller 120 may transmit only information included in a specific category to the server device 200 based on categories for distinguishing various information in the phone book. Subsequently, the user terminal device 100 may receive advertisement information issued by an advertiser registered in the phone book and provide the information to a user.

Meanwhile, the user terminal device 100 may provide the server device 200 with information input by other applications than the phone book. In this case, the server device 200 may parse information provided by each user terminal device, and determine a matching advertiser, that is, a matching shop.

When a calendar program is used, a user may execute the calendar program, and input his or her schedule which includes not only date and time but also place. For example, if the schedule of "January 25, 2pm, ABCD café - business meeting" is input, the controller 120 transmits the corresponding schedule information to the server device 200. The server device may include an intelligent server. The intelligent server selects an advertiser corresponding to the ABCD café from among the pre-stored information regarding advertisers, and determines whether there is any advertisement information such as coupon, invitation letter, event, etc. issued from the corresponding advertiser (that is, ABCD cafe). If it is determined that there is such a coupon, the intelligent server transmits an alarm message for informing the user terminal device 100 which transmits the corresponding schedule information of the existence of the coupon. The alarm message can be displayed in various ways. For example, the alarm message may be displayed in the execution screen of the calendar program. Accordingly, if a user selects the alarm message, the user terminal device 100 may download the coupon from the server device 200.

Alternatively, the user terminal device 100 may be interlocked with the server device 200 using a gallery program. In other words, when a photo is taken, the user terminal device 100 stores the photo and its metadata in the storage 130. The gallery program manages such a photo and metadata. The metadata may include information regarding where and when the photo was taken, and an AP address which was connected at the time when the photo was taken. When a photo is taken, the controller 120 may transmit its metadata to the server device 200. The intelligent server of the server device 200 may select information regarding advertisers at locations corresponding to the place, AP address, etc. included in the corresponding metadata from among the pre-stored information regarding advertisers. In this case, if it is difficult to make a selection, a plurality of shops within a predetermined distance may be selected. The server device 200 transmits an alarm message regarding the selected shops to the user terminal device 100. The controller 120 may display the received alarm message on the execution screen of the gallery program. If a user selects the alarm message, the controller 120 may provide advertisement information of the shop corresponding to the selected alarm message on the execution screen of the gallery program.

In addition, the user terminal device 100 may provide the server device 200 with data input in the process of executing various applications, and receive selective advertisement information from the server device 200.

Meanwhile, the advertisement information may be provided in various ways.

For example, when at least one advertisement information issued from an advertiser registered in the phone book is received from the server device 200 through the communicator 110, the controller 120 may inform a user of the reception of the advertisement information. In this case, the controller 120 may inform the reception of the advertisement information based on the phone book.

Specifically, the controller 120 may display a pop-up window to inform the reception of the advertisement information or display a sliding dialogue window which is displayed as it is slid from one side of the display 140 to inside the display 140. Alternatively, an additional symbol may be displayed or an alarm sound may be output with respect to an icon corresponding to the phone book application in order to inform the reception of the advertisement information.

When a confirmation request signal regarding advertisement information is input, the controller 120 displays the received advertisement information on the display 140. The confirmation request signal may be input by selecting a pop-up window, a sliding dialogue window, icon, etc., or by selecting a separate confirmation button. The method of notifying the reception of advertisement information and the method of inputting a confirmation request signal thereof will be described in detail later.

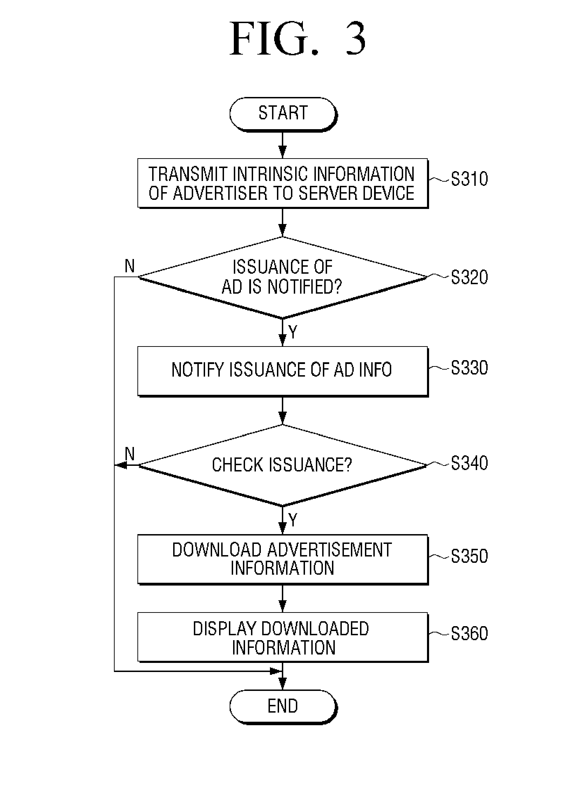

FIG. 3 is a flowchart provided to explain an example of a method of providing an advertisement service in a user terminal device.

According to FIG. 3, when intrinsic information of an advertiser is registered in a phone book, a user terminal device transmits the intrinsic information of the registered advertiser to the server device 200 (S310). The server device 200 records and manages the transmitted intrinsic information of the user in database. When information regarding an advertiser which is under management is newly registered, the server device 200 transmits the fact that new information is registered to the user terminal device 100 which has the information regarding the advertiser.

The user terminal device 100 may notify a user of the above fact using a simple method (S330). The method of notifying a user will be described later in detail with reference to the accompanying drawing.

A user may input a confirmation request to check the notified advertisement information (S340). The user terminal device 100 downloads the advertisement information according to the confirmation request (S350), and displays the downloaded advertisement information on the screen (S360).

If a user's confirmation request is not input for a predetermined time, the user terminal device 100 deletes an alarm regarding new information. Hereinafter, the method of alarming new information will be described in detail.

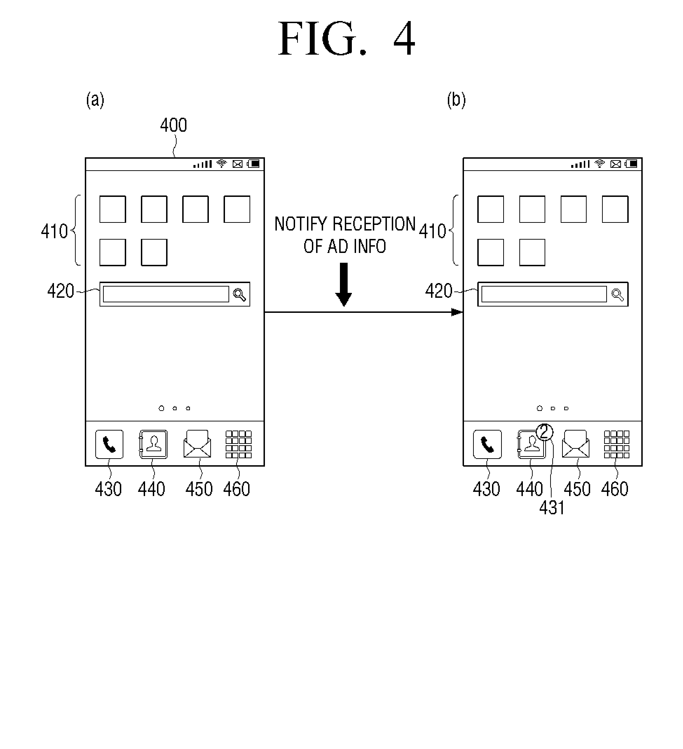

FIG. 4 is a view provided to explain a method of notifying whether there is new advertisement information by displaying an add symbol in an icon. The names of various business enterprises or contact information in the specification and the drawings below are provided only for convenience of explanation and do not have particular meanings.

According to FIG. 4, the user terminal device 100 may display a home screen 400. The home screen 400 refers to an initial screen or a main screen of the user terminal device 100.

FIG. 4(a) illustrates an example of the home screen 400. The home screen 400 may display an icon 410, a widget screen 420, fixed menus 430∼460, etc. of various applications or folders. The fixed menus 430∼460 may display a telephone icon 430, a phone book icon 440, a message icon 450, an application confirmation icon 460, etc., but are not limited thereto.

When the application confirmation icon 460 is selected, the home screen 400 may change the screen to an icon alignment screen where icons regarding various applications and folders are aligned. In the icon alignment screen, the fixed menus 430∼460 may be displayed at a fixed location, but the application confirmation icon 460 may be changed to a home screen change icon and displayed.

When it is notified that new advertisement information is registered from the server device 200, the controller 120 displays an add symbol on one side of the icon 440 corresponding to the phone book application as illustrated in FIG. 4(b). FIG. 4(b) illustrates a case where the number of new information is used as an add symbol. However, the add symbol is not limited to a number, and may be realized as a simple text or image. A user may select the corresponding icon 440 with reference to the add symbol. When the icon 440 is selected, the controller 120 executes a program corresponding to the icon 440, and display the execution screen on the display 140. As illustrated in FIG. 4, when the icon 440 of the phone book application is selected, the controller 120 displays a phone book screen where an alarm message regarding new information may be displayed. When the alarm message on the phone book screen is selected, the controller 120 downloads new information corresponding to the selected alarm message from the server device 200 and displays the information.

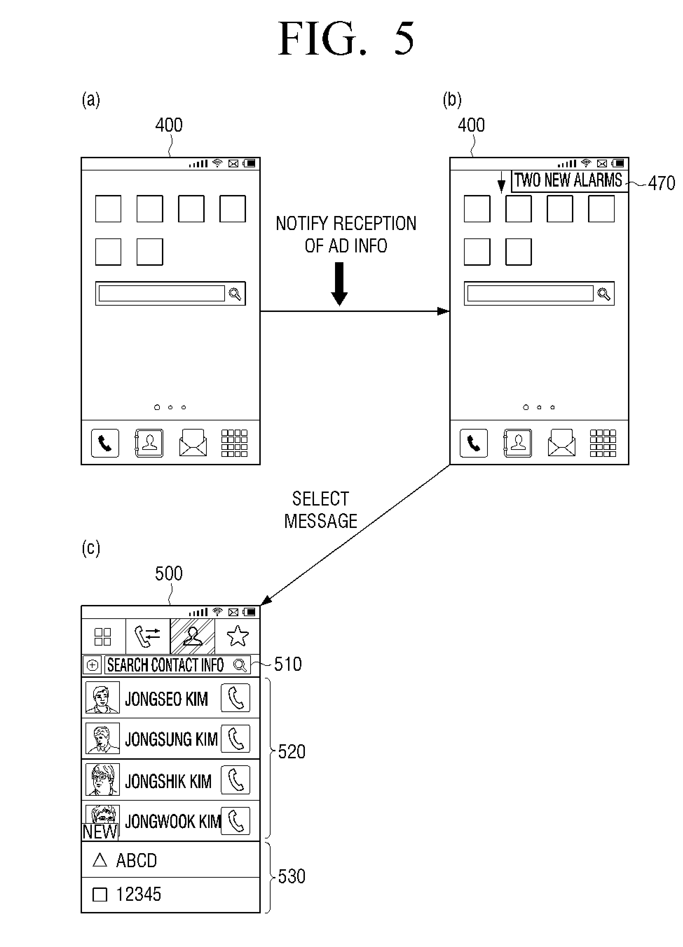

FIG. 5 illustrates another example of a method of alarming new information. As illustrated in FIG. 5(a), when it is notified that new information is registered while the home screen 400 is displayed, as illustrated in FIG. 5(b), the controller 120 displays an alarm message for notifying the registration of new information in the form of sliding dialogue screen 470. The sliding dialogue screen 470 refers to a screen which is expanded gradually as if it is slide from one side of the screen to inside the screen. The sliding dialogue screen 470 may display a simple text, the number of new information, an image, and so on. When a user selects the sliding dialogue screen 470, the controller 120 displays the execution screen of an application in which the new application is received as illustrated in FIG. 5(c). FIG. 5(c) illustrates that a phone book screen 500 is displayed. According to FIG. 5(c), the phone book screen 500 displays a search word input area 510, contact information 520, and an alarm message 530 regarding new information. When one of the alarm message 530 is selected, the controller 120 downloads new information corresponding to the selected alarm message from the server device 200, and displays the information.

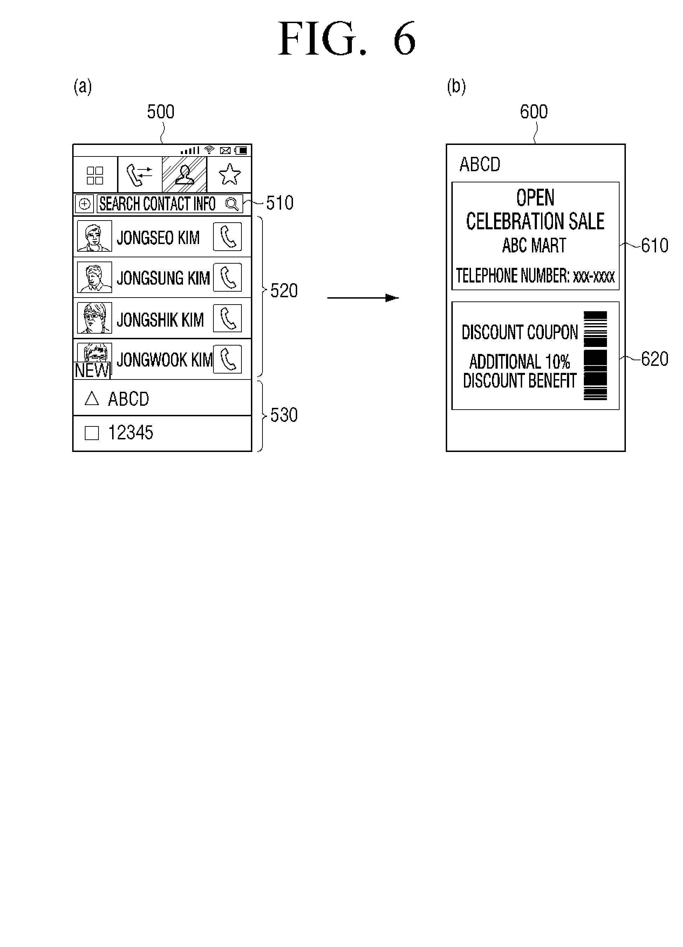

FIG. 6 is a view provided to explain an example of a method of displaying new information by selecting an alarm message. When one alarm message is selected while the phone book screen 500 including the alarm message 530 is displayed as illustrated in FIG. 6(a), the controller 120 receives information corresponding to the selected alarm message from the server device 200, and displays the information. FIG. 6(b) illustrates that an advertisement information screen 600 including an advertisement phrase 610 and a coupon 620 is displayed. If a user selects the coupon 620, the controller 120 stores available information corresponding to the selected coupon 620 in the storage 130, and process the coupon 620 in a settlement program such as a wallet application, which will be described later in another exemplary embodiment.

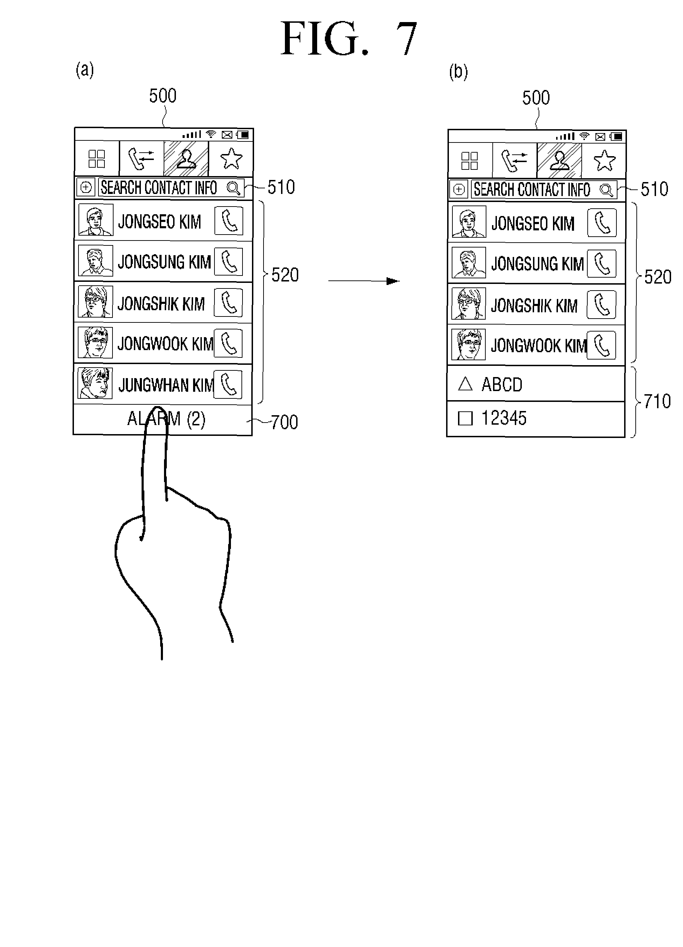

FIG. 7 is a view provided to explain a method of confirming an alarm message using an alarm menu. FIG. 7(a) illustrates that the phone book screen 500 including an alarm menu 700 is displayed.

The alarm menu 700 refers to a menu that a user may select to check a mobile advertisement message. As illustrated in FIG. 7(a), the alarm menu 700 may be displayed in the form of bar, but its shape and location are not limited thereto. The alarm menu 700 may also display the number of unchecked new information. FIG. 7(a) illustrates that '2' is displayed to indicate that there are 2 new information. If there is no unchecked message, the alarm menu 700 may not be displayed, or the number of messages is displayed as '0'.

The alarm menu 700 may be realized as a menu which is generated in a phone book list of a phone book program, or may be realized as a graphic object which is generated separately from the phone book program. In other words, the controller 120 may render the phone book screen which is generated according to the execution of the phone book program and the alarm menu 700 in a different graphic layer. Accordingly, the alarm menu 700 may be displayed in an overlapping manner without changing the layout of the phone book screen 500.

When the alarm menu 700 is selected, the controller 120 may add the received alarm message 710 in the phone book screen 500 as illustrated in FIG. 7(b). Compared with the example of FIG. 6, an alarm message is not displayed in the phone book screen 500 immediately in FIG. 7, and instead, the alarm menu 700 may be provided first and then, an alarm message may be displayed when the alarm menu is selected.

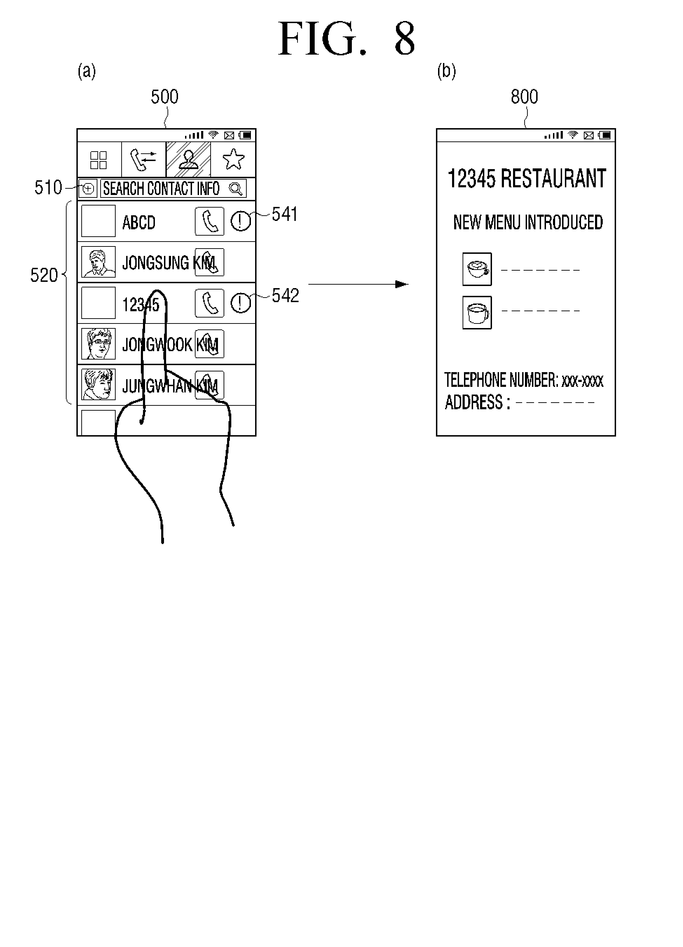

FIG. 8 is a view provided to explain another exemplary embodiment of a method of displaying new information by selecting an alarm message. According to FIG. 8(a), an alarm message regarding new information may be displayed in the phone screen 500 along with other information in a phone book list 520. In other words, as new information corresponds to pre-registered contact information (for example, contact information of an advertiser), the corresponding contact information may be displayed distinctively in the phone book list 520 so as to notify the new information to a user. FIG. 8 illustrates a case where add symbols 541, 542 such as an exclamation mark (!) is used to inform a user of the reception of new information, but the phone book screen is not limited thereto. For example, the reception of new information may be notified by displaying a contact information room corresponding to new information larger than other rooms, or by displaying a highlight.

When contact information corresponding to new information is selected, the controller 120 receives the corresponding new information from the server device 200, and display the information as illustrated in FIG. 8(b). FIG. 8(b) illustrates that an advertisement information screen 800 including various advertisement phrases is displayed.

As described above, various information received from advertisers registered in the phone book may be provided in various forms by a phone book application. Such information may be provided not only by a phone book application but also by a calendar program or a gallery program.

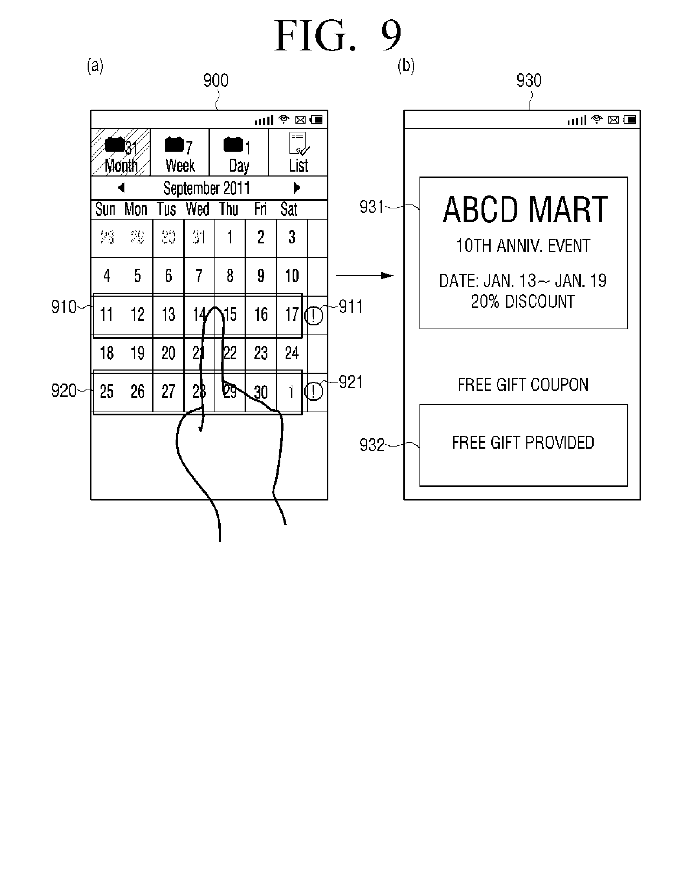

FIG. 9 is a view provided to explain a method of providing new information using a calendar program. FIG. 9(a) illustrates the execution screen of a calendar program, that is, a calendar screen. According to FIG. 9(a), the calendar screen 900 displays year, month, date, and day. If an advertiser registered in the phone book registers information such as an invitation which is valid within a certain time period in the server device 200, the server device 200 may transmit an alarm message to the user terminal device having the content information of the corresponding advertiser. The calendar program may display a specific date distinctively on the calendar screen 900 using the date information of the alarm message. FIG. 9(a) illustrates that boxes 910, 920 and add symbols 911, 921 are displayed in order to display a specific date distinctively from other dates. In this state, if a user selects the box 910 or the add symbol 911, the controller 120 downloads information regarding the corresponding date from the server device 200, and displays an alarm screen 930 based on the information. FIG. 9(b) illustrates an example of the alarm screen 930. The alarm screen 930 may display various phrases 931, 932 for advertisement.

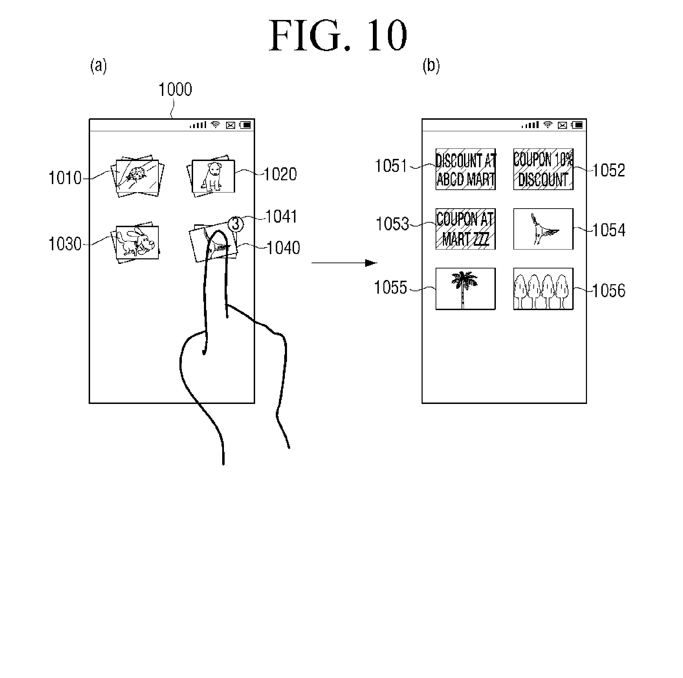

FIG. 10 is a view provided to explain a method of providing new information using a gallery program. FIG. 10(a) illustrates a gallery screen 1000 which is displayed when an icon corresponding to a gallery program is selected. The gallery screen 1000 may display folders 1010, 1020, 1030, 1040 including various moving image contents and still image contents. In FIG. 10(a), each of the folders 1010, 1020, 1030, 1040 are displayed as a plurality of thumbnail images being overlapped with each other, but each folder 1010, 1020, 1030, 1040 may be displayed as a folder image. An add symbol 1041 may be added to the folder 1040 which includes new information from among folders 1010, 1020, 1030, 1040. When the folder 1040 where the add symbol 1041 is added is selected, thumbnail images regarding the images in the selected folder 1041 are displayed in the display 140.

FIG. 10(b) illustrates that a plurality of thumbnail images 1051∼1056 are displayed. According to FIG. 10(b), the plurality of thumbnail images 1051∼1056 include images 1051, 1052, 1053 corresponding to new information. Specifically, a shop photo, an advertisement image, a coupon image, etc. may be displayed. An image representing new information may be highlighted so as to be distinguished from other images 1054, 1055, 1056. If a photo is registered by an advertiser, the server device 200 notifies the registration of the photo to user terminal devices having the contact information of the corresponding advertiser. The user terminal device 100 which receives the notification may inform the registration of the photo using a gallery program as illustrated in FIG. 10(a), and if a user executes the gallery program or inputs a request for confirmation of the new photo, may download and display the corresponding photo as illustrated in FIG. 10(b).

In the above exemplary embodiment, a server device notifies the issuance of information by an advertiser with respect to a user confirmation device having the intrinsic information of the user, and when a user confirmation request is received, the issued information is transmitted. However, the information may be received prior to the notification.

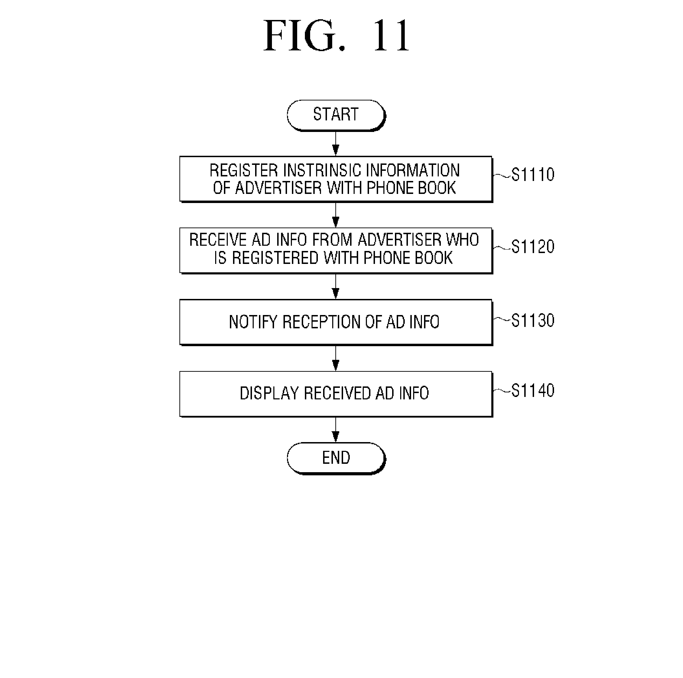

FIG. 11 is a flowchart provided to explain another example of a method of providing an advertisement service of a user terminal device.

Referring to FIG. 11, if various intrinsic information such as contact information, name, address, ID, homepage address, email address, nickname, company name, etc. of an advertiser is registered in a phone book (S1110), the controller 120 of the user terminal device 100 transmits the intrinsic information or the phone book to the server device 200. The method of registering the intrinsic information in the phone book may be realized in various ways. For example, a user may select a phone book menu displayed on the screen of the user terminal device 100, and enter various intrinsic information regarding an advertiser manually. The controller 120 registers the entered intrinsic information in the phone book. Alternatively, a user may select the log history of a specific advertiser in the message exchange log history and select a contact information add menu. In this case, the controller 120 may register the intrinsic information of the selected advertiser in the phone book. Alternatively, the controller 120 may parse a message broadcast from the server device 100, and register intrinsic information such as contact information, company name, homepage address, email address, etc. included in the corresponding message in the phone book automatically.

If new advertisement information is issued from an advertiser corresponding to the transmitted intrinsic information, the server device 200 transmits the advertisement information to the user terminal device 100.

The user terminal device receives the advertisement information transmitted from the server device 200 (S1120). If the advertisement information includes contact information, a phone book application may be received, if the advertisement information includes schedule information, a calendar application may be received, and if the advertisement information includes a photo or a moving image, a gallery application may be received.

The controller 120 may inform the reception of advertisement information (S1130) using various methods such as methods described in FIGS. 4 to 10 or a method combining these methods. In addition, the controller may inform the reception of advertisement information by outputting sound effects using a speaker or by outputting a vibration signal through a vibration generator (not shown).

If a user inputs a request for confirmation regarding the received advertisement information, the controller 120 may display the received advertisement information on the screen (S1140). The controller 120 may display the advertisement information on the execution screen of the received program. For example, if a phone book application is executed, the advertisement information may be displayed on the phone book screen.

Accordingly, the user may receive various advertisement information issued by an advertiser registered in the phone book. Hereinafter, the method of displaying various information according to the first and second exemplary embodiments will be described in detail.

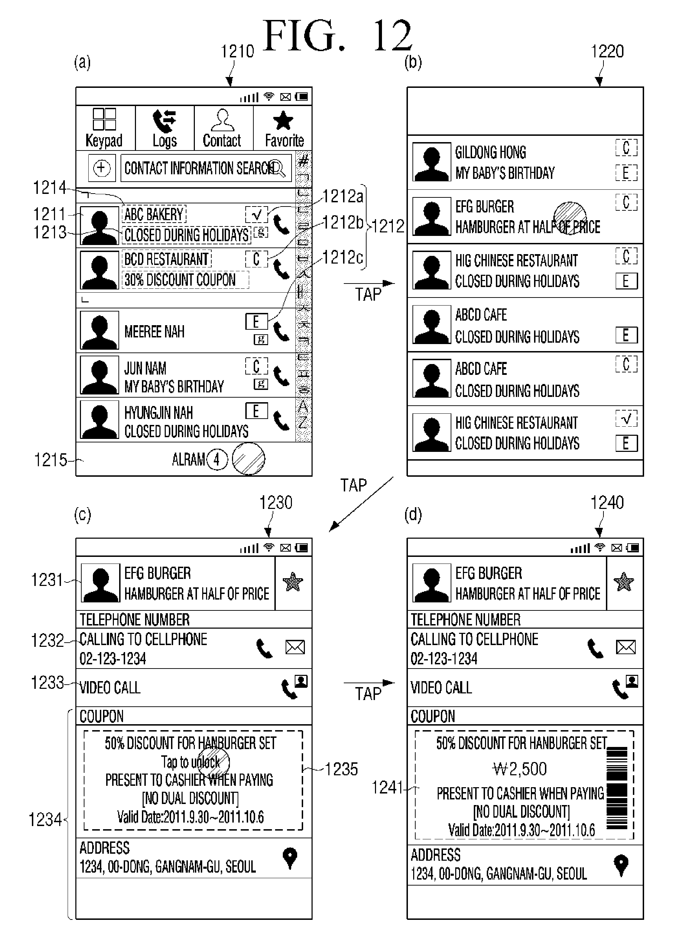

FIG. 12 is a view provided to explain a method of providing various advertisement information using a phone book application. If a user selects a phone book icon, the controller 120 display a phone book screen 1210 as illustrated in FIG. 12(a). The phone screen 1210 displays a plurality of phone book items. One phone book item may display a representative image 1211, an icon 1212, an alarm phrase 1213, a name 1214, etc. The icon 1212 may be represented as a symbol or a character indicating the type of information displayed on the corresponding phone book item. Specifically, the icon 1212 may be represented in various forms such as coupon icons 1212a, 1212b indicating that the corresponding phone book item includes a coupon, an invitation icon 1212c indicating that the corresponding phone book item includes an invitation letter, etc. The shape of the coupon icons 1212a, 1212b may vary according to whether it is the icon 1212a of which downloading is completed, or whether they are icons 1212a, 1212b of which downloading is not completed. In FIG. 12(a), only the coupon icons 1212a, 1212b and the invitation icon 1212c are illustrated. However, various icons such as an icon indicating that a stamp card is included and an icon indicating that a photo is included may be further used. Each icon 1212 may be displayed differently in terms of its color and size so that it is visually distinctive according to the type of phone book item. In addition, each item of the phone book list may include a plurality of icons as illustrated in FIG. 12(b).

The alarm phrase 1213 may be displayed at the lower side of the name 1214 in each phone book item. The alarm phrase 1213 may be displayed as various phrases that a user of the user terminal device 100 inputs at the time of registering the phone book, various advertisement phrases registered by an advertiser, etc.

In addition, the representative image 1211 may also be displayed as a photo which a user inputs at the time of registering the phone book, an advertisement image received from an advertiser, a shop photo, etc.

The phone book screen 1210 of FIG. 12(a) displays not only a phone book item but also a search word input area 1216, an alarm menu 1215, etc. If a user selects the alarm menu 1215, the controller 120 displays a screen 1220 including various advertisement information as illustrated in FIG. 12(b). The screen 1220 may be displayed in various ways according to the characteristics of the alarm menu 1215. For example, if the alarm menu 1215 is a menu included in the phone book screen generated by a phone book program, the controller 120 may display the screen where advertisement information is aligned immediately. On the other hand, if the alarm menu 1215 is a Graphic User Interface (GUI) which is generated separately from the phone book program and overlapped on the phone book screen 1210, the controller 120 may scroll the alarm menu 1220 displayed on the lower end of the screen in an upper end direction while displaying the screen 1220 including various advertisement information gradually.

The converted screen 1220 may display information which has been displayed in the existing phone book screen along with unchecked new advertisement information, or may display unchecked advertisement information preferentially. If information which has been displayed in the existing phone book screen is displayed along with unchecked new advertisement information, the controller 120 may change the background color, size, font size, font color, font type of each item or add a highlight effect so that the unchecked advertisement information and the existing intrinsic information is distinguished from each other visually. The user may check detained information by selecting a specific item in the screen as illustrated in FIG. 12(b).

For example, if an EFG burger item is selected as illustrated in FIG. 12(b), the controller 120 outputs a detailed information screen 1230 regarding the corresponding item as illustrated in FIG. 12(c). The detailed information screen refers to a screen where various detailed information regarding a selected item is displayed.

According to FIG. 12(c), the detailed information screen 1230 may include an indicator area 1231 indicating a selected item, a contact information display area displaying contact information corresponding to the selected item, a video call menu 1233, an alarm message display area 1234 displaying advertisement information received from an advertiser, etc. The alarm message display area 1234 may display an alarm message regarding a coupon, an invitation letter, a stamp card, etc.

FIG. 12(c) illustrates that an alarm message is displayed as a coupon image 1235. The coupon image does not represent a real coupon, and it means that a coupon is downloadable. In this specification, a message which is received before a coupon, an invitation letter, or a stamp card is downloaded is defined as an alarm message, and a coupon, an invitation letter, or stamp card which is downloaded and thus, can be used is defined as available information for convenience of explanation. As illustrated in FIG. 12(c), the coupon image 1235 included in the alarm message may display a phrase (tap to unlock) indicating that the corresponding coupon is not yet downloaded.

If a coupon image which is not yet downloaded (hereinafter, referred to as a first coupon image, 1235) is touched (for example, tapped), the controller 120 transmits a download request signal of the corresponding coupon to the server device 200 through the communicator 110.

Accordingly, the controller downloads the corresponding coupon from the server device 200. When the downloading is completed, as illustrated in FIG. 12(d), the controller 120 changes the first coupon image 1235 into a second coupon image 1241. The second coupon image 1241 belongs to available information. In the second coupon 1241, the phrase indicating that it is before downloading is deleted, and a barcode or various discount information for real use of the coupon may be displayed.

FIG. 12 illustrates a case where advertisement information received by a phone book program includes a coupon. However, the advertise information may include not only a coupon but also other various information such as an invitation letter, a photo, etc.

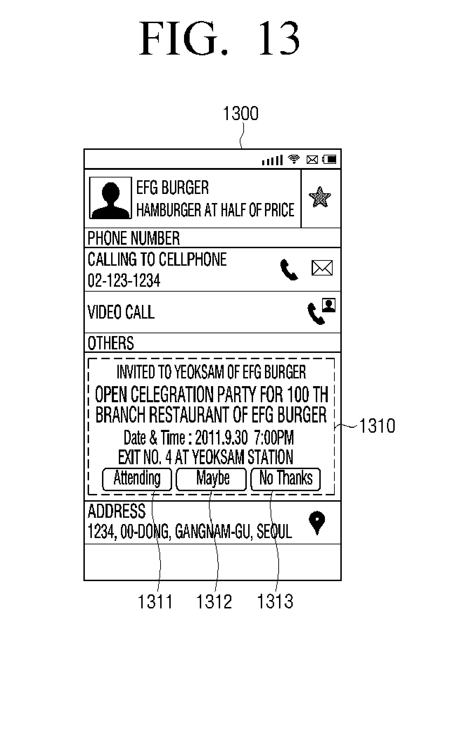

FIGS. 13 to 15 illustrate various examples of a method of displaying a screen when advertisement information including an invitation is received.

FIG. 13 illustrates that advertisement information including an invitation is received. When advertisement information including an invitation from an advertiser registered in the phone book of a specific user terminal device, an advertiser corresponding to a schedule input to a calendar program, an advertiser corresponding to a photo stored in a gallery program, etc. is received, the server device 200 transmits an alarm message corresponding to the advertisement information to a user terminal device.

The controller 120 may inform the issuance of new information using the alarm menu 1215 on the phone screen as illustrated in FIG. 12. In this state, if a confirmation request regarding the corresponding information is input, the controller 120 may display an invitation image (hereinafter, referred to as a first invitation letter, 1310) on a phone book screen 1300 as illustrated in FIG. 13. The first invitation image 1310 is an alarm message to inform that the invitation is downloadable. The first invitation image 1310 may include menus such as attend 1311, postpone 1312, not attend 1313, etc. along with various phrases to inform the event for invitation, schedule, place, etc.

When one of the menus 1311, 1312, 1313, etc. is selected, the controller 120 changes the first invitation image according to the selected menu.

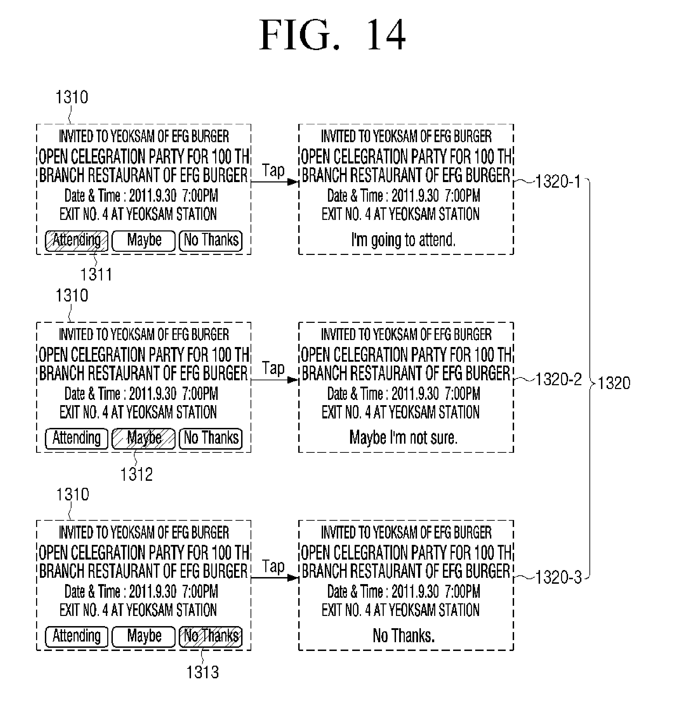

FIG. 14 is a view provided to explain a method of changing an invitation according to the selection of menu. If one of the menus 1311, 1312, 1313 of the first invitation image 1310 is selected, the controller 120 receives available information from the server device 200 in accordance with the selected menu, and changes the first invitation image 1310 to a second invitation image. The second invitation image may be represented differently according to the type of the selected menu.

FIG. 14(a) illustrates a case where the 'attend menu 1311' is selected in the first invitation image 1310. In this case, the controller 120 changes the first invitation image 1310 to the second invitation image 1320-1 including the phrase of 'I'm going to attend', and displays the second invitation image 1320-1.

FIG. 14(b) illustrates a case where the 'postpone menu 1312' is selected in the first invitation image 1310. In this case, the controller 120 changes the first invitation image 1310 to the second invitation image 1320-1 including the phrase of 'Maybe, I'm not sure', and displays the second invitation image 1320-1.

FIG. 14(c) illustrates a case where the 'not attend 1313' is selected in the first invitation image 1310. In this case, the controller 120 changes the first invitation image 1310 to the second invitation image 1320-1 including the phrase of 'No, thanks', and displays the second invitation image 1320-1.

If the 'attend 1311' or the 'postpone 1312' is selected, the controller 120 may register schedule information included in the invitation in a schedule management program, that is, a calendar program. Specifically, the controller 120 may extract schedule information from metadata of the invitation letter, and register schedule in the calendar program based on the extracted schedule information.

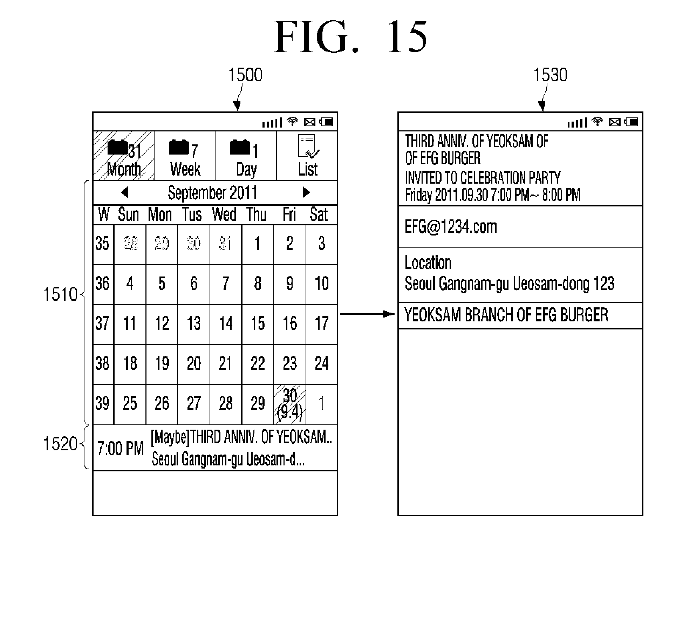

FIG. 15 illustrates an example of an execution screen of a calendar program. According to FIG. 15, an execution screen 1500 of a calendar program includes a calendar 1510 and a schedule information display area 1520. The controller 120 may highlight a corresponding date (September 30) in the calendar 1510 to indicate that there is a schedule on the date. When the corresponding date (for example, September 30) is selected (tapped) on the date calendar 1510, the controller 120 highlights the corresponding date, and displays brief information of the schedule registered on the highlighted date in the schedule information display area 1520.

If the corresponding date (September 30) is selected (for example, long-touched) in the calendar 1510, or the schedule information display area 1520 is selected (for example, tapped), the controller 120 displays a detailed information screen 1530 regarding the selected schedule. In this case, if there is a coupon issued by a corresponding advertiser, the controller 120 may download and display the coupon on the detailed information screen 1530.

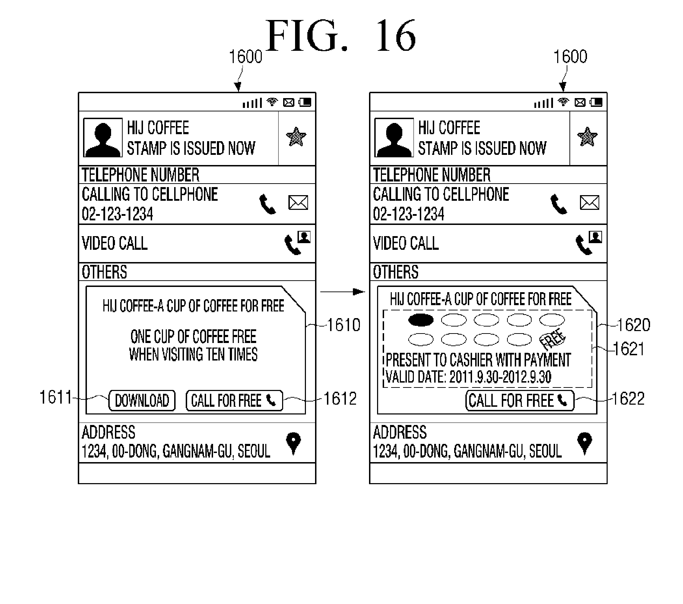

FIG. 16 is a view provided to explain a method of issuing a stamp card using a phone book screen. According to FIG. 16, the controller 120 may display a phone book screen 1600 including an alarm message regarding a stamp card. The alarm message 1610 may be represented as a stamp card image including a stamp card name, stamp card information, a download menu 1611, a free call menu 1612, etc.

If the download menu 1611 is selected, the controller 120 changes the first stamp card image 1610 to a second stamp card image 1620 and displays the image. The second stamp card image 1620 may include a stamp area 1621 for displaying the number of use and the number of available use, a free call menu 1622, a method of use, an expiration period, etc.

When selected by a user, the free call menus 1612, 1622 are to request for making a call directly to a corresponding shop, and imposing the telephone cost on the shop. If not provided by an advertiser, the free call menus 1612, 1622 may be displayed to be in an inactivated state or may not be displayed at all.

The stamp area 1621 consists of predetermined numbers of stamps (for example, 10), and its color changes whenever the branch or affiliate where a card is issued is used or according to an accumulated amount of money. If payment is made at an off-line shop using the user terminal device 100 according to a short range wireless communication (RFID, NFC, etc.) or settlement information is received through a text message, the controller 120 may additionally display a stamp in the stamp area 1621 of the corresponding stamp card image one by one. Specifically, settlement information is received, the controller 120 may extract contact information of a businessman (or an advertiser) from the settlement information, and add a stamp of the stamp card image which is interlocked with the extracted contact information of a businessman (or an advertiser). In this case, the businessman (or the advertiser) may include information regarding the number of stamps at the time of making settlement in the settlement information. In other words, if a customer orders a plurality of stamps, information to add a plurality of stamps may be included in the settlement information.

As described above, various advertisement services may be provided using basic programs such as a phone book application, a calendar application, a gallery application, etc. without a separate application program to provide an advertisement service.

In the above exemplary embodiment, an exemplary embodiment where the user terminal device 100 provides an advertisement service according to a push method is described, but an advertisement service can be provided according to a search method.

### <An example of providing an advertisement service according to a search method>

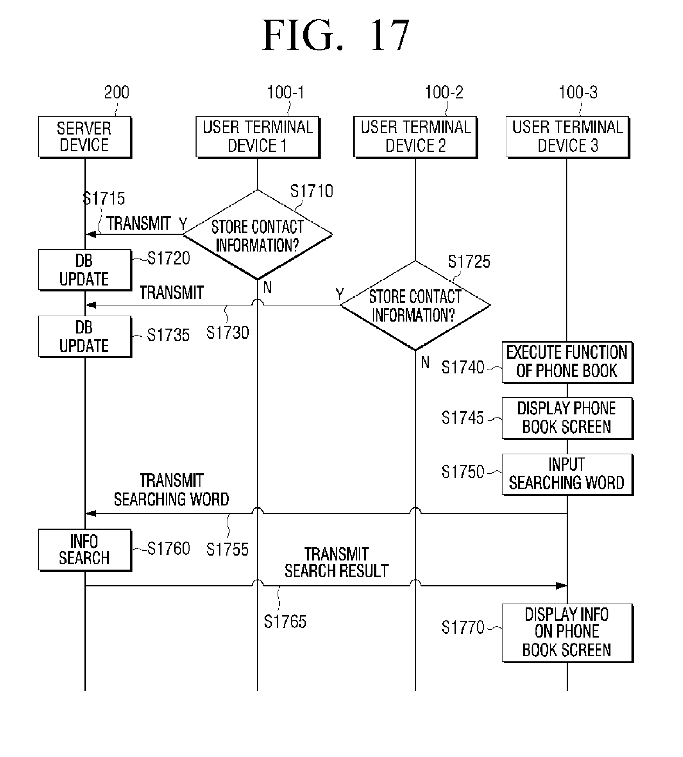

FIG. 17 is a flowchart provided to explain a service providing method which provides an advertisement service according to another exemplary embodiment. For convenience of explanation, FIG. 17 illustrates an operation of a network system consisting of three user terminal devices and a server device.

According to FIG. 17, the server device 200 registers information provided from each of the user terminal devices 100-1∼100-n. As described in the above exemplary embodiment, each user terminal device may transmit data which is input through various applications such as a phone book application, a calendar application, a gallery application, etc. to the server device 200. FIG. 17 illustrates an example where contact information input through a phone book program is provided to the server device 200.

Specifically, if contact information is stored in the user terminal device 1 (100-1) (S1710), the user terminal device 100-1 transmits the stored contact information to the server device 200 (S1715). The server device 200 updates database (DB) using the transmitted contact information (S1720). Even in the case where contact information is stored in the user terminal device 2 (100-2) (S1725) and the information is transmitted (S1730), the server device 200 updates database using the transmitted information (S1735). In other words, the server device 200 may collect information stored by a phone book function in the plurality of user terminal devices 100-1∼100-n and manage the information integrally.

In this state, if a phone book function is executed in the user terminal device 3 (100-3) (S1740), the user terminal device 3 (100-3) displays a phone book screen (S1745). A user may input a search word for searching contact information on the phone book screen (S1750). The user terminal device 3 (100-3) transmits the input search word to the server device 200 (S1755). The server 200 searches information including the transmitted search word from database (S1760). When the information is searched, the server device 200 transmits the search result to the user terminal device 3 (100-3) (S1765). The user terminal device 3 (100-3) displays the transmitted search result on the phone book screen (S1770). The search result may include various information such as propaganda phrase, image, company name, contact information, coupon, invitation letter, stamp card, acquaintance name, acquaintance contact information, etc.

When transmitting the search result, the server device 200 may compose the search result in a format which fits the configuration of the phone book screen of the user terminal device 3 (100-3). For example, if the phone book program of the user terminal device 3 (100-3) is an application with a low version which may display only contact information and company name on the phone book screen, the server device 3 (100-3) may transmit only contact information and company name. The application version information may be received and stored in advance in the process of registering or transmitting a search word. Accordingly, the amount of transmitted data can be reduced.

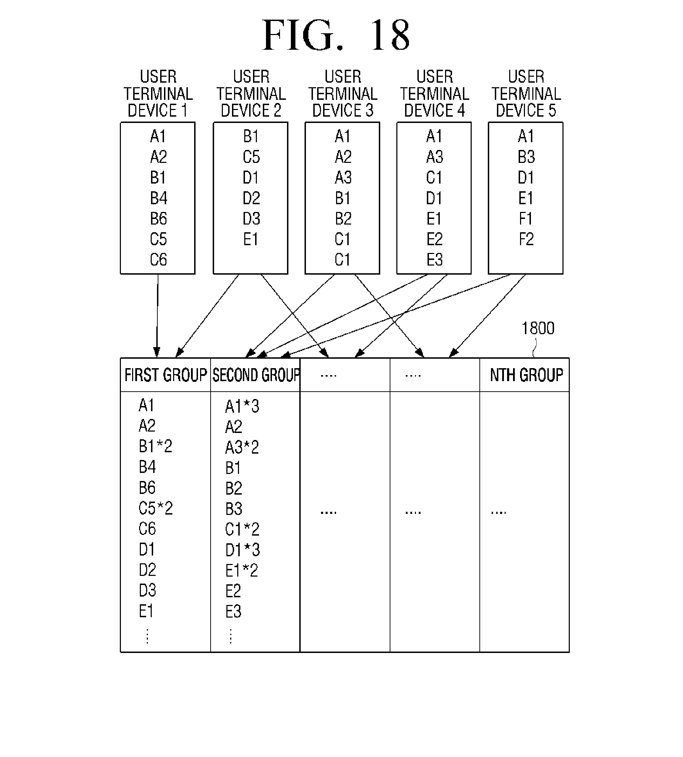

FIG. 18 is a view provided to explain a method of collecting information of each user terminal device by the server device 200 and updating database. According to FIG. 18, the server device 200 may divide database into a plurality of groups considering the relation between each of the user terminal devices and manage the database. For example, a social network service may set relation between the user terminal devices so that they can share information with one another. The server device 200 group information of the user terminal devices which are set to share information with one another and generate a database 1800.

According to FIG. 18, information regarding the user terminal devices 1 and 2 is recorded in the first group integrally. Herein, B1 and C5 are registered in an overlapping manner. Information regarding the user terminal devices 3, 4 and 5 are recorded in the second group integrally. Herein, A1 and D1 are registered three times each, and A3, C1 and E1 are registered twice each. In addition, information may be combined and recorded in various groups according to various setting of relations of the user terminal devices.

In this state, if the user terminal device 3 (100-3) requests a friend recommendation search with respect to E1, the server device 200 searches information regarding E1 from the second group and other groups where the user terminal device 3 (100-3) belongs and provides the information to the user terminal device 3 (100-3). Alternatively, if the user terminal device 3 (100-3) requests a popular recommendation search, the server device 200 may search information from the entire groups and provide the information.

The database structure of FIG. 18 is only an example, and other types of database may be generated and updated.

The database 1800 may be built inside the server device 200, but may be realized as a device which is separate from the server device 200.

The user terminal devices 1, 2 and 3 which are described above with reference to FIG. 17 may have the configuration described in FIG. 2. The controller 120 may transmit various data to the server device 200 as described above with reference to FIG. 2. In addition, the controller 120 may display information provided from the server device 200 on the execution screen of each program.

For example, when a phone book program is executed, the controller 120 displays a phone book screen on the display 140. The phone book screen refers to a screen which provides various contact information stored in a user terminal device, and the screen allows a user to make a call directly or send a message. The phone book screen may include a contact information search area.

When a search word is input in the contact information search area, the controller 120 displays information corresponding to the input search word on the phone book screen. The controller 120 may search information corresponding to the search word not only in the storage 130 but also in the server device 200.

In other words, when a search word is input in the contact information search area, the communicator 110 transmits the search word to the server device 200, and receives an alarm message corresponding to the search word from among advertisement information registered in the database of the server device 200. The received alarm message may include advertisement information, coupon information, event information, invitation letter, acquaintance information, etc.

The controller 120 displays contact information corresponding to the search word, information received through the communicator 110, etc. from among contact information stored in the storage 130 on the phone book screen. The display order, the search order, the display method, etc. of such information may vary depending on exemplary embodiments.

Meanwhile, if various intrinsic information such as name, various telephone numbers, address, e-mail address, homepage address, and SNS account are input and then, an information registration command is input, the controller 120 may store new information in the storage 130. When new information is stored, the controller 120 controls the communicator 110 to transmit the new information to the server device 200. The server device 200 may update database using the new information.

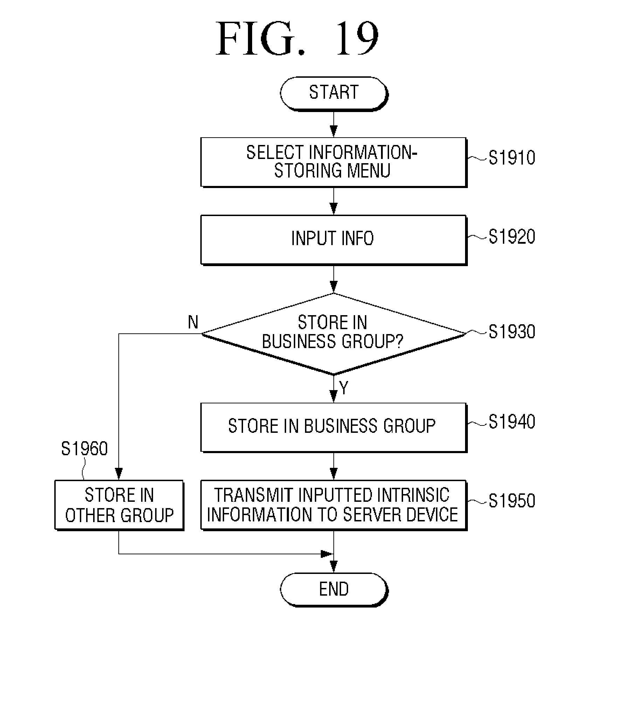

FIG. 19 is a flowchart provided to explain a method of registering intrinsic information. According to FIG. 19, if a menu for storing information is selected in the user terminal device 100 (S1910), the controller 120 displays an input screen where various intrinsic information such as name, various telephone numbers, address, e-mail address, homepage address, and SNS account may be input on the display 140. The menu for storing may be displayed on the phone book screen, but is not limited thereto. The menu may be displayed separately within the home screen.

The input screen may include various input areas for selecting name, telephone number, address information, e-mail address, group, and so on. A user may select each input area and input intrinsic information (S1920).

The intrinsic information may be divided into various groups by friend, family, business, and others. The intrinsic information may be processed differently according to a designated group. For example, if a user stores new intrinsic information in a business group (S1930, S1940), the user terminal device 100 transmits the corresponding contact information to the server device 200 and registers the information (S1950). In other words, the contact information obtained through business may be stored and managed both in the user terminal device 100 and the server device 200.

On the other hand, if the contact information is stored in other groups (S1960), it is not provided to the server device 200 separately.

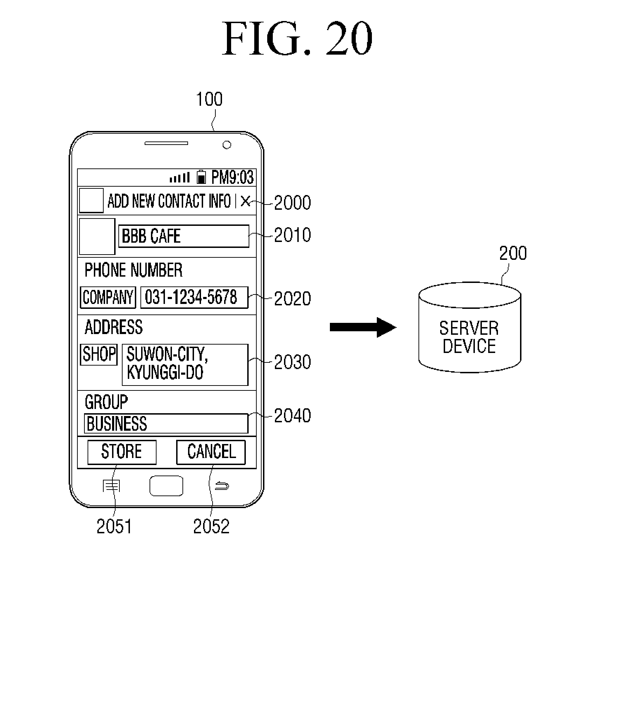

FIG. 20 illustrates an example of the configuration of an input screen which is displayed to register intrinsic information in the user terminal device 100.

According to FIG. 20, the user terminal device 100 displays an input screen 2000 including a first input area 2010 for inputting a name, a second input area 2020 for inputting a telephone number, a third input area 2030 for inputting address information, a fourth input area 2040 for selecting a group, a contact information storage menu 2051, and a cancellation menu 2052.

If a user enters information to each of the first to the fourth input areas and then, selects the contact information storage menu 2051, the controller 120 stores the information entered in the first to the fourth input areas in the storage 130 while transmitting the information to the server device 200 through the communicator 110 and registering the information in the server device 200.

The server device 200 records information which is transmitted from a plurality of user terminal devices using the above-described method in database. Accordingly, the phone book information of the pre-registered user terminal devices may be shared.

The phone book information stored in the user terminal devices may include various advertisement information and thus, the server device 200 may provide contact information of companies that the user terminal devices wish to know without receiving advertisements separately from advertisement providers. The advertisement information may be provided along with contact information search result stored in the storage 130, or may be provided when contact information is not searched.

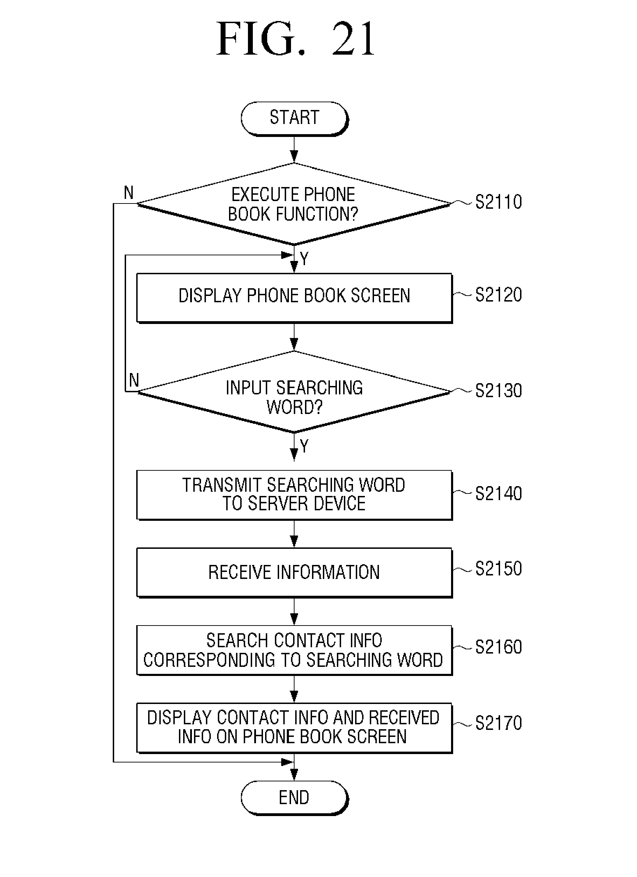

FIG. 21 is a flowchart provided to explain an advertisement service method according to an exemplary embodiment. According to FIG. 21, when a phone book function is executed (S2110), the user terminal device 100 displays a phone book screen (S2120).

When a search word is input on the phone book screen (S2130), the user terminal device transmits the search word to the server device (S2140), and receives information corresponding to the search word (S2150). In addition, the user terminal device searches information corresponding to the search word from among pre-stored intrinsic information (S2160). When the search is completed, the user terminal device displays the contact information searched in the stored information and the information received from the server device on the phone book screen (S2170).

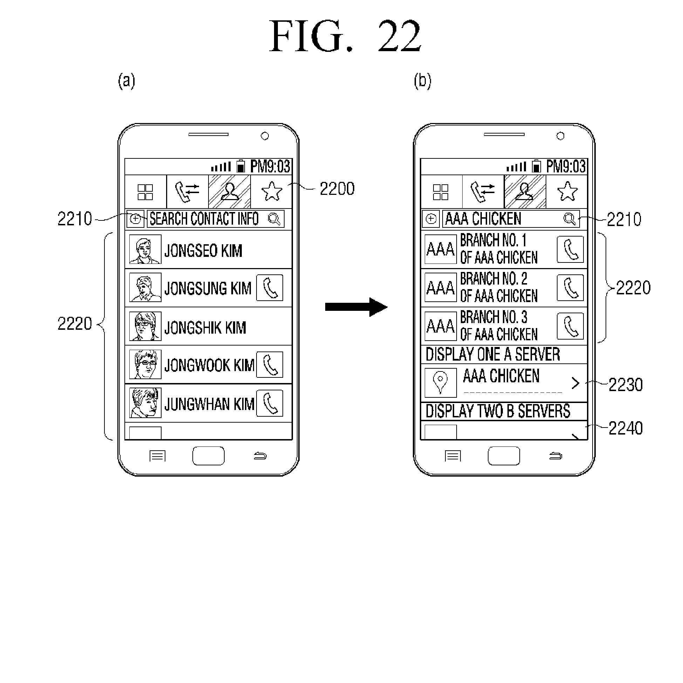

FIG. 22 is a view illustrating an example of configuration of a phone book screen according to the method of FIG. 21. According to FIG. 22, the user terminal device 100 displays a phone book screen 2200 including a contact information search area 2210 and a contact information display area 2220. As illustrated in FIG. 22(a), in case of a user terminal device which does not include a separate input means such as a keyboard, a key pad, etc., when a user touches the contact information search area 2210, the phone book screen 2200 may display a soft keyboard. The user may input a search word using the soft keyboard. The search word may consist of various texts such as a text, a number, a symbol, etc.

FIG. 22(b) illustrates a case where a search word of "AAA chicken" is input. The controller 120 searches every contact information including the search word of "AAA chicken" from among contact information stored in the storage 130. As a separate operation, the controller 120 transmits the search word of "AAA chicken" to the server device 200. After searching every contact information including the search word of "AAA chicken", the server device 200 transmits the information to the user terminal device 100. The server device 200 may search not only database within the server device 200 but also information registered in various social network servers.

The controller 120 displays the searched contact information and the received information on the phone book screen 2200. Specifically, the contact information 2220 searched in the storage 130 is displayed first on the lower side of the contact search area 2210, and the information 2230, 2240 searched in various servers may be displayed on the further lower side sequentially. Such various information displayed on the phone book screen 2200 may consist of various information such as advertisement image, contact information, address information, etc.

As illustrated in FIG. 22(b), when the information 2230, 2240 searched in the server is displayed, its source may also be displayed. In FIG. 22(b), three pieces of contact information is searched and displayed, one piece of information being searched in server A, and two pieces of information being searched in server B. If the server A is a server for providing a social network service, user information corresponding to the search word from among other users registered as acquaintances in the user terminal may be searched, or information corresponding to the search word from among information stored in the apparatuses of other users may be searched.

In FIGS. 21 and 22, the contact information which is searched in the user terminal device is displayed together with the information searched in the server device, but the information searched in the server device may be provided only when it is requested.

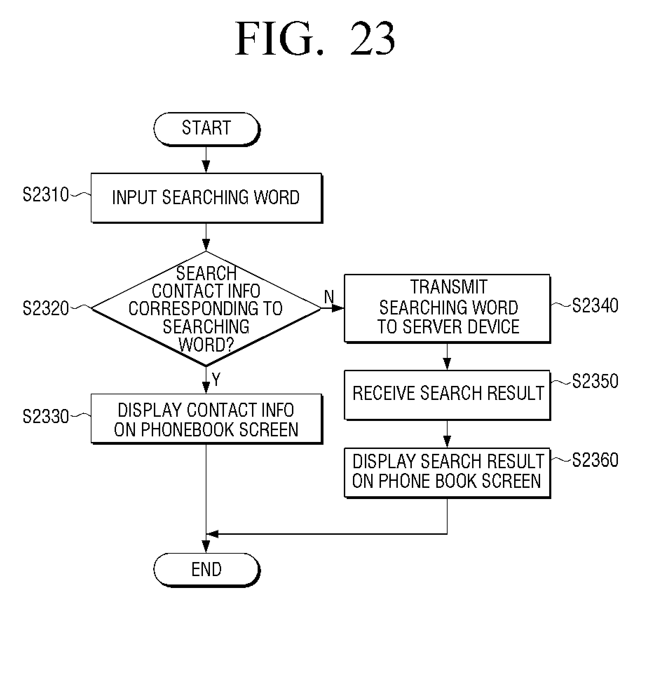

FIG. 23 is a flowchart provided to explain a method of providing an advertisement service according to an exemplary embodiment of receiving information from a server device when it is necessary. According to FIG. 23, when a search word is input (S2310), first of all, the controller 120 searches contact information corresponding to the input search word in the storage 130 (S2320).

If there is a search result, the controller 120 displays the searched contact information on a phone book screen (S2330). On the other hand, if there is no search result, the controller 120 transmits the search word to the server device 200 (S2340), receives the search result (S2350), and displays the result on the phone book screen (S2360).

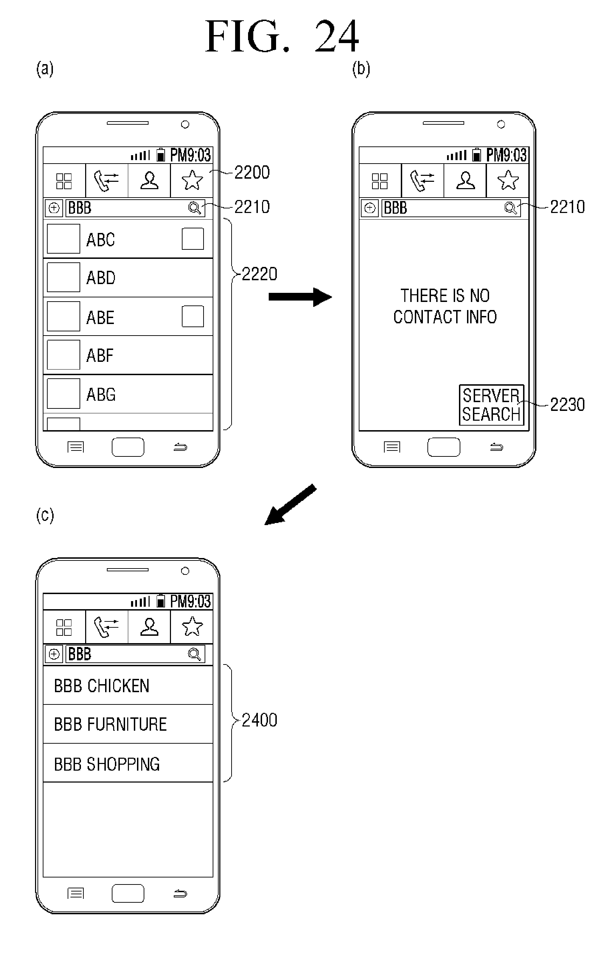

FIG. 24 illustrates an example of configuration of a phone book screen according to the exemplary embodiment of FIG. 23. As illustrated in FIG. 24(a), the phone book screen is divided into the search word input area 2210 and the contact information display area 2220. In this state, when the search word of "BBB" is input in the search word input area 2210, first of all, the controller searches contact information including the search word in the storage 130. When the corresponding contact information is not searched, the controller 120 displays a message informing that no contact information has been found as illustrated in FIG. 24(b). At the same time, the controller 120 displays a menu 2330 for searching a server. When a user selects the corresponding menu 2230, the communicator 110 transmits the search word of "BBB" to the server device 200. Accordingly, when the search result is transmitted from the server device 200, the controller 120 displays the search result 2400 on the phone book screen as illustrated in FIG. 24(c). As shown in FIG. 24(c), the search result 2400 may be various alarm messages including a search word such as "BBB". The alarm message may include not only advertisement information registered by various companies, coupon information, event information, invitation information, etc. but also various information such as telephone number, address information, e-mail address, SNS new registration content of acquaintances, etc.

Meanwhile, the alarm messages transmitted from the server device may be aligned according to various standards. Specifically, the alarm messages may be aligned and displayed according to at least one of the distance from the user terminal device, the number of registrations, the number of calls, the number of recommendations, etc.

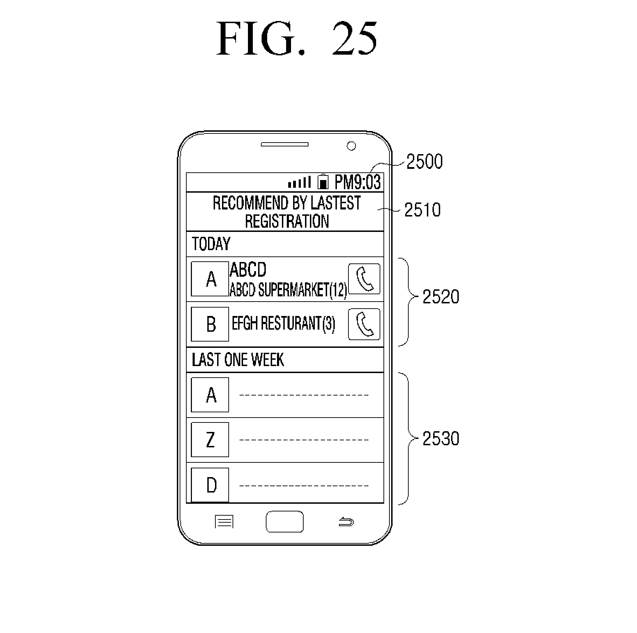

FIG. 25 illustrates an example of aligning alarm messages based on the order of recent registration. Specifically, FIG. 25 illustrates a case where contact information from among alarm messages is received. According to FIG. 25, the phone book screen 2500 displays an area 2510 for indicating an alignment standard and areas 2520, 2530 for displaying contact information which is aligned according to the alignment standard. The first area 2520 indicates contact information which is registered on the date of searching the information, and the second area 2530 indicates contact information which is registered within one week of searching the information.

FIG. 25 illustrates that the contact information is aligned according to one standard, but the contact information may be aligned based on various standards depending on a user's selection according to another exemplary embodiment.

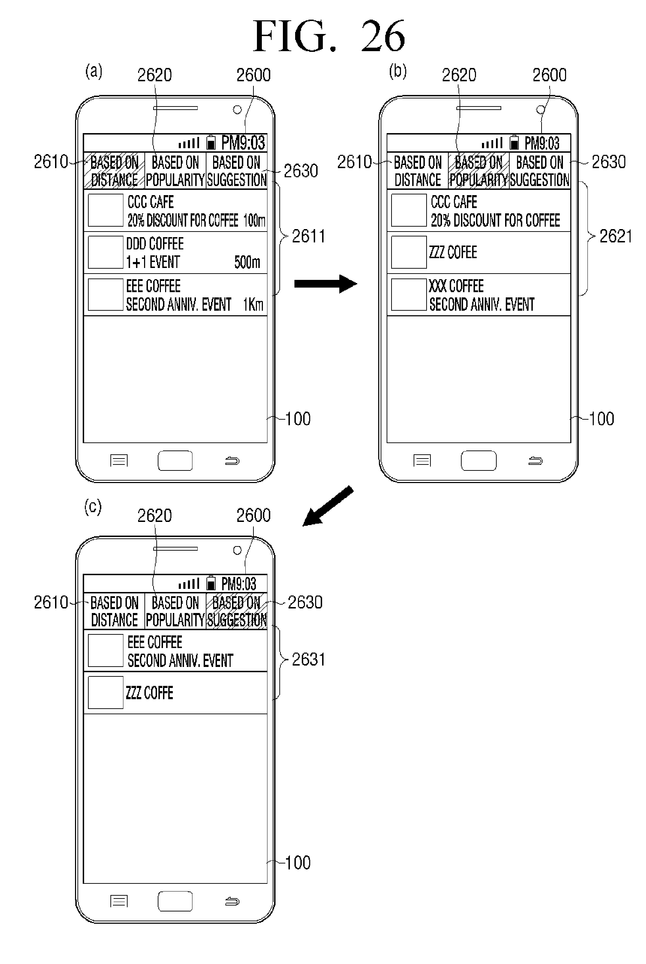

FIG. 26 illustrates configuration of a phone book screen in a user terminal device according to such an exemplary embodiment. According to FIG. 26(a), the user terminal device 100 displays a first tap 2610 for aligning contact information according to a distance from the user terminal device 100, a second tap 2620 for aligning contact information according to the number of recommendation based on popularity, a third tap 2630 for aligning contact information according to the number of recommendation by friends, etc. on the phone book screen 2600.

FIG. 26(a) shows the search result when the first tap 2610 is selected. For example, if the search word of "coffee" is input, the server device 200 searches every information including "coffee" in the name of contact information or advertisement phrase, and displays the search result in the order of the shortest distance between the place corresponding to the search result and the user terminal device 100. Accordingly, various search results 2611 are displayed on the screen. In order for the server device 200 to perform alignment based on distance, the user terminal device 100 may transmit the location information to the server device 200, or the server device 200 may estimate the location of the user terminal device 200 based on the location of a base station of a cell which broadcasts communication with the user terminal device 100. Alternatively, the server device 200 may provide the user terminal device 100 with all search results including a search word, and the user terminal device 100 may display the search results according to the order of the shortest distance from the location of the user terminal device 100.

FIG. 26(b) illustrates the phone book screen 2600 when the second tap 2620 is selected. As illustrated in FIG. 26(b), if a user selects the second tap 2620 for recommendation based on popularity, the information 2621 including a search word is aligned such that the information which is most frequently registered in the server device 200 or the information which is most telephoned is displayed on the top of the phone book screen 2600.

FIG. 26(c) illustrates the phone book screen 2600 when the third tap 2630 is selected. According to FIG. 26(c), the information 2631 including a search word is aligned such that the information which is most frequently registered in other apparatuses registered as acquaintances or the information which is most telephoned is displayed sequentially on the phone book screen 2600.

As illustrated in FIGS. 26(a), (b), (c), various advertisement information corresponding to the search word may be aligned and displayed according to various standards based on a user's selection.

FIGS. 17 to 26 illustrate various exemplary embodiments for providing advertisement information which is searched using a phone book search word. However, the search and advertisement service may be provided using other programs such as a calendar program, gallery program, and so on.

For example, if a calendar program is executed and various schedule information is input, the controller 120 may transmit the schedule information to the server device 200. The server device 200 may determine whether there is a keyword matching pre-stored information regarding advertisers (that is, shop information) from among keywords included in the schedule information. If it is determined that matching advertisement information is searched, the server device 200 transmits the advertisement information corresponding to the searched advertiser information to the user terminal device 100. The advertisement information may include not only simple advertisement message but also coupon, invitation letter, stamp card, etc.

Alternatively, if a new photo is taken in the user terminal device 100, the controller 120 may transmit the photo or metadata to the server device 200. The server device 200 may analyze the photo or the metadata, and determine whether it matches with pre-stored advertiser information (that is, shop information). If it is determined that there is a matching advertiser, the server device 200 transmits the advertisement information issued by the advertiser.

As described above, according to an exemplary embodiment, the server device 200 may search and provide information matching with information input from the user terminal device 100. As such, an advertisement service may be provided using a search method other than a push method.

Meanwhile, in the above-described exemplary embodiments, an advertisement service is provided using an intrinsic application installed in the user terminal device 100, such as a calendar application, a gallery application, and so on. However, an advertisement service may be provided using other advertisement applications which are provided for offering an advertisement service.

### <Example of using an advertisement application>

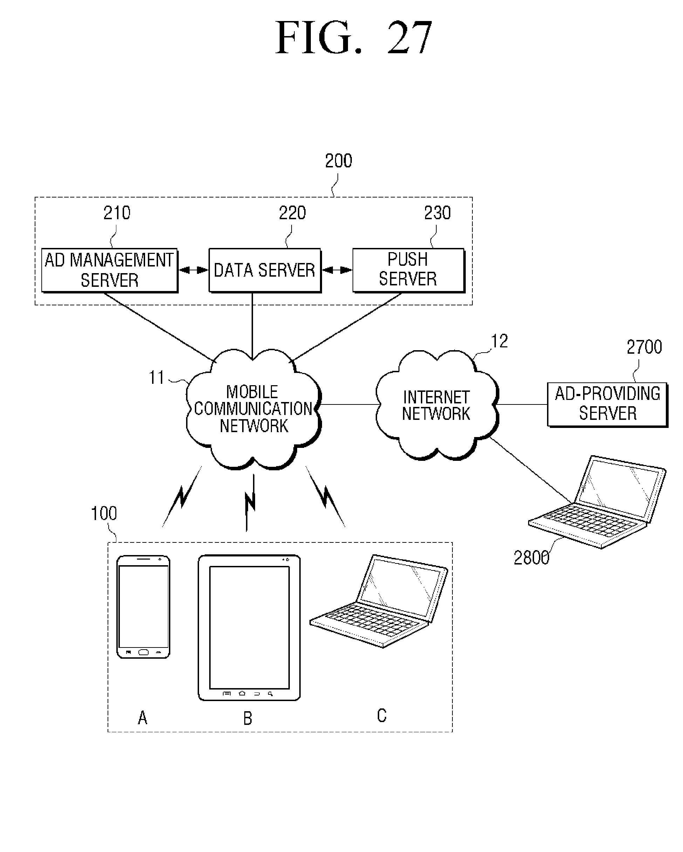

FIG. 27 illustrates configuration of a network system according to another exemplary embodiment. As described above, a network system may not be limited to the configuration of FIG. 1, and may change in various ways. For example, the server device 200 may not be realized as a single device, and may consist of various numbers and types of devices. The configuration of FIG. 27 may be realized as a network system which provides an advertisement service according to the above-described various exemplary embodiments other then the exemplary embodiment which will be described below.

According to FIG. 27, a network system may include the user terminal device 100, the server device 200, an advertisement providing server 2700, an advertiser terminal device 2800, etc. The user terminal device 100 may be realized as various apparatuses such as a mobile phone (A), a tablet PC (B), a lap-top computer (C), etc. The user terminal device 100 may have the configuration illustrated in FIG. 2. Not only the above-described intrinsic application but also other various applications can be installed in the storage 130. One of those applications may be a mobile advertisement application.

The mobile advertisement application may provide an advertisement service using information which is input through programs such as a phone book application, calendar application, gallery application, etc. as described above. The controller 120 of the user terminal device 100 may transmit the above-described information to the server device 200, receive advertisement information corresponding to the information, and align and display the advertisement information according to a predetermined rule.

For example, the user terminal device 100 may display various advertisement information such as advertisement message, event guidance card, coupon, invitation letter, stamp cards, etc. according to various standards such as distance, recommendation, popularity, etc.

The server device 200 provides an advertisement service by performing communication with the user terminal device 100, the advertisement providing server 2700, the advertiser terminal device 2800, etc.

The server device 200 may consist of an advertisement management server 210, a data server 220, a push server 230, etc. The advertisement management server 210, the data server 220, the push server, etc. may be realized as an individual apparatus, respectively, but may be realized as a single apparatus such as the network system of FIG. 1. If they are realized as a single server device 200, the information which manages the advertisement management server 210, the data server 220, the push server 230, etc. may be stored in a storage (not shown) of the server device 200.

The data server 220 stores various data transmitted from the user terminal device 100, the advertisement providing server 2700, the advertiser terminal device 2800, etc. Specifically, the data server 220 stores intrinsic information such as phone book information, calendar information, photo, metadata, etc. transmitted from the user terminal device 100 and various advertisement information transmitted from an advertiser (that is, a shop). The name of the data server 220 may vary according to the information stored, and the examples of the name may be a phone book server, a calendar server, a photo server, etc. However, hereinafter, the server will be referred to as a data server.

The advertisement management server 210 manages an advertisement service according to the above-described various exemplary embodiments based on the information stored in the data server 220. In addition, the advertisement management server 210 may update data recorded in the data server 220 using information provided from each user terminal device 100.

The advertisement management server 210 may receive various advertisement information from the advertisement providing server 2700 and the advertiser terminal devices 2800, and store the received advertisement information in the data server 220 for a predetermined time. When the predetermined time elapses, the advertisement management server 210 deletes the data stored in the data server 220.

The data server 220 stores information transmitted from the user terminal device 100, information transmitted from the advertisement providing server 2700, information transmitted from the advertiser terminal devices 2800, etc., and updates and records the information periodically. In particular, the data server 220 may receive and store phone book information, calendar information, gallery information, etc. of the user terminal device 100, and update the information to date using a synchronization service.

In addition, the data server 220 may manage customer information of an advertiser. Specifically, the data server 220 may collect information of user terminal devices which include the telephone number of the advertiser in their phone books, and generate customer information database for the advertiser automatically.

The push server 230 is a server which supports a push service. In other words, the push server 230 may transmit advertisement information stored in the data server 220 to the corresponding user terminal device 100 using a push method. In addition, if a predetermined push condition is satisfied, the push server 230 may transmit an alarm message indicating that there is advertisement information to be transmitted to the user terminal device 100 to the user terminal device 100 and then, when the user terminal device selects the alarm message, transmit the advertisement information. In an exemplary embodiment of providing an advertisement service based on the above-described search method, the advertisement management server 210 may search advertisement information corresponding to the search word transmitted from the user terminal device 100 from the data server 220, and provide the advertisement information to the user terminal device 100.

The advertisement providing server 2700 provides a web service for allowing advertisers (or entrepreneurs) to generate and manage a mobile advertisement message through the advertiser terminal device 2800. In other words, the advertisement providing server 2700 may generate various advertisement information such as coupon, stamp card, invitation letter, advertisement message, etc. according to a request from an advertiser, and transmit the advertisement information to the server device 200. The advertiser may access the advertisement providing server 2700 using the advertiser terminal device 2800, and check the web page. The advertiser may generate advertisement information with a desired content in a desired form on the web page provided by the advertisement providing server 2700. When a payment regarding the generated advertisement information is made using an appropriate method, the advertisement providing server 2700 transmits the generated advertisement information to the server device 200, and registers the information in the data server 220.

FIG. 27 illustrates that the advertisement providing server 2700 is an independent server which is different from the advertisement management server 210, the data server 220, the push server 230, etc., but the advertisement providing server 2700 may be configured to be incorporated with at least one of the above devices.

The advertiser terminal device 2800 refers to a terminal device which an advertiser (or businessman, manager, etc.) uses. The advertiser terminal device 2800 may have the similar configuration with the user terminal device 100 and thus, the illustration and description regarding the configuration of the advertiser terminal device 2800 will not be provided. The advertiser terminal device 2800 may be realized as various types of devices such as notebook PC (Personal Computer), desktop PC, Netbook, mobile phone, PDA, electronic note, etc., but in this specification, the advertiser terminal device 2800 will be referred to as an advertiser terminal device for convenience of description.

The advertiser terminal device 2800 may connect to the advertisement providing server 2700 to generate advertisement information including news, coupon, invitation letter, stamp card, QR code, etc., and transmit the information to a user terminal device of customers through an Internet network 12 and a mobile communication network 11.

To do so, when log-in is completed, the advertiser terminal device 2800 may display an initial screen for providing a mobile advertisement service, and transmit a request for generating news, coupon, invitation letter, stamp card, or QR code, a request for statistic information, a request for profile information, etc. to the advertisement providing server 2700 in response an input signal which is input on the initial screen. The advertiser terminal device 2800 may receive a web page from the advertisement providing server 2700 in response to the request, and output the web page on the screen, which will be described in detail with reference to an accompanying figure later.

The advertisement providing server 2700 provides a web service so that advertisers (or businessmen) may generate and manage a mobile advertisement message through the advertiser terminal device 2800. In other words, the advertisement providing server 2700 may generate various advertisement information such as coupon, stamp card, invitation letter, advertisement message, etc. according to a request of an advertiser, and transmit the information to the server device 200. The advertiser may access the advertisement providing server 2700 using its own terminal device, that is, the advertiser terminal device 2800, and check the web page. The advertiser may generate advertisement information with a desired content in a desired form on the web page provided by the advertisement providing server 2700. The advertisement providing server 2700 transmits the generated advertisement information to the server device 200, and registers the information in the data server 220.

FIG. 27 illustrates that the advertisement providing server 2700 is an independent server which is different from the advertisement management server 210, the data server 220, the push server 230, etc., but the advertisement providing server 2700 may be configured to be incorporated with at least one of the above devices.

The user terminal device 100 accesses the advertisement providing server 2700 using a pre-installed advertisement application, and the advertisement providing server 2700 provides various web page screens to the user terminal device 100 in association with an advertisement application of the user terminal device 100 so that users and advertises may enjoy an advertisement service.

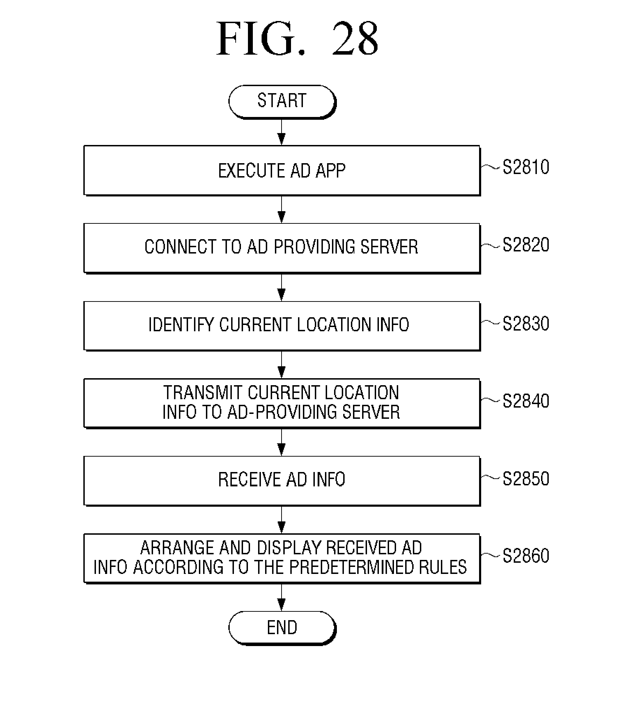

FIG. 28 is flowchart provided to explain a method of providing an advertisement service using an advertisement application. According to FIG. 28, when an advertisement application is executed in the user terminal device 100 (S2810), the controller 120 connects to the advertisement providing server 2700 (S2820).

In this case, the controller 120 may perform a user authentication process. For example, the controller 120 may output a log-in window for inputting an ID and a password and transmit the input ID and password to the advertisement providing server 2700 to proceed with a user authentication process. If an automatic log-in function is set, the controller 120 may not output a log-in window, and transmit the pre-stored ID and password to the advertisement providing server 2700 to proceed with a user authentication process.

When the advertisement providing server 2700 is connected, the controller 120 may confirm the current location information of the user terminal device 100 (S2830), and transmit the confirmed location information to the advertisement providing server 2700 (S2840). When the location information is transmitted, the advertisement providing server 2700 selects appropriate advertisement information based on the location information, and transmits the selected advertisement information to the user terminal device 100. Specifically, the advertisement providing server 2700 may transmit advertisement information which is issued by an advertiser within a predetermined distance based on the current location of the user terminal device 100. The distance may be set directly by a user of each user terminal device. In addition, the advertisement providing server 2700 may select advertisement information issued by an advertiser corresponding to various intrinsic information provided by the user terminal device 100 and transmit the information. The controller 120 may receive the transmitted advertisement information (S2850), and align and display the information according to a pre-defined standard (S2860).

For example, the controller 120 may give priority to advertisement information based on whether the advertisement information is issued by an advertiser who has ever downloaded at least one of coupon, invitation letter, stamp card, etc., whether the advertisement information is issued by an advertiser registered in the phone book, and the other advertisement information order, and align and display each of the advertisement information according to the priority. With respect to the advertisement information with the same priority order, the advertisement information may be aligned according to various standards such as distance, popularity, friends' recommendation, etc.

Subsequently, when specific advertisement information is selected, the controller 120 may display detailed information, available information, etc. with respect to the selected advertisement information.

FIG. 28 illustrates that the advertisement providing server directly provides advertisement information, but the advertisement providing server 2700 may be used simply as a server of a company which generates advertisement information, and the server 200 may perform the function of the advertisement providing server of FIG. 28 as described above. Hereinafter, the present invention will be described in detail without distinguishing the advertisement providing server and the server device which provide an advertisement service.

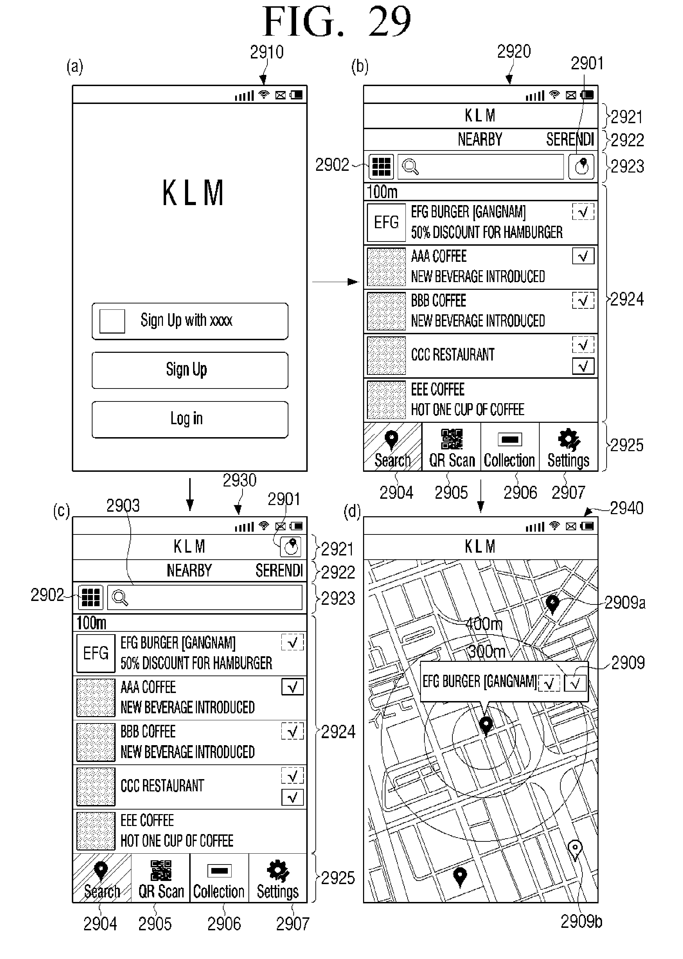

FIGS. 29 to 37 are views provided to explain a method of providing an advertisement service using an advertisement application.

According to FIG. 29(a), when an advertisement application is executed, the controller 120 displays an initial screen 2910. The initial screen 2910 may display a log-in menu, etc. for connecting to the advertisement providing server 2700 or the advertisement management server 210, etc. A user may select the log-in menu to perform log-in.

When the log-in is completed, the controller 120 may display advertisement information screens 2920, 2930 in various layouts as illustrated in FIG. 29(b) and (c). The screen 2920 of FIG. 29(b) and the screen 2930 of FIG. 29(c) are the same except for the location of a map view menu 2901. In other words, the map view menu 2901 is included in a search area 2923 in the screen 2920 of FIG. 29(b), while the map view menu 2901 is included in a title area 2921 in the screen 2930 of FIG. 29(c). In addition, the layout of the advertisement information screen may change in various ways. Hereinafter, the advertisement information screen of FIG. 29(b) will be described in detail. The advertisement information screen 2920 may include the title area 2921, a search method selection area 2922, the search area 2923, an advertisement list area 2924, and a menu area 2925. The title area 2921 is an area where the title of an advertisement application is displayed. In FIG. 29, the title of an advertisement application is "KLM", but this title is provided merely for convenience of explanation, and it does not refer to any specific program or service.

The search method selection area 2922 is an area for selecting a search method regarding received advertisement information. A search method may be selected among various methods based on distance, serendipity, popularity, business category, advertisement type, friends' recommendation, etc. A user may change the search method by dragging or flicking the search method selection area 802 left and right. If there is no user selection, a search method which is set as default may be selected. FIGS. 29 (b) and (c) illustrate a case where the search method of aligning information according to distance is set as default. In this case, when an advertisement application is executed and advertisement information is received from the advertisement providing server 2700, the controller 120 aligns and displays the received advertisement information on the screen according to distance.

The search area 2923 may include a category selection menu 2902 for selecting a category of advertisement information and a search word input field 2903 for inputting a search word to search advertisement information. According to FIG. 29(b), the search area 2923 may also display the map view menu 2901. The advertisement list area 2924 is an area where received advertisement information is aligned and displayed according to a predetermined standard.

The menu area 2925 may be displayed on the lower side of the advertisement list area 2924. The menu area 2925 may display menus 2904-2907 for controlling an advertisement application. Specifically, the menu area 2925 may include a search menu 2904, a QR scan menu 2905, a storage box menu 2906, and a setting menu 2907. The search menu 2904 is a menu for activating a search mode where advertisement information is searched according to a selected search method. The search menu 2904 is a default menu which is executed automatically when an advertisement application is initially executed.

The QR scan menu 2905 is a menu for activating a scan mode where an QR code included in advertisement information issued by an advertiser is scanned. The storage box 2906 is a menu for moving downloaded coupon, invitation letter, stamp card, etc. to a storage box. The setting menu 2907 is a menu for activating a setting menu where user information (log-in ID, password, etc.) and Social Network Service (SNS) association information is set.

When the map view menu 2901 is selected in the advertisement information screens 2920, 2930 of FIGS. 29 (b) and (c), the controller 120 may display on the map the location of an advertiser who issues advertisement information including coupon, invitation letter, stamp card, etc. which can be currently used. In this case, the controller 120 may display advertisers (or businessmen) whose storage box includes coupon, invitation letter, etc. to be visually distinguished from advertisers (or businessmen) whose storage box does not include coupon, invitation letter, etc. For example, as shown in the screen 2940 of FIG. 29(d), the color of the marker 2909a representing advertisers (or businessmen) whose storage box includes coupon, invitation letter, etc. may be different from the color of the marker 2909b representing advertisers (or businessmen) whose storage box does not include coupon, invitation letter, etc. Not only color but also shape or size may be displayed distinctively. Alternatively, no mark would be displayed for advertisers whose storage box does not include coupon, invitation letter, etc.

When a specific marker is selected from among markers displayed on the map, the controller 120 may display brief information regarding advertisement information registered by the corresponding advertiser on the pop-up window 2909. In this case, if there are a plurality of pieces of advertisement information, the controller 120 may control to display mobile advertisement including a coupon (a stamp) with the biggest discount rate first in descending order of the discount rate at predetermined time intervals. When the pop-up window 2909 is selected, the controller 120 may output the detailed screen regarding the corresponding advertisement information.

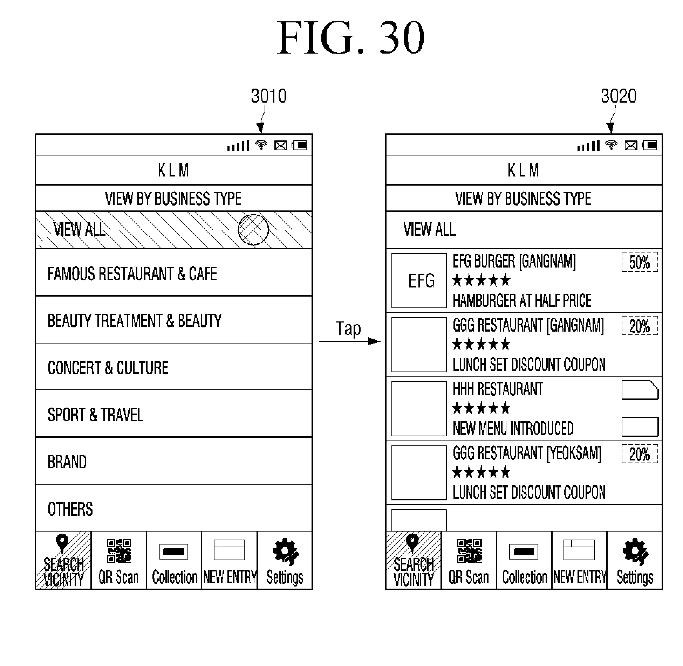

Meanwhile, the controller 120 may change a search method according to the occurrence of drag or flick event on the search method selection area 2922. For example, when a search method for each type of business is selected through a drag event or a flick event on the search method selection area 2922, the controller 120 may display a screen as shown in FIG. 30.

FIG. 30 illustrates an example of a screen which is displayed on the display 140 when a search method for each type of business is selected. According to FIG. 30, a business type category screen 3010 displays categories for each type of business. When a specific category of business is selected from among the categories, the controller 120 outputs a list screen 3020 of advertisement information issued by an advertiser (or a businessman) of type of business which belongs to the selected category. FIG. 30 illustrates a screen 3020 where advertisement information of advertisers which belong to the entire businesses is displayed in the list.

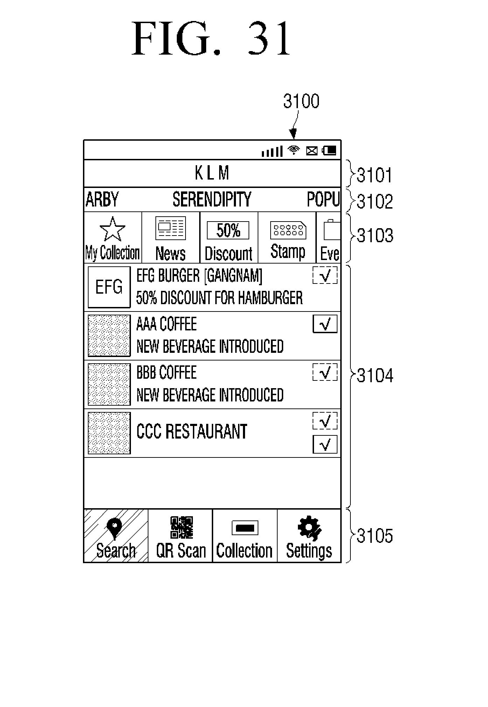

FIG. 31 illustrates an example of a screen which is displayed on the display 140 when a serendipity search method is selected. According to FIG. 31, when a serendipity search method is selected through a drag event or a flick event on the search method selection area 2922, the controller 120 categories advertisement information according to the serendipity search method and display the categorized advertisement information. FIG. 31 illustrates an advertisement information screen 3100 where advertisement information is categorized according to the serendipity search method.

Referring to FIG. 31, the advertisement information screen 3100 according to the serendipity search method may include a title area 3101, a search method selection area 3102, an alignment method selection area 3103, a list area 3104, and a menu area 3105. The alignment method selection area 3103 is an area for selecting an alignment method of categorized advertisement information according to the serendipity search method. The alignment method selection area 3103 may include various menus such as my collection, news, coupon, stamp, invitation letter, etc. FIG. 31 illustrates a case where my collection menu is selected. When my collection menu is selected, the controller 120 may display coupon, invitation letter, stamp, etc. stored in the storage box in the order of availability from the current location based on location information.

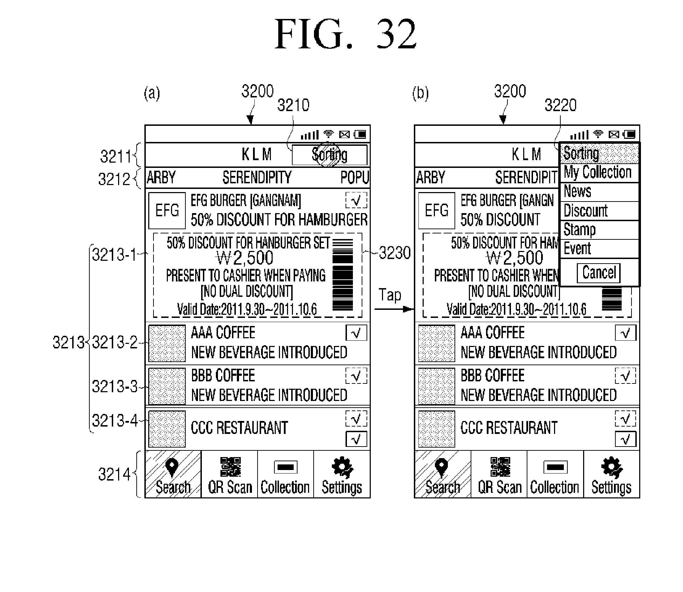

FIG. 32 illustrates another example of an advertisement information screen according to a serendipity search method. According to FIG. 32(a), the advertisement information screen 3200 according to the serendipity search method may display a title area 3211, a search method selection area 3212, a list area 3213, and a menu area 3214. According to FIG. 32(a), the title area 3211 may display an alignment method selection menu (sorting) 3210.

The alignment method selection menu 3210 illustrated in FIG. 32(a) displays various menus using a drop-down method. In other words, when a user selects the alignment method selection menu 3210, the controller 120 displays a menu list 3220 for electing one of a plurality of alignment methods as illustrated in FIG. 32(b).

In addition, as illustrated in FIG. 329a), the controller 120 may also display a coupon image in each advertisement item or may display only brief information. For example, the controller 120 may a coupon image 3230 along with an advertisement phrase in the first advertisement item 3213-1 of the advertisement information screen 3200.

In addition, the controller 120 may display only brief information in the second and fourth advertisement items 3213-2∼3213-4.

If a predetermined input signal occurs in the first advertisement item 3213-1 where the coupon image is also displayed, the controller 120 may remove the coupon image 3230, and display only brief information as in the second and fourth advertisement items 3213-1∼3213-4. On the other hand, if a predetermined input signal occurs in the second and fourth advertisement items 3213-2∼3213-4 where only brief information is displayed, the controller 120 may display a coupon image (or invitation image, stamp card image, etc.) corresponding to the advertisement item in the corresponding item.

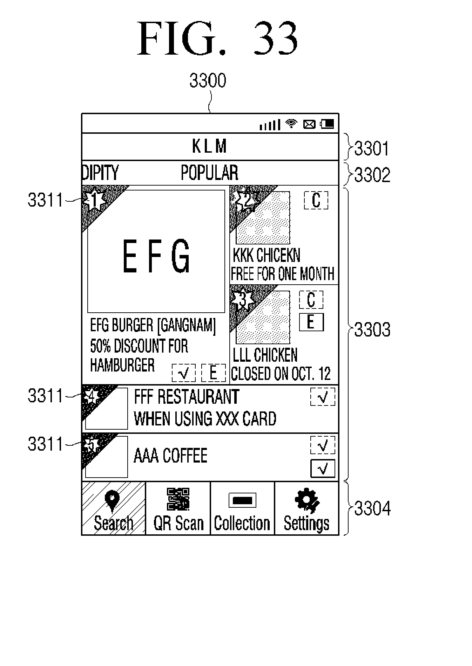

FIG. 33 illustrates an example of an advertisement information screen according to a popularity-based search method. According to FIG. 33, when a popularity-based search menu is selected, the controller 120 displays an advertisement information screen 3300 where advertisement information is categorized based on popularity. The advertisement information output screen 3300 based on popularity may include a title area 3301, a search method selection area 3302, an advertisement list area 3303, and a menu area 3304.

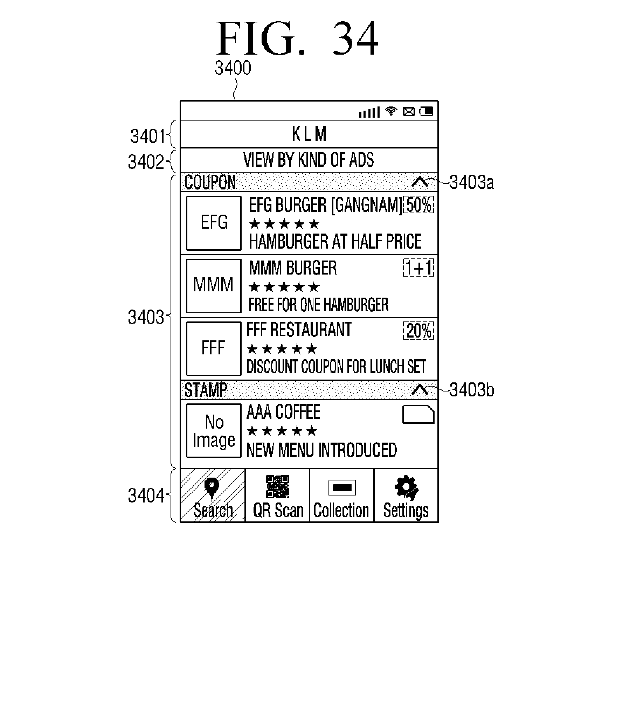

The advertisement list area 3303 is an area for displaying various advertisement information based on popularity. In this case, each advertisement information may also display a number icon 3311 indicating the ranking of popularity. The size of each advertisement information may vary according to popularity. For example, as illustrated in FIG. 33, the controller 120 may display advertisement information with high popularity to be large, and display advertisement information with relative low popularity to be small. The controller 120 may scroll the advertisement list 3303 according to a scroll manipulation by a user. The menu area 3304 may be displayed in the lower side of the advertisement list area 3303. The type and function of the menu area 3304 have already been described above, so further description will not be provided. FIG. 34 illustrates an example of an advertisement information screen according to an advertisement type search method. According to FIG. 34, when an advertisement type search method is selected in a search method selection area, the controller 120 may categorize advertisement information by the type of advertisement and display an advertisement information screen 3400.

The advertisement information screen 3400 according to the type of advertisement may include a title area 3401, a search method selection area 3402, an advertisement list area 3403, and a menu area 3404. The advertisement list area 3403 displays advertisement information which is divided into advertisement information including a coupon, advertisement information including a stamp, etc.

The advertisement list area 3403 may be displayed using an accordion menu method. In other words, a user may open or close a list through the buttons 3403a, 3403b displayed in the advertisement list area 3403. In addition, the advertisement list area 3403 may be scrolled.

As described above, a user may check various advertisement using the search menu 2904. In addition, the advertisement information screen may display a QR scan menu. A user may select the QR scan menu to recognize a QR code and check advertisement information.

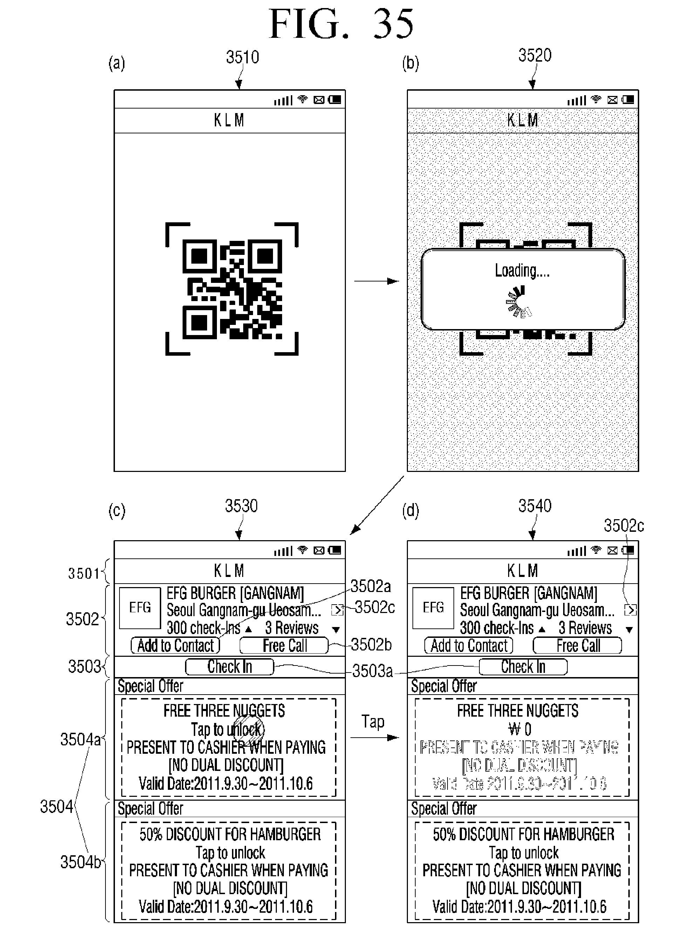

FIG. 35 is a view provided to explain a method of using a QR scan menu. When a user selects the QR scan menu, the controller 120 activates a camera (not shown) formed on the user terminal device 100. A user may photograph a QR code using the camera. When a QR code is photographed, the controller 120 displays the photographed QR code on the screen 3510 as illustrated in FIG. 35(a). In addition, the controller 120 may load and analyze the photographed QR code, and receive advertisement information of the corresponding advertiser from the server device 200 or the advertisement providing server 2700. FIG. 35(b) illustrates a screen 3520 where a QR code is being loaded.

The analysis of a QR code may be performed in the user terminal device 100 or in the server device 200 or in the advertisement providing server 2700. In this case, the user terminal device 100 may transmit a photographed QR code image to the server device 200 or the advertisement providing server 2700, and the server device 200 or the advertisement providing server 2700 may analyze the received QR code image and provide the user terminal device 100 with the corresponding advertisement information. When the advertisement information is received, the controller 120 displays an advertisement information screen 3530. The advertisement information screen 3530 may include a title area 3501, an advertiser information display area 3502, a check-in menu display area 3503, a coupon display area 3504, etc. The advertiser information display area 3502 may include representative image, advertiser name, address, number of check-in, number of comments, contact information add menu 3502a, free call menu 3502a, and detailed information view menu 3502c. The coupon display area 3504 may include a special offer coupon display area 3504a and a general coupon display area 3504b.

FIG. 35(c) illustrates a state before a special offer coupon and a general coupon are downloaded. When the coupon image 3504 is selected in the advertisement information screen illustrated in FIG. 35(c), the controller 120 may download available information regarding the corresponding coupon from the server device 200 or the advertisement providing server 2700.

FIG. 35(d) illustrates a coupon image state after a special offer coupon 3504a is selected and downloaded. According to FIG. 35(d), the phrase such as 'Tap To unlock' is deleted from the special offer coupon 3504a. In addition, an invitation display area, a news display area, etc. may be further displayed on the advertisement information screen.

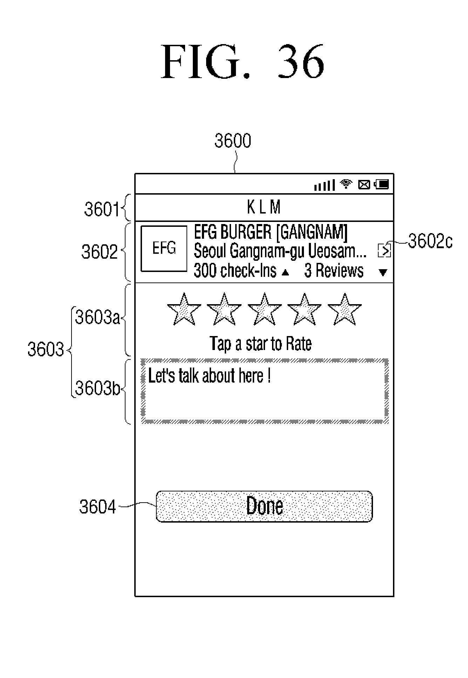

Meanwhile, when a check-in menu 3503a is activated in the advertisement information screen 3530 as illustrated in FIG. 35(c), the controller 120 may display a check-in screen. FIG. 36 illustrates an example of a check-in screen.

According to FIG. 36, a check-in screen 3600 may include a title area 3601, an advertiser information display area 3602, an evaluation area 3603 for evaluating the corresponding advertiser, and a completion menu 3604. The evaluation area 3603 may include a star point evaluation area 3603a for giving a star point and a comment writing area 3603b. FIG. 36 illustrates an example of a screen where star points can be given using 5 stars. When the screen is displayed as illustrated in FIG. 36, a user may give a star point by touching one of the 5 star icons. For example, if the fourth star icon from left is touched, a user gives 4 points out of 5 points. The screen configuration and operation is only an example, and the present invention is not limited thereto.

When the completion menu 3604 is input after a star point or comment is input, the controller 120 stores the input star point or comment in the storage 130. Subsequently, the number of check-in for the corresponding advertiser is increased by 1, and the previous screen is displayed on the display 140.

In the above exemplary embodiment, a detailed advertisement information screen including a check-in menu and a special offer coupon is output when a QR code is scanned, but the present invention is not limited thereto. For example, according to another exemplary embodiment, a detailed advertisement information screen including a check-in menu and a special offer coupon can be output when advertisement information, settlement information, electronic receipt, etc. is received through nearby wireless communication (RFID or NFC).

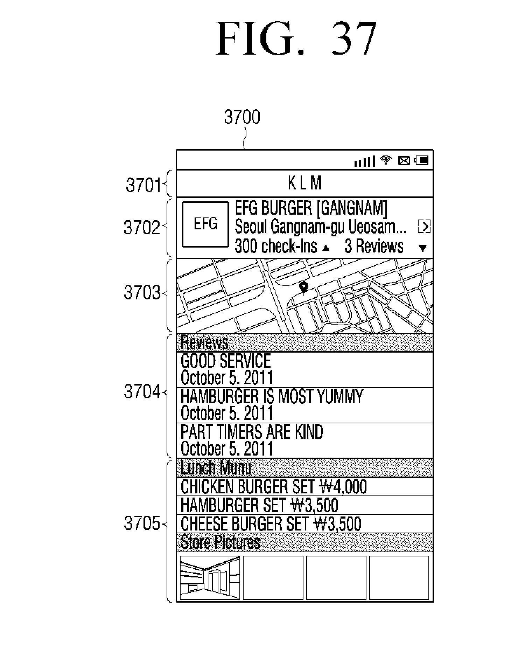

Meanwhile, the detailed information view menu 3502c is selected on the advertisement information screen 3530 illustrated in FIG. 35(c) or (d), the controller 120 may display the detailed information screen 3700 as illustrated in FIG. 37.

According to FIG. 37, the detailed information screen 3700 may include a title area 3701, an advertiser information display area 3702, a map display area 3703, a review area 3704 where users' comments are registered, and an additional information area 3705 where additional information registered by advertisers is displayed. The additional information may be operation time, menu and price, photos of the inside, etc. However, the screen configuration of FIG. 37 is only an example, and the screen configuration may change in various ways.

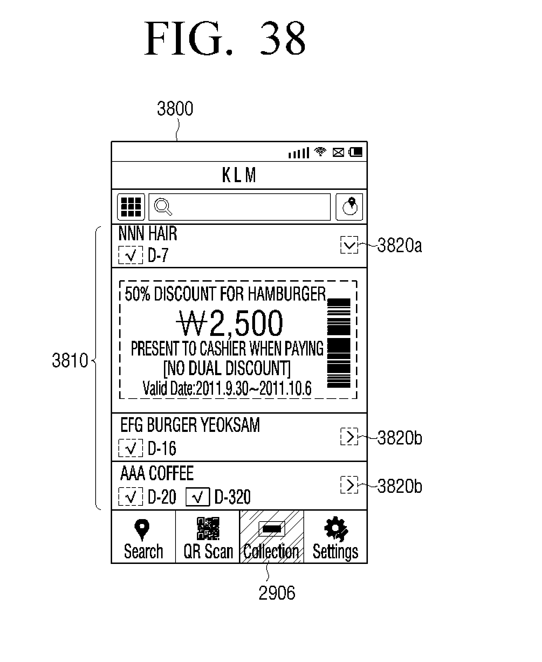

Lastly, if the storage box menu 2906 is activated, the controller 120 displays a screen as illustrated in FIG. 38.

According to FIG. 38, when the storage box menu 2906 is selected, the controller 120 displays a storage box screen 3800 showing advertisement information stored in the storage box. According to FIG. 38, the storage box screen 3800 displays the stored advertisement information in the form of list 3810. The controller 120 may align and display the advertisement information stored in the storage box according to an expiration period. An accordion menu button may be displayed in each advertisement information. The accordion menu button may be displayed in one of the two forms 3820a, 3820b according to whether the button is selected. If the accordion button is selected, the controller 120 displays the button in the first form 3820a, and displays at least one of coupon image, invitation image and stamp card image in the corresponding advertisement information. On the other hand, if the accordion menu button is not selected, the controller 120 displays the button in the second form 3820b, and displays only brief information (such as, title, expiration period, etc.) in the corresponding advertisement information.

As described above, a user of the user terminal device 100 may be provided with not only basic programs of the user terminal device 100 such as phone book, calendar, gallery, etc. but also various advertisement services using an advertisement application. The advertisement application may be configured to provide various additional services such as settlement service, purchase history management service, etc. in addition to the advertisement. Specifically, the advertisement application may be configured in the form of a wallet program which provides the total service concerning shopping and provided to a user terminal device, which will be described in detail in another exemplary embodiment.

Hereinafter, the configuration and operation of a server device which provides various advertisement services in association with the user terminal device 100 in the above-described various exemplary embodiments will be described in detail.

### <Various examples regarding configuration and operation of server device>

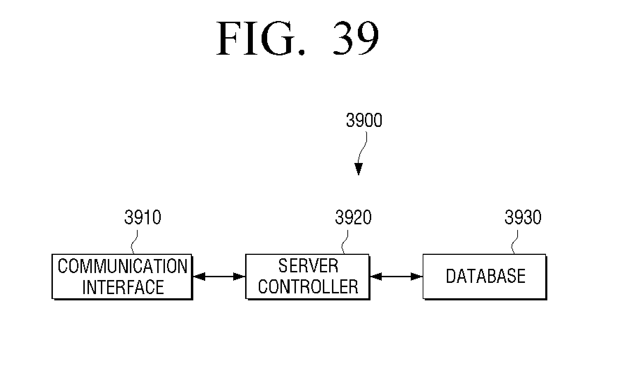

FIG. 39 is block diagram illustrating configuration of a server device according to an exemplary embodiment. The server device 3900 of FIG. 39 may operate as the server device 200 or the advertisement providing server 2700 as described in the above various exemplary embodiments.

According to FIG. 39, the server device 3900 includes a communication interface 3910, a server controller 3920, and a database 3930.

The communication interface 3910 receives information by communicating with various external devices including the user terminal device 100.

The database 3930 records the received information.

The server controller 3920 may update the database 3930 frequently using information received through the communication interface unit 3910. In addition, the server controller 3920 may transmit the information of the database 3930 to each user terminal device in response to various commands received through the communication interface 3910.

For example, according to an exemplary embodiment of providing an advertisement service based on a push method, when intrinsic information regarding an advertiser is stored in a connected user terminal device, the communication interface 3910 may receive the intrinsic information. The server controller 3920 may store the received intrinsic information in the database 3930. In addition, when advertisement information provided from the terminal device 2800 of various advertisers or the advertisement providing server 2700 is received, the server controller 3920 may store the advertisement information in the database 3930. When a predetermined push condition is satisfied, the server controller 3920 transmits the stored advertisement information to the corresponding user terminal device 100.

According to an exemplary embodiment of providing an advertisement service based on a search method, when a search word is input while a phone book function is executed and a phone book screen is displayed, the corresponding user terminal device transmits the search word. The communication interface 3910 receives the transmitted search word. The server controller 3920 searches advertisement information corresponding to the search word from the database 3930, and transmits the search result to a user terminal device. In this case, the server controller 3920 may align the search result according to at least one of distance from the location of the user terminal device, the number of registrations, the number of calls, the number of recommendations, etc., configure the search result in a format which conforms to the phone book screen of the user terminal device, and transmit the search result.

According to an exemplary embodiment of providing an advertisement service using an advertisement application, when an advertisement application is executed from the user terminal device 100, the server controller 3920 configure an advertisement information screen by transmitting various information recorded in the database 3930 to the corresponding to the user terminal device 100. Accordingly, various advertisement information may be provided as described above in the exemplary embodiment.

As described above, the server device 3800 may perform various operations according to an exemplary embodiment. Hereinafter, various services provided by the server device 3800 will be described in detail.

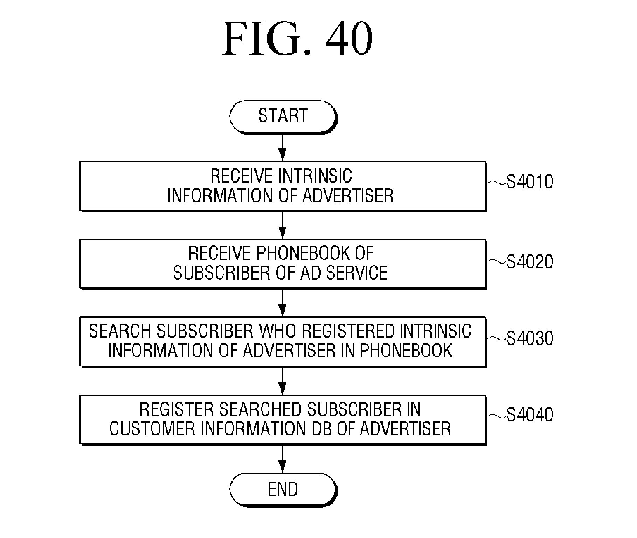

FIG. 40 is a view provided to explain a method of managing database where customer information is recorded in a server device according to an exemplary embodiment of providing an advertisement service based on a push method. According to FIG. 40, the server device 3800 may receive and store various intrinsic information regarding an advertiser (S4010). Specifically, businessmen (or advertisers) may subscribe to a mobile advertisement service, and register their contact information and their customer information (telephone number, e-mail address, etc.) in the server device 3800. More specifically, various information which can be provided in a shop, such as shop name, shop image, shop location, telephone number, web page address, information on products of shop, product image, discount rate, discount period, event information, coupon (coupon ID, serial number, coupon image, coupon name, coupon type, etc.), invitation letter, advertisement phrase, etc., can be included. For convenience of explanation, hereinafter, various advertisement information provided by an advertiser or a businessman will be referred to as shop information.

In addition, the server device 3800 may receive various intrinsic information from a user terminal device (S4020). In this case, the user terminal device may be a user terminal device of a user who has concluded an advertisement service contract with a businessman of the server device 3800. The intrinsic information received from a user terminal device may include not only name, telephone number, e-mail address, messenger address, nickname, birth date, address, user ID, etc. of a user of the user terminal device, but also name, telephone number, e-mail address, messenger address, nickname, birth date, address, user ID, etc., of acquaintances registered in the phone book list of the user terminal device, schedule information stored in the calendar, photos and their metadata stored in the gallery. For convenience of explanation, hereinafter, various information provided by a user will be referred to as user information.

When shop information and user information is received, the server device 3800 stores the received information in the database 3930. In this case, the shop information and the user information may be stored separately, and the shop information may be stored for each shop, and the user information may be stored for each user.

The server controller 3920 may communicate with the user terminal device, the advertiser terminal device 2800, the advertisement providing server 2700 periodically and synchronize data.

In this state, the server controller 3920 may search a user terminal device which registers intrinsic information regarding an advertiser (S4030). As described above, the server controller 3920 may perform a search by comparing information input from various applications such as phone book application, calendar application, gallery application, etc. and shop information. If a subscriber is searched, the server controller 3920 may register subscriber information which stores intrinsic information regarding an advertiser in customer information database of the corresponding advertiser(S4040). For example, if contact information of an advertiser is included in the phone book of a specific subscriber, the server controller 3920 may add the telephone information of the subscriber in the customer information database of the advertiser. Accordingly, the advertiser may collect and manage customer information automatically. The collected customer information may be managed continuously in the server device 3900. For example, the server device 3900 may categorize the grade of customers based on Customer Relation Management : CRM) information of the customers automatically. The CRM information may include check-in points, coupon, invitation letter, stamp usage history, new subscription, settlement history, the number of posting comments, etc.

Meanwhile, in the above description, a user's telephone number is added automatically in customer information database of an advertiser, but the server device 3900 may perform other various operations as well. For example, if contact information of an advertiser is deleted from a user's phone book, the server device 3900 may delete the user information from the customer information database of the corresponding businessman.

In addition, according to an exemplary embodiment of providing an advertisement service based on a search method, the server controller 3920 receives a search word input through the phone book screen of each user terminal device through the communication interface 3910. Subsequently, the shop information corresponding to the search word is searched in the database 3930 and provided to a user terminal device. Not only a search word input through a phone book screen but also schedule information input through a calendar screen, photographed image, metadata, etc. may be received, and the matching shop information may be searched and provided.

The operation of a server device according to the above exemplary embodiment has been described above in detail, so further description will not be provided.

Meanwhile, as described above, the server device 3900 may be realized as the server device 200 or the advertisement providing server 2700 included in the network system of FIG. 27. If the server device 3900 is realized as the advertisement providing server 2700, the server device 3900 may provide various services such as advertisement information generating service, QR code generating service, evaluation service, etc. in association with the advertiser terminal device 2800. Hereinafter, the method of using such various services provided by a server device will be described in detail.

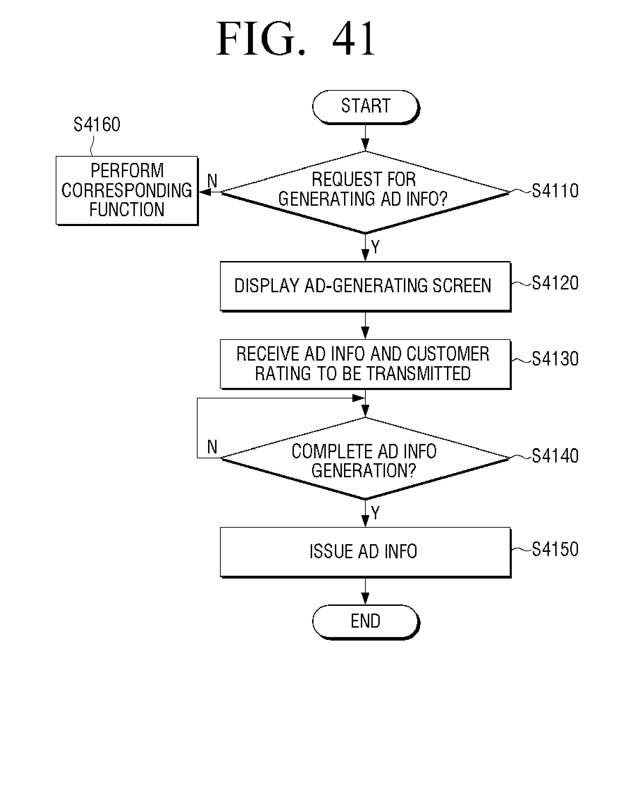

FIG. 41 is a flowchart provided to explain a method of issuing advertisement information according to an exemplary embodiment. Conventionally, in order to produce advertisement information, he or she has to make a request to an advertisement producing company, which takes considerable time and money and makes it difficult to check frequently whether the advertisement information is being made as an advertiser (or a businessman) wants. Accordingly, in this exemplary embodiment, the server device 3900 provides an advertisement generating screen so that an advertiser (or a businessman) may directly generate various advertisement information using his or her own terminal device, that is, the advertiser terminal device 2800. Hereinafter, a method of issuing advertisement information when the server device 3900 is realized as the advertisement providing server 2700 will be described.

According to FIG. 41, when the advertiser terminal device 2800 accesses the advertisement providing server 2700, the advertisement providing server 2700 transmits main page data. The advertiser terminal device 2800 may configure and display a screen using the main page data. A user of the advertiser terminal device 2800, that is, an advertiser may input an advertisement information generation request through the corresponding screen (S4110). When the advertisement information generation request is input, the user terminal device 100 transmits the request to the advertisement providing server 2700.

In response to the advertisement information generation request, the advertisement providing server 2700 transmits advertisement generating screen data to the advertiser terminal device 2800 so as to display the advertisement generating screen(S4120).

When the advertisement generating screen is displayed in the advertiser terminal device 2800, a businessman may perform various user interactions through the advertisement generating screen, and generate advertisement information in a desired from (S4130). Specifically, an advertiser may generate advertisement information through the advertisement generating screen and input information on a customer who will receive the advertisement information. The advertiser terminal device 2800 transmits the input information to the advertisement providing server 2700. When the advertisement information and the grade of a customer who will receive the advertisement information are received and an advertisement information generation completion command is input (S4130, S4140), the advertisement providing server 2700 terminates an advertisement information generating job. Subsequently, the generated advertisement information is issued (S4150). The advertisement information may be stored in the data server 220 and transmitted later, but the advertisement information may be transmitted directly to the user terminal device 100.

Meanwhile, if an advertisement information generation request is not input, the advertiser terminal device 2800 may perform a function corresponding to the interaction of an advertiser (or a businessman) (S4160). For example, the advertiser terminal device 2800 may generate a QR code according to a user's request, output detailed information screen regarding a businessman, output a statistics information screen regarding the usage of the advertisement information, or maintain a stand-by state.

As such, a businessman (or an advertiser) may issue mobile advertisement efficiently using a customer grade according to the customer information management method described in FIG. 40. In other words, a businessman (or an advertiser) may issue advertisement information to customers who store his or her telephone number or who uses his or her products frequently, that is, favorable subscribers, thereby maximizing an advertisement effect.

Meanwhile, in the above description, mobile advertisement is issued using the advertiser terminal device 2800. The advertiser terminal device 2800 may be one of user terminal devices rather than a terminal device having special configuration. In other words, an advertiser may issue mobile advertisement using various terminals having an Internet connection function, such as PC, laptop PC, mobile phone, tablet PC, etc.

Other than simple advertisement information, an advertiser may also generate special advertisement information such as QR code or barcode through a screen provided by the advertisement providing server 2700.

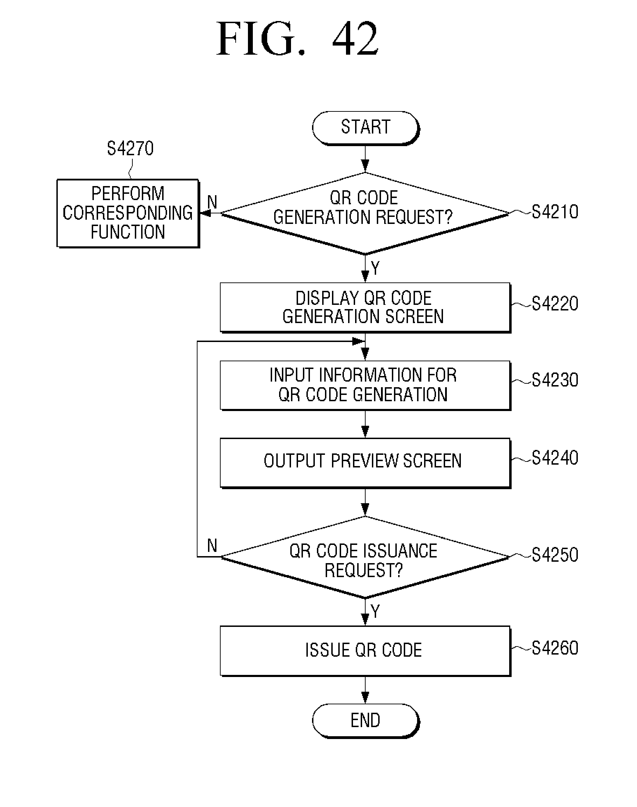

FIG. 42 is a flowchart provided to explain a method of generating a QR code for mobile advertisement according to an exemplary embodiment. Hereinafter, an example where an advertiser generates a QR code for mobile advertisement using his or her terminal device will be described. Referring to FIG. 42, when a QR code generation request is input(S4210), the advertiser terminal device 2800 displays a QR code generating screen (S4220). The QR code generation request may be input on a web page provided by the advertisement providing server 2700.

An advertiser may input various information for generating a QR code in the QR code generating screen (S4230). Specifically, the advertiser terminal device 2800 may receive information regarding a selection of a particular type of template from among pre-defined templates for issuing an QR code and information regarding a message to be inserted to the selected template. The templates may be provided by the advertisement providing server 2700.

When a template is selected and information regarding a message to be inserted is input, the advertiser terminal device 2800 may output a preview screen of a QR code to be generated (S4240).

In this state, if a QR code issuance request is received (S4250), the advertisement providing server 2700 generates a QR code (S4260). An advertiser may select various menus such as print menu, registration menu, storage menu, etc. to use the QR code. When the print menu is selected, the advertiser terminal device 2800 generates a QR code image corresponding to the preview screen. On the other hand, when the registration menu is selected, the advertisement providing server 2700 may store the generated QR code in the data server 220, or may directly transmit the generated QR code to a user terminal device to issue the QR code (S4260). When the storage menu is selected, the advertisement terminal device 2800 downloads a QR code image corresponding to the preview screen from the advertisement providing server 2700, and stores the QR code image in its own storage.

However, if a QR code issuance request is not input, the advertiser terminal device 2800 may return to the step S4220. In other words, when an advertiser changes a template or message information, the advertiser terminal device 2800 may change and output a preview screen according to the changed information, and when an advertiser does not change a template or message information, the advertiser terminal device 2800 may return to step S4220. In other words, when an advertiser changes a template or message information, the advertiser terminal device 2800 may change and output a preview screen according to the changed information, and when an advertiser does not change a template or message information, the advertiser terminal device 2800 may display the previous screen.

Meanwhile, if a QR code generation request is not received, the advertiser terminal device 2800 may perform a function according to an interaction of an advertiser (or a businessman) (S1913). For example, the advertiser terminal device 2800 may issue advertisement information according to a request of an advertiser (or a businessman), output a businessman detailed information screen, output a statistics information screen regarding the usage of advertisement information, or maintain a standby state.

As described above, an advertiser may directly obtain a QR code using the advertisement providing server 2700. The user may print and post the obtained QR code on his or her shop to attract customers. As a QR code can be generated immediately using the advertisement providing server 2700, an advertiser may attract more customers by coding available information such as various coupons, stamp cards, events, invitation letters, etc. or an alarm message thereof to a QR code according to his or her sales policy. In the above exemplary embodiment, a QR code is issued using the advertiser terminal device 2800, but the present invention is not limited thereto. For example, an advertiser may issue a QR code using various terminals with an Internet connection function, such as PC, laptop PC, mobile phone, tablet PC, etc.

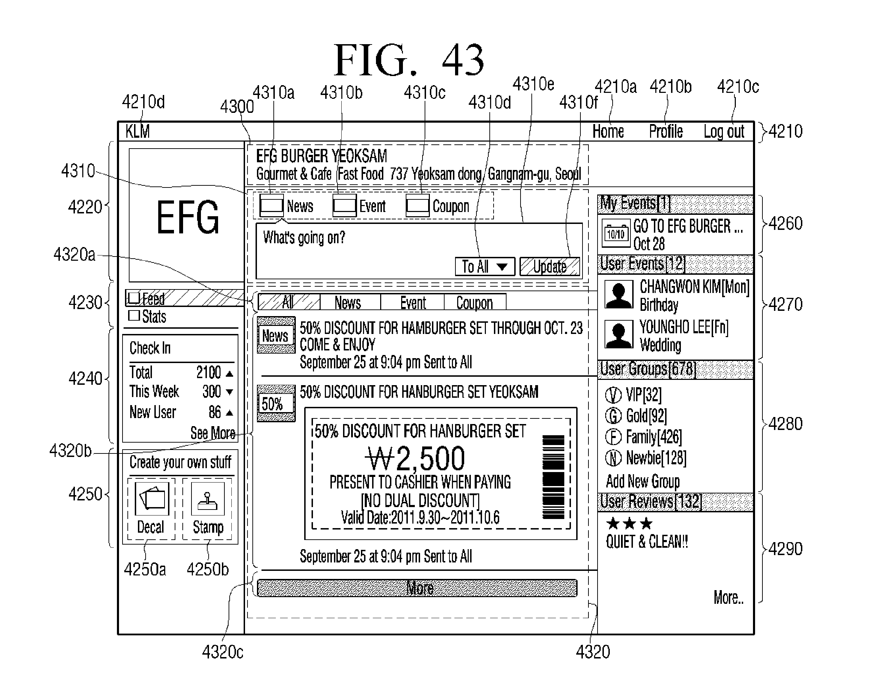

In addition, the advertisement providing server 2700 may issue various advertisement information. FIGS. 43 to 54 are screen exemplary views provided to explain a method of issuing advertisement information according to various exemplary embodiments.

According to FIGS. 43 to 54, an advertiser may connect to a web site which provides a web service for issuing and managing advertisement information. In this regard, an advertiser may subscribe to the web site in advance, and input log-in information which was registered at the time of subscribing to the web site.

When connection to a web server is completed, the advertiser terminal device 2800 may display an initial screen of a web page as illustrated in FIG. 43. The initial screen may include a web service logo display area 4210, an advertiser profile image display area 4220, a first menu area 4230, a check-in information display area 4240 for displaying the number of check-ins based on a predetermined standard (all/ this week/ new member), a second menu area 4250, a first event display area 4260 for displaying an on-going event, a second event display area 4270 for displaying customer information where an event is scheduled within a predetermined period (for example, one week), a grade display area 4280 for displaying customer information for each grade, a review display area 4290 for displaying review information registered by a user, an advertiser information display area 4300 for displaying advertiser information, an advertisement information generation area 4310 for displaying a mobile advertisement generation menu, and a history display area 4320 for displaying a mobile advertisement issuance history.

The web service logo display area 4210 may include a home menu 4210a requesting to display an initial screen, a profile information view menu 4210b requesting to output a profile information screen registered by an advertiser, a log-out menu 4210c requesting to log out a web service, and a logo 4210d of a web service. The first menu area 4230 may include an issuance list view menu 4230a and a statistics information view menu 4230b. The second menu area 4250 may include a QR code generation menu 4250a requesting to output a QR code generation screen and a stamp generation menu 4250b requesting to output a stamp generation screen.

The history display area 4320 in the screen of FIG. 43 displays advertisement information issued by an advertiser previously, and may include an alignment menu 4320a including an alignment standard such as view all, view news, view invitation letter, and view coupon, a mobile advertisement display area 4320b for displaying advertisement information corresponding to the selected alignment standard so that the most recent advertisement information is displayed first, a further view menu 4320c requesting to further output mobile advertisement which has not been output on the screen, etc. The advertisement information generation area 4310 may include a news generation menu 4310a requesting to output a new generation screen from among advertisement information, an invitation generation menu 4310b requesting to output an invitation generation screen, and a coupon generation menu 4310c requesting to output a coupon generation screen. If the news generation menu 4310a is input, the advertiser terminal device 2800 may output a speech bubble 4310d for inputting a news content in the advertisement information generation area 4310 as illustrated in FIG. 43. The speech bubble 4310d includes a slide menu 4310e for selecting a customer grade for news transmission and an update menu 4310f for requesting issuance of news. In addition, a guidance message of "What's going on?" is displayed in the speech bubble before news is input. When news is input, the guidance message is removed. In addition, the update menu 4310f may be inactivated (not selectable) before news is input, and may be activated at the time when news is input.

Meanwhile, if the invitation generation menu 4310b is input, the advertiser terminal device 2800 may output an invitation generation screen 4305.

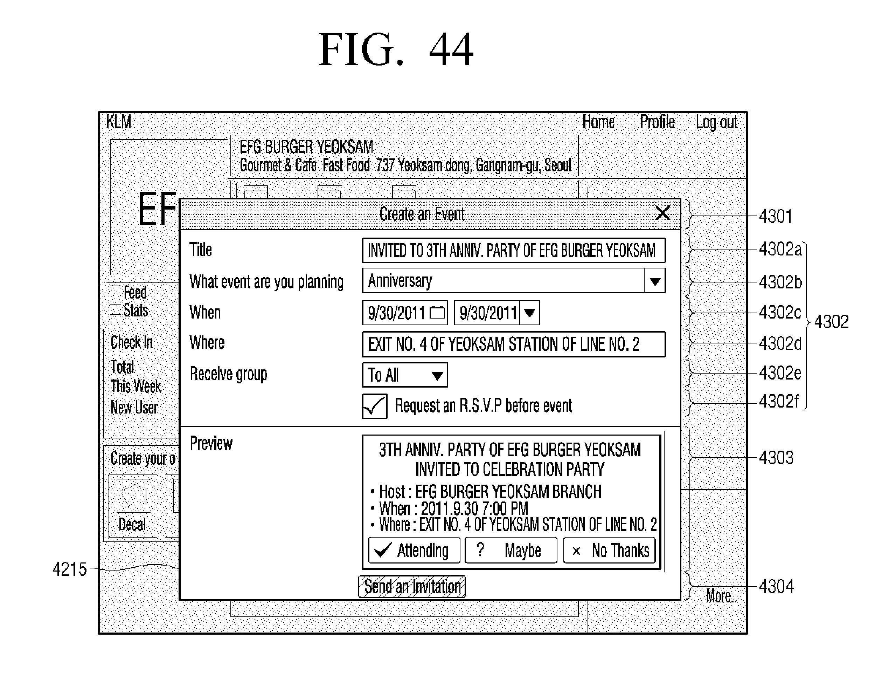

FIG. 44 illustrates an example of the invitation generation screen. According to FIG. 44, the invitation generation screen 4215 may be output in the form of a pop-up window, but is not limited thereto. For example, the invitation generation screen 4215 may be output on full screen.

The invitation generation screen 4215 may include a window title display area 4301, an invitation information input area 4302, a preview display area 4303, and an invitation transmission menu area 4304. The window title display area 4301 may include a phrase indicating a pop-up window for generating an invitation (for example, 'create an invitation) and an end button 4301a. The invitation information input area 4302 may include an invitation title input field 4302a for inputting an invitation title, a date selection field 4302c for inputting a date for invitation, a place input field 4302d for inputting place information, and a reply function selection field 4302f for selecting whether to add a reply function to the invitation. The preview display area 4303 may display a preview image of invitation based on information input to the invitation information input area 4302. The invitation transmission menu area 4304 may include a transmission menu for requesting to transmit an invitation to a user terminal device of a customer in a grade which is selected in the grade selection field 4302f.

Meanwhile, if the coupon generation menu 4310c is input, the advertiser terminal device 2800 may output a coupon generation screen.

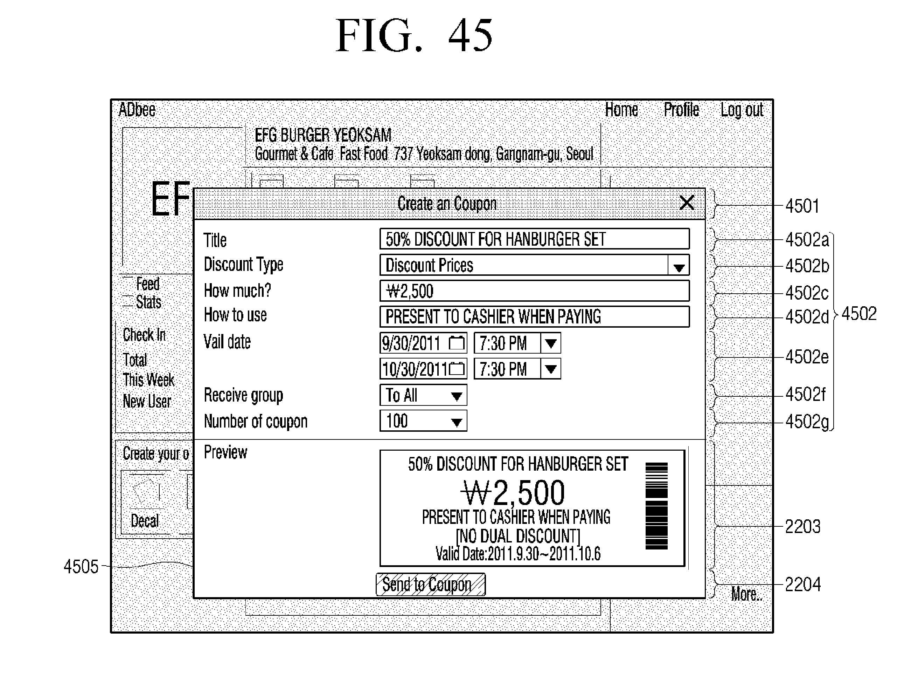

FIG. 45 illustrates an example of the coupon generation screen. According to FIG. 45, the coupon generation screen 4505 may be output in the form of a pop-up window, but is not limited thereto. For example, the coupon generation screen 4505 may be output on full screen.

The coupon generation screen 4505 has a similar shape with the invitation generation screen 4215. In other words, the coupon generation screen 4505 may include a window title display area 4501, a coupon information input area 4502, a preview display area 4503, and a coupon transmission menu area 4504. The coupon information input area 4502 may include a coupon title input field 4502a for inputting a coupon title, a coupon type selection field 4502b for selecting the type of coupon, a discount information input field 4502c for inputting discount information, a method input field 4502d for inputting a method of using a coupon, an expiration period setting field 4502e for setting expiration period of a coupon, a grade selection field 4502f for selecting customers for issuance of coupons and a coupon number field 4502g for setting the number of coupons to be issued.

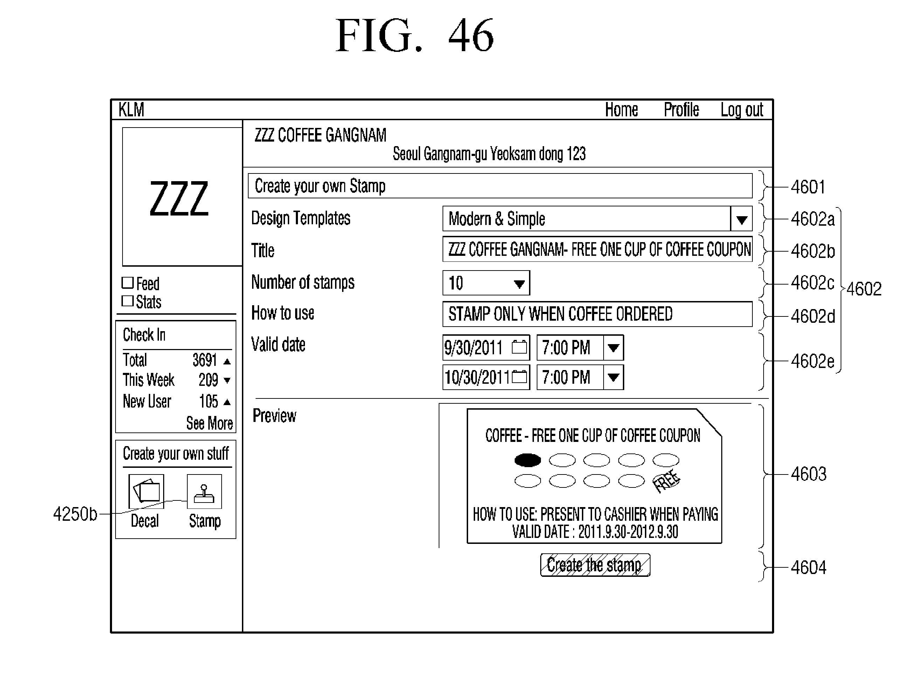

FIG. 46 illustrates an example of a stamp generation screen. According to FIG. 46, if the stamp generation menu 4250b is input, the advertiser terminal device 2800 may display a stamp generation screen. The stamp generation screen may be displayed on one area of a web page as illustrated in FIG. 46, but is not limited thereto. For example, the stamp generation screen may be displayed in the form of a pop-up window.

The stamp generation screen may include a title display area 4601, a stamp information input area 4602, a preview display area 4603, and a stamp generation menu area 4604. The stamp information input area 4602 may include a template selection field 4602a for selecting a design template of a stamp, a stamp title input field 4602b for inputting a stamp title, a stamp number setting field 4602c for setting the number of stamp completion, a method input field 4602d for inputting a method of using a stamp, and an expiration period setting field 4602e for setting a stamp expiration period. The preview display area 4603 may display a stamp image to be generated in real time based on information which is set in the stamp information input area 4602. The stamp generation menu area 4604 includes a stamp generation menu requesting to generating a stamp. The stamp generation menu is inactivated before a content is input in the stamp information input area, and activated when a content is input in the stamp information input area.

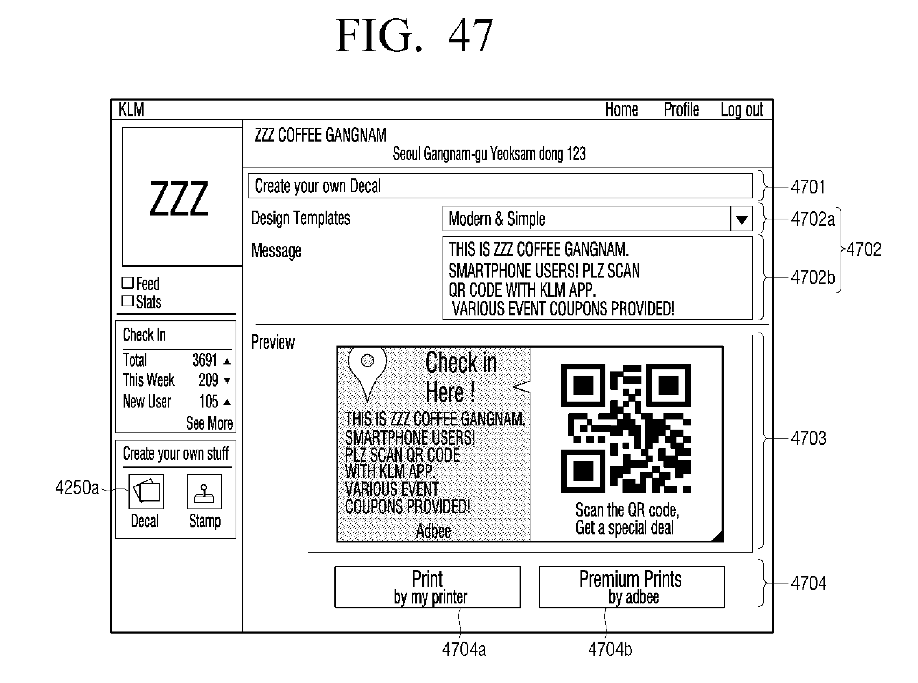

FIG. 47 illustrates an example of a QR code generation screen. According to FIG. 47, when the QR code generation menu 4250 is input, the advertiser terminal device 2800 may output a QR code generation screen. The QR code generation screen may be displayed on one area of a web page as illustrated in FIG. 47, but is not limited thereto. For example, the QR code generation screen may be displayed in the form of a pop-up window.

The QR code generation screen may include a title display area 4701, a QR code information input area 4702, a preview display area 4703, and a QR code generation menu area 4704. The QR code information input area 4702 may include a template selection field 4702a for selecting a design template of a QR code and a message input field 4702b for inputting an advertisement phrase. The preview display area 4703 may display a QR code image to be generated in real time based on information which is input in the QR code information input area 4702. The QR code generation menu area 4704 includes a first print menu 4704a requesting to print a QR code through a printer (not shown) which is connected to the advertiser terminal device 2800 and a second print menu 4704b requesting to store a QR code in the form of image.

As described above, an advertiser may directly generate various advertisement information such as invitation, coupon, stamp coupon, QR code, etc. on the web page provided by the advertisement providing server 2700. Accordingly, the advertiser may establish and perform various sales strategies Meanwhile, the advertiser may check the usage status of advertisement information through the advertisement providing server 2700 and the server device 200.

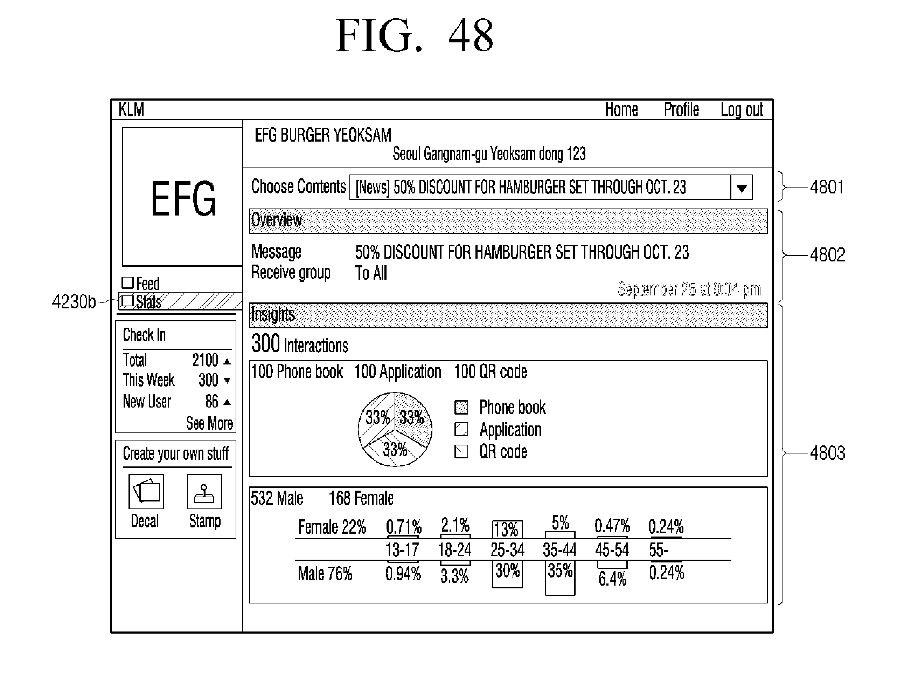

FIGS. 48 to 51 are screen exemplary views for displaying statistics information regarding the usage status of advertisement information according to an exemplary embodiment.

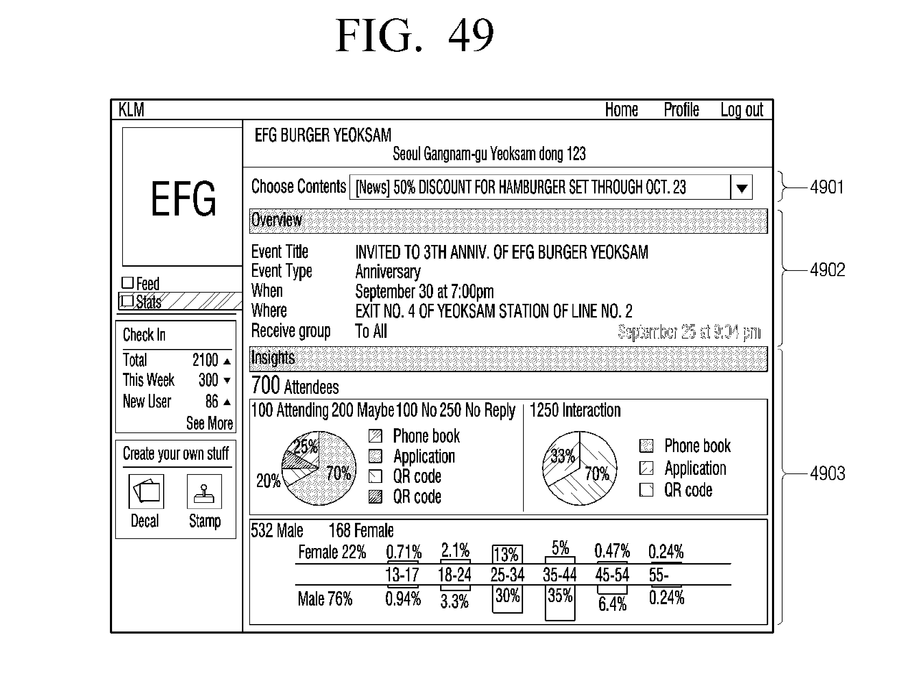

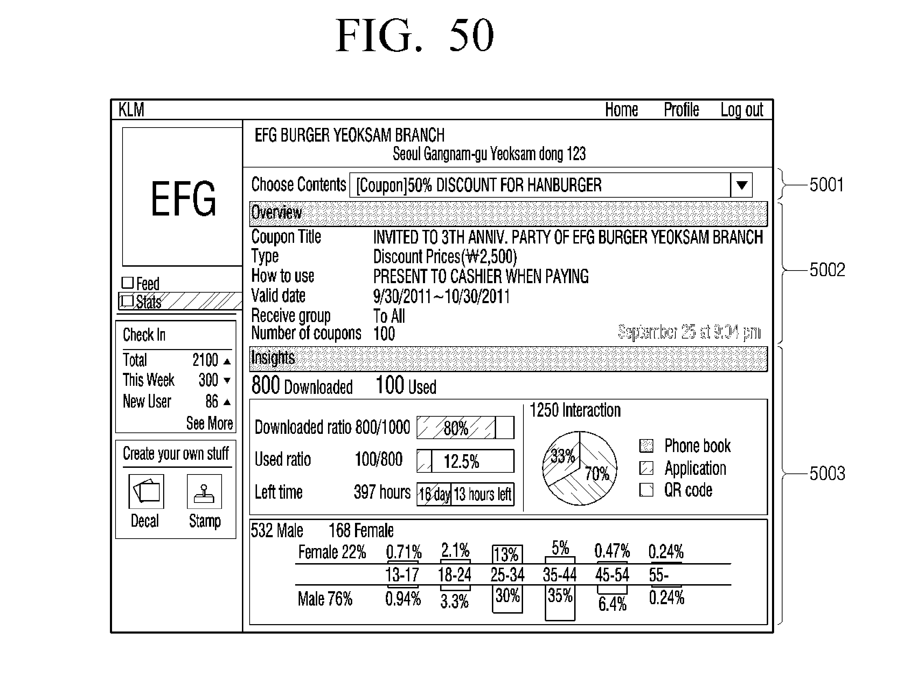

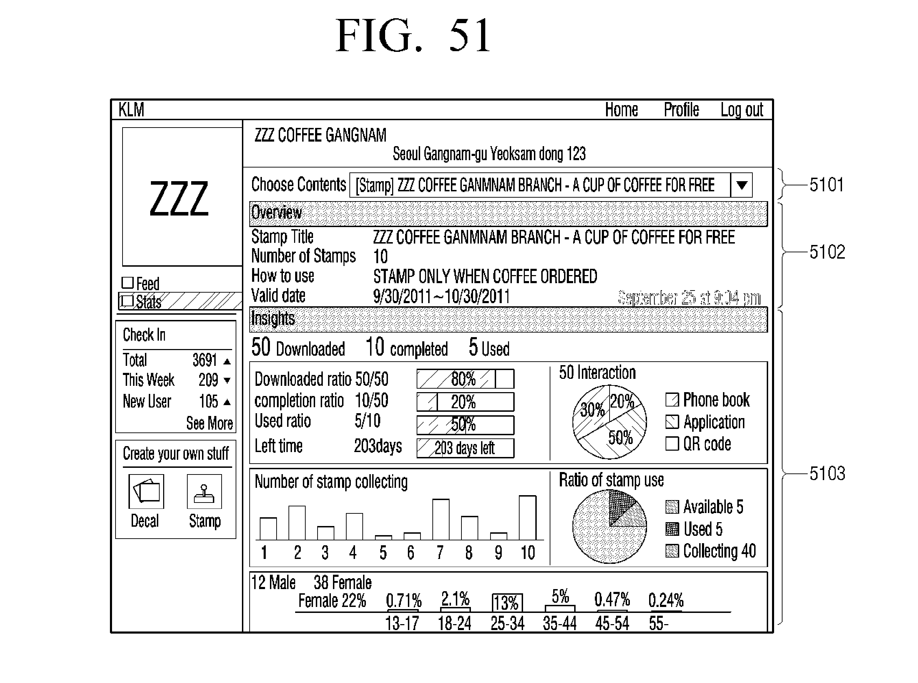

Referring to FIGS. 48 to 51, when the statistics information view menu 4230b is input, the advertiser terminal device 2800 may output a statistics information screen. The statistics information screen displays an analysis result regarding usage of issued mobile advertisement (news, invitation, coupon, and stamp) for a predetermined time in the form of graph. Herein, FIG. 48 is a screen exemplary view illustrating statistics information regarding news, FIG. 49 is a screen exemplary view illustrating statistics information regarding invitation, FIG. 50 is a screen exemplary view illustrating statistics information regarding coupon, and FIG. 51 is a screen exemplary view illustrating statistics information regarding stamp.

The statistics information view screen may include a mobile information selection area 4801, 4901, 5001, 5101 for selecting mobile information of which statistics information is to be viewed, an overview area 4802, 4902, 5002, 5102 for displaying brief information regarding selected mobile advertisement, and an analysis information display area 4803, 4903, 5003, 5103 for displaying analysis information.

The mobile advertisement selection area 4801, 4901, 5001, 5101 is provided as a drop-down menu, and may output a list of mobile advertisement according to its registration order.

The analysis information display area 4803, 4903, 5003, 5103 displays various analysis information regarding mobile advertisement selected in the mobile advertisement selection area 4801, 4901, 5001, 5101 using a graph. The analysis information may include the total number of customers who receive mobile advertisement, a distribution graph representing a path of receiving mobile advertisement (phone book, advertisement application, QR code, etc.), the age of customers who receive mobile advertisement, a gender distribution graph, etc. In addition, the analysis information regarding an invitation may include a distribution graph representing attend/delay/not-attend, the analysis information regarding a coupon may include a download ratio, usage ratio, remaining period, etc. and the analysis information regarding a stamp may include a graph representing download ratio, completion ratio, usage ratio, remaining period, etc. The analysis information may be displayed in various forms using a vertical bar graph, a horizontal bar graph, a circular graph, a broken-line graph, etc.

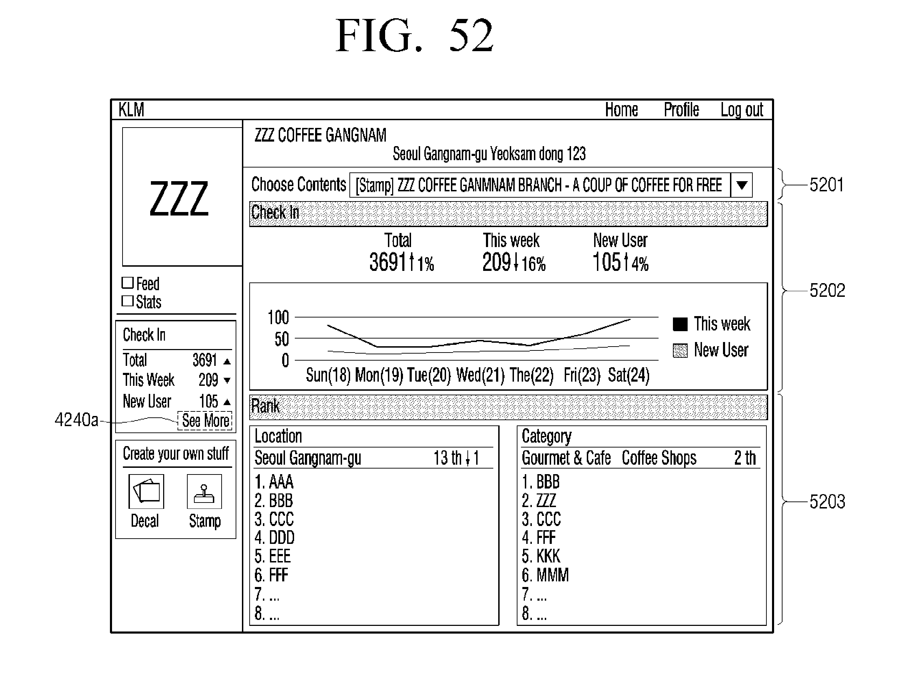

FIG. 52 illustrates a screen of displaying detailed information regarding check-in information. Referring to FIG. 52, when a detailed information view menu 4240a regarding check-in information is input, the advertiser terminal device 2800 may output a detailed information screen regarding check-in information. The detailed information screen may include a period setting area 5201 for setting a period for collecting statistics regarding check-in information, a check-in information display area 5202 for displaying information regarding the number of check-ins during the entire period, the number of check-ins for a selected period, and the number of check-ins of new customers, and a ranking information providing area 5203 for displaying rankings for region and business based on the number of check-ins. The check-in information display area 5202 may display check-in information using number and graph. FIG. 52 illustrates an example of displaying the number of check-ins for each date during a selected period using a broken-line graph. Meanwhile, if a mouse is located at a point where a broken-line graph is bent or the mouse touches the point, a pop-up window (not shown) for displaying the corresponding date and the number of check-ins may be output. In addition, if a specific date is selected (clicked or touched by a mouse) in the horizontal axis of a broken-line graph, a bar graph (not shown) representing the number of check-ins by time may be output in the form of a pop-up window.

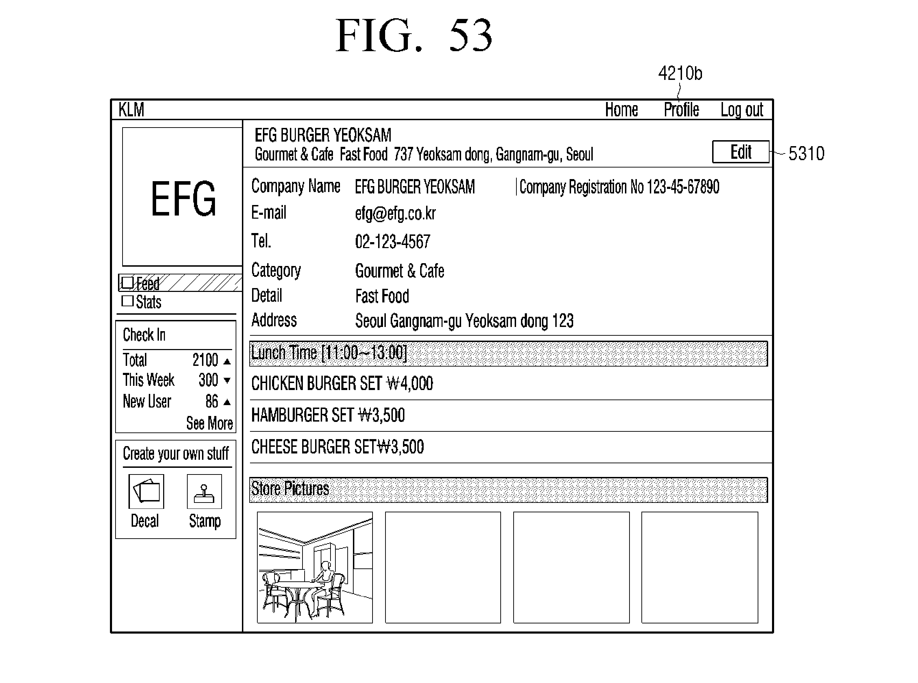

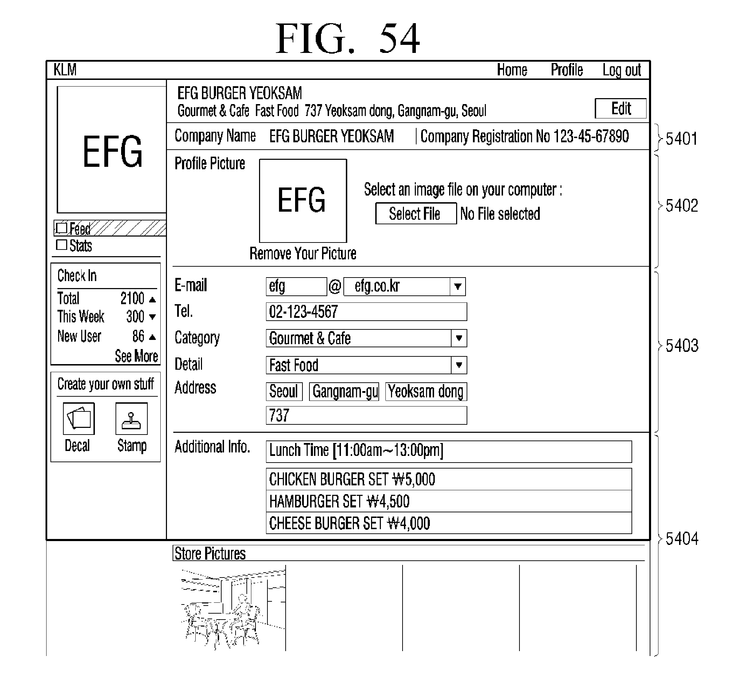

FIGS. 53 and 54 are screen exemplary views for managing profile information of an advertiser.

Referring to FIGS. 53 and 54, if the profile information view menu 4210b is input (clicked or touched by a mouse), a profile information screen of an advertiser may be output. The profile information screen may include the name of a businessman and a business registration number as illustrated in the screen exemplary view of FIG. 53. In addition, the profile information screen may include basic information such as e-mail address, telephone number, business category, detailed business, address, etc. and additional information such as operation time, menu, price, interior photo, etc.

If an editing menu 5310 is input in the profile information screen, the profile information screen may be changed to an editing screen of profile information. The profile information editing includes a businessman name and business registration number display area 5401 as illustrated in the screen exemplary view of FIG. 54. In this case, the businessman name and the business registration number cannot be edited. In addition, the profile information editing screen may include an image change area 5402, a basic information editing area 5403, and an additional information editing area 5404. Meanwhile, the blurred portion in the screen exemplary view of FIG. 54 indicates a portion which is not displayed currently on the screen but will be output during scrolling.

As described above, according to various exemplary embodiments, a user may be provided with advertisement information from the server device 200, the advertisement providing server 2700, etc. using various methods, and a businessman (in other words, an advertiser) may obtain various advertisement effects using such server devices.

In this case, various applications stored in a user terminal device may be interlocked with the server device 200. For example, a phone book application can be utilized, and a user may store contact information of a desired shop or other shops in a phone book in advance. When the user wishes to make a phone call to a specific shop, the user executes a phone book function and searches desired contact information. If the user has not stored the contact information in advance, the user may user a service for providing contact information or should contact an acquaintance to ask for the contact information. In order to avoid such inconvenience, a server device may register contact information of each of the connected user terminal devices in advance, and provide contact information whenever each of the user terminal devices are in need of the contact information.

In addition, a user may record only intrinsic information regarding a specific businessman whose advertisement information that the user wishes to receive in a phone book. Accordingly, the user may not receive all advertisement information indiscriminately and instead, may check only advertisement information from a businessman of interest selectively.

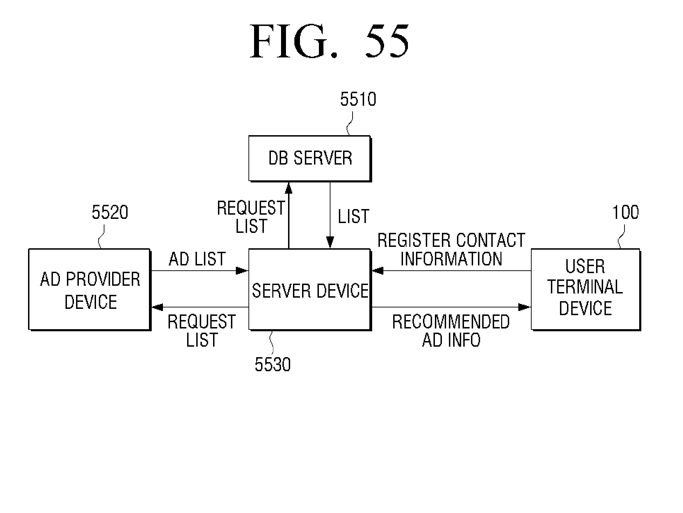

Meanwhile, other than a network system of FIGS. 1 and 27, a network system may be configured as shown in FIG. 55. According to FIG. 55, an advertisement system includes a DB server 5510, an advertisement provider apparatus 5520, a server device 5530, and a user terminal device 100.

The DB server 5510 stores various information which is transmitted from user terminal devices 100.

The advertisement provider apparatus 5520 stores various advertisement information. The advertisement provider apparatus 5520 may be provided with advertisement information from an advertisement manufacturer or an advertiser. The advertisement provider apparatus 5520 may transmit various information using a protocol such as Hyper Text Transfer Protocol Security (HTTPS).

When various intrinsic information including contact information is registered from the user terminal device 100, the server device 5530 may store the registered contact information in the DB server 5510. Subsequently, when the user terminal device 100 transmits a search word, the server device 5530 may request a contact list and an advertisement list corresponding to the search word to the DB server 5510 and the advertisement provider device 5520 and receive the lists. The server device 5520 transmits the received lists to the user terminal device 100.

As described above, a server device may be configured in various forms, and may provide an advertisement service to a user terminal device.

Meanwhile, in the above exemplary embodiment, a network system which provides an advertisement service and other additional services and apparatuses which are included in the system have been descried. In addition, a network system may provide a settlement service using a user terminal device and a purchase history management service. Such services can be performed using a program such as a wallet program. The wallet program refers to an application for performing a mobile settlement. The wallet program may be referred to as other various names such as a smart wallet, an electronic wallet, a settlement application, a shopping management application, etc. but in this specification, the wallet program will be referred to as a wallet program. Hereinafter, an exemplary embodiment of using a wallet program will be described in detail.

### < Exemplary embodiment which illustrating use of a wallet program >

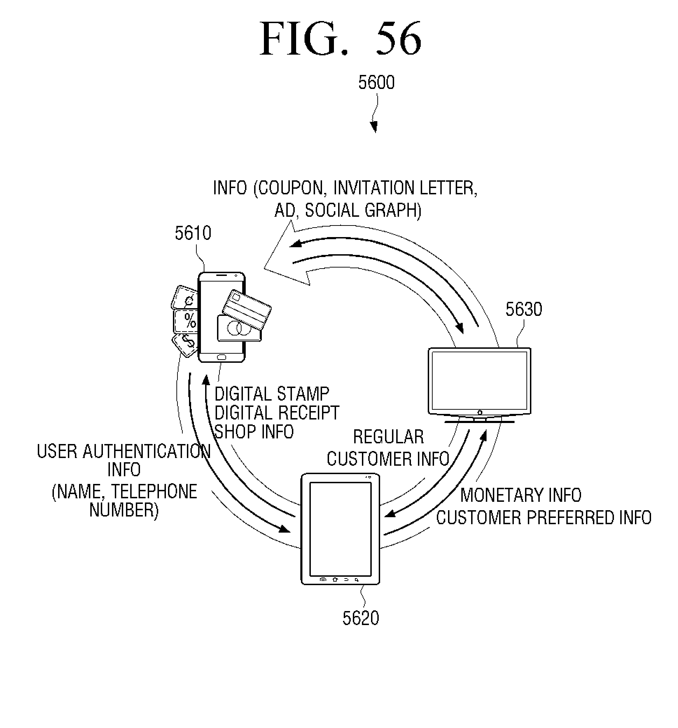

FIG. 56 is a view provided to explain a configuration and an operation of a network system according to another exemplary embodiment. According to FIG. 56, a network system 5600 includes a user terminal device 5610, a shop management system 5620, and a server device 5630.

The user terminal device 5610 may be provided various information from the server device 5630 and may register information. Specifically, as described above in various exemplary embodiments, the user terminal device 5610 may tranceive an alarm message, or an advertisement message such as a coupon, an invitation letter, contact information, a social graph, etc.

The shop management system 5620 refers to a system for comprehensively managing an order, a settlement, an advertisement, management of customer, etc. at a shop which provides a variety of goods or services. The shop management system 5620 may be provided with a variety of settlement devices such as a card reader, a barcode reader, a QR code recognizer, a database, etc.

The server device 5630 is a device for collecting information not just from the shop management system 5620 but also from various external devices and managing the collected data. For instance, the server device 5630 may be provided with an advertisement from an advertiser and an advertisement company and then register the advertisement. The server device 5630 may transmit a variety of alarm messages to the user terminal device 5610 based on the relationship between user terminal devices. For instance, in case where a first user registers advertisement information, the server device 5630 may transmit an alarm message to a user terminal device which stores information on the first user and which receives an input of searching words. The alarm message refers to a message provided to inform an issuance or a use of a variety of advertisement, a coupon, an invitation letter, etc.

The user terminal device 5610 may display a variety of alarm messages which the server device 5630 transmits or advertisement information such as available information. A network system in FIG. 56 may provide advertisement service in a way as explained above in various exemplary embodiments. The user terminal device 5610 may use the received advertisement information and display an alarm message on a phone book screen or a calendar screen, a gallery screen or a separate application execution screen, etc. A display screen is illustrated in detail in above-described exemplary embodiments and thus the explanation thereof will be omitted. A user may select an alarm message which a user is interested in. When selection of an alarm message is made, the user terminal device 5610 may receive available information corresponding to the selected alarm message from the server device 5630 or other external devices.

Available information refers to information which is directly needed for using a service which is guided by the alarm message. For instance, in case where a guidance message on issuance of a discount coupon is selected, information needed for using a real discount coupon service such as a discount coupon image, discount coupon number, a barcode, etc. may be directly downloaded. The user terminal device 5610 registers the downloaded available information with a wallet program. When the corresponding coupon is issued by the shop management system 5620, in case where the user terminal device 5610 enters the corresponding shop or tries performing a settlement at the shop, the wallet program activates the coupon issued by the shop management system 5620 and reflects the coupon to the settlement. For instance, the user terminal device 5610 transmits the coupon number to the shop management system 5620, thereby allowing a settlement to be performed with a discounted price. The shop management system 5620 determines that a coupon issued by the shop management system 5620 is used in its own shop, and thus, may check an advertisement effect. Further, the shop management system 5620 may also conduct effective user management.

In addition, the user terminal device 5610 may receive a digital stamp, an electronic receipt, shop information, etc. which are issued by the shop management system 5620.

Meanwhile, various information may be tranceived between the shop management system 5620 and the server device 5630. That is, the server device 5630 may provide information on regular customers, adjacent customers. etc. to the shop management system 5620, and the shop management system 5620 may transmit to the server device 5630 monetary information on sales, product price, etc. and major information on product sales, customer-preferred information, shop location information, advertisement content, etc.

The shop management system 5620 may generate event information, etc. by using a tool for generating a coupon, etc. and register the generated information with the server device 5630. As explained above in the exemplary embodiment, a website which is provided from an external server may be used to generate a coupon, etc. In this case, various advertisement information such as a coupon, a stamp card, an invitation letter, an event card, etc. may be directly delivered from the external server to the server device 5630. The information registered with the server device 5630 may be transmitted to the user terminal device managed by the server device 5630 in a form of an alarm message, as described above.

As described above, the user terminal device 5610 may provide information provided through the shop management system 5620 or the server device 5630 such that the provided information may be used by a separate application such as a wallet program. That is, the wallet program may share information used by other applications such as a phone book program, a calendar program, or a gallery program, and thus may use the shared information for a settlement, purchase history management, etc. Accordingly, the advertisement which is provided by the shop management system 5620 or a server device 5630 may lead to a product purchase and a settlement.

As described above, the user terminal device 5610 may use an alarm message which is displayed on an execution screen of a variety of applications such as a phone book screen or a calendar screen and issue available information such as a coupon that can be actually used, an event card, etc. Accordingly, the information may be used for a settlement.

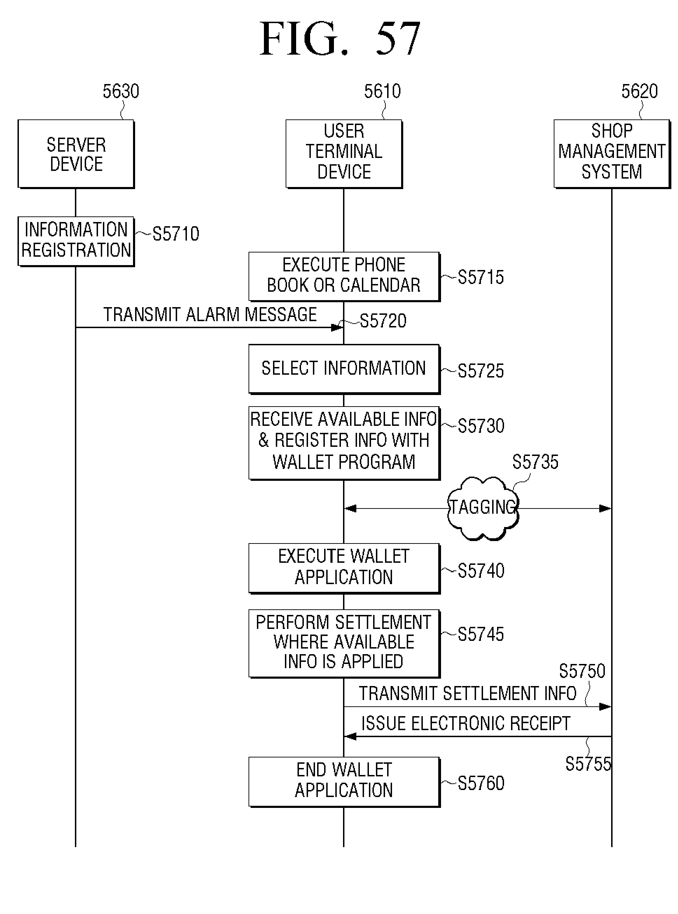

FIG. 57 is a timing diagram provided to explain a settlement method according to such exemplary embodiment. According to FIG. 57, the server device 5630 may register information provided from various external devices (S5710). The registered information may include not only alarm information but also coupon information, point card information, stamp card information, event information, an invitation letter, and contact information, etc.

The user terminal device 5610 may execute a program such as a phone book or a calendar (S5715). The phone book or the calendar program may display not only information stored in the user terminal device 5610 but also the alarm message transmitted from the server device 5630.

That is, as explained in various exemplary embodiments, in case where an advertisement information provided from a predetermined advertiser is registered, or information which corresponds to searching words which is inputted onto a phone book screen is searched, the server apparatus 5630 may transmit the corresponding alarm message to the user terminal device 5610 (S5720). Accordingly, not only contact information or schedule information which is inputted into the user terminal device 5610 but also various advertisement information, an alarm message on a coupon, event information, invitation letter information, etc. may be displayed on various program execution screens such as a phone book screen, a calendar screen, a gallery screen, etc.

A user may select an alarm message on a phone book screen, a calendar screen, a gallery screen, etc (S5725). When a user selects one alarm message, the user terminal device accesses the server device 5630 which provides the selected alarm message and receives available information which corresponds to the alarm message. The received available information may be provided to the wallet program or other predetermined programs and be registered (S5730). Specifically, available information needed for practically being provided with various services such as a coupon, a stamp card, a discount event, a free coupon event, etc. may be registered with the wallet program.

Then, a user may visit a shop which carries the corresponding product in person. When a settlement device which is provided with the shop management system is tagged (S5735), a wallet program is executed (S5740). The wallet program may be automatically executed or executed manually by a user touching an icon.

When the wallet program is executed, the wallet program applies the registered available information and performs a settlement (S5745). For instance, when a discount coupon is registered, the wallet program transmits the corresponding coupon information to the shop management system 5620. Accordingly, the shop management system 5620 requests a settlement for the discounted price, and the wallet program uses the settlement means selected by the user and performs a settlement for the requested price. Or, in case where available information on an event where a discount service is provided within a predetermined time period is registered, the wallet program presents the available information to the shop management system 5620. Accordingly, when the timing of a settlement falls within the time period which is recorded according to the available information, the shop management system 5620 performs a settlement process with a discounted price.

As described above, the user terminal device 5610 may transmit the settlement information to the shop management system 5620 and complete the settlement (S5750). The settlement information may be transmitted through an NFC tagging method or other wireless communication method. The settlement information may include a name of a credit card, a credit card number, valid date, user authentication number, a discount coupon number, content of a discount coupon, a predetermined content of an event, a settlement price, user information, etc.

When a settlement is performed, the shop management system 5620 may issue an electronic receipt(S5755). The issued electronic receipt may be registered with a wallet program and be managed. When an issuance of the electronic receipt is completed, the wallet program may be automatically over or be over according to a user's selection (S5760).

According to this exemplary embodiment, the advertisement which is provided by a phone book or a calendar program may continually lead to a product purchase and settlement. Subsequently, convenience in shopping improves significantly.

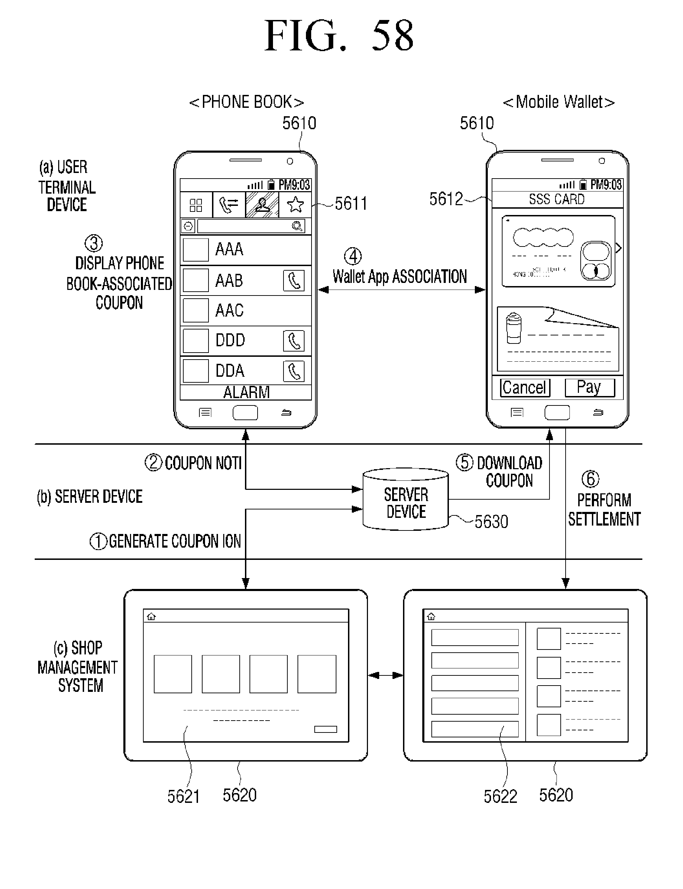

FIG. 58 is a view provided to explain in detail an operation of a network system related to an alarm message transmission and available information issuance.

(A) of FIG. 58 illustrates an operation of the user terminal device 5610, (B) of FIG. 58 illustrates an operation of a server device 5630, and (C) of FIG. 58 illustrates an operation of a shop management system 5620. As described above, available information may exist in various forms as well as a coupon. However, FIG. 58 takes an example of a coupon issuance.

The shop management system 5620 uses a coupon generating tool (Authoring tool) to generate a coupon (□). The generated coupon is registered with the server device 5630.

When a specific event occurs, the server device 5630 notifies the user terminal device 5610 of a coupon issuance (□). Specifically, when a phone book or a calendar application is executed, the server device 5630 may automatically push an alarm message notifying an issuance of a coupon according to a predetermined condition or notify a guidance message for notifying a coupon corresponding to the searching word when a user performs a search. FIG. 58 illustrates a case where an issuance of a coupon is notified to a phone book program. However, the present inventive step is not limited thereto, and as described above, coupon issuance may be notified through an execution screen of various programs.

The user terminal device 5610 displays the received alarm message on a screen 5611 of the phone book. Subsequently, the user terminal device 5610 may be associated with the phone book to display information on a coupon which is available to a user (□).

Then, when an event such as the displayed alarm message is selected, the user terminal device 5610 associates a wallet program with a phone book program (□). That is, the server device 5630 which transmits an alarm message is accessed and a coupon which can be actually used, i.e., available information, may be downloaded. The downloaded coupon is registered with the wallet program. Consequently, information on the downloaded coupon is displayed on the wallet-executing screen 5612 of the user terminal device 5610.

The user may use the wallet program of the user terminal device 5610 and perform a settlement with respect to the shop management system 5620 (□). The wallet program may be executed automatically or manually. When a manual execution option is set, in case where the user selects an icon regarding the wallet program, the wallet program is executed. The user may first searches available information available on the execution screen of the wallet program and then may use the information for the purpose of performing the settlement. Meanwhile, an automatic execution option is set, in case where the user tags the user terminal device 5610 with respect to the shop management system 5620, the wallet program is automatically executed. Accordingly, information on the shop management system 5620 is used and available information available at the shop is identified. The identified available information is used to perform a settlement. According to another exemplary embodiment, in case where the available information includes a shop location information, etc., the user terminal device may compare the current location information calculated by a GPS receiver (not shown) with the shop location information and determine whether to automatically execute the wallet program. Besides, a condition for automatic execution may be set variously according to an exemplary embodiment.

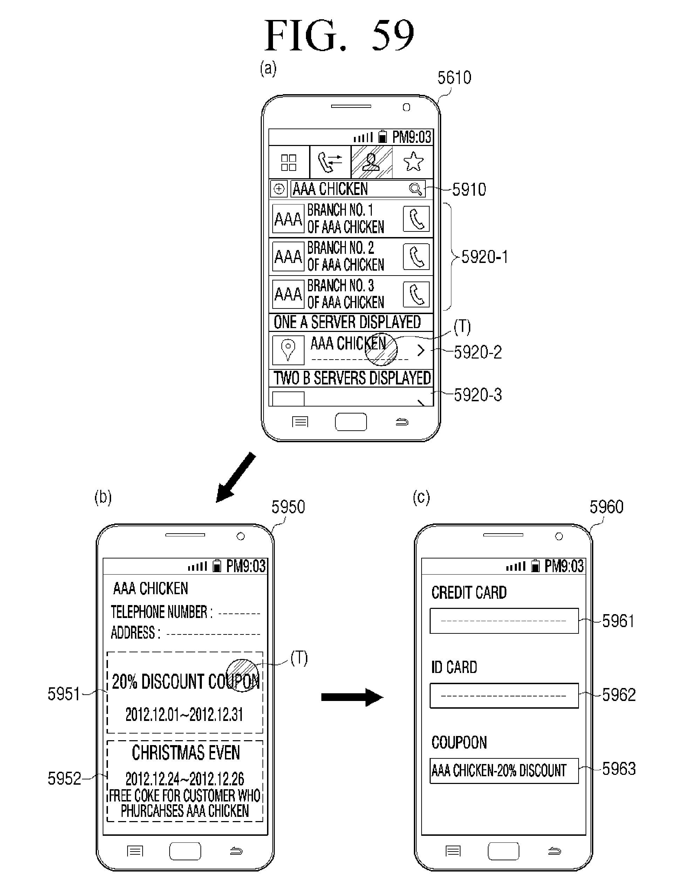

FIG. 59 is a view provided to explain a process of selecting an alarm message displayed on a phone book screen, a calendar screen, a gallery screen, etc. and downloading available information.

(A) of FIG. 59 illustrates that a user terminal device 5610 displays a phone book screen which includes various alarm messages 5910-1∼5910-3. Here, when one alarm message 5920-2 is selected, the user terminal device 5610 displays a screen for downloading various available information which corresponds to the alarm message 5920-2. (B) of FIG. 59 is an example illustrating how such screen is composed. According to (B) of FIG. 59, information on a coupon, an event, etc. may be displayed on a screen of the user terminal device 5610. Here, when a user selects one information 5951, the user terminal device 5610 receives available information on the information which is received from the server device 5630. The received available information is registered with the wallet program. Accordingly, as illustrated in (C) of FIG. 59, in addition to a predetermined credit card 5961 or an ID card 5962, a newly issued available information, i.e., a coupon 5963, may be displayed on an execution screen 5960 of the wallet program.

As described above, an application such as a phone book program, a calendar program, a gallery program, etc. may provide the wallet program with the information which is received from external devices, such that the information can be processed to be used for shopping service. Such phone book program, calendar program, gallery program, etc. may be installed in a non-transitory computer readable medium which is provided to a user terminal device to perform such operations.

By way of example, a phone book program which is installed in a non-transitory computer readable medium may sequentially perform a step of displaying an execution screen of an application which includes an alarm message received from a server device, i.e., a phone book screen, in case of an alarm message being selected, downloading available information corresponding to the alarm message from a server device and registering the downloaded available information with a settlement program. Consequently, the settlement program may share data with the phone book program.

Meanwhile, FIG. 58 illustrates an exemplary embodiment explaining that an alarm message is transmitted first and then when a user selects the alarm message, available information such as a coupon and an invitation letter is transmitted. However, the present inventive step is not limited thereto. That is, effective data itself such as a coupon or an invitation letter may be transmitted to an alarm message.

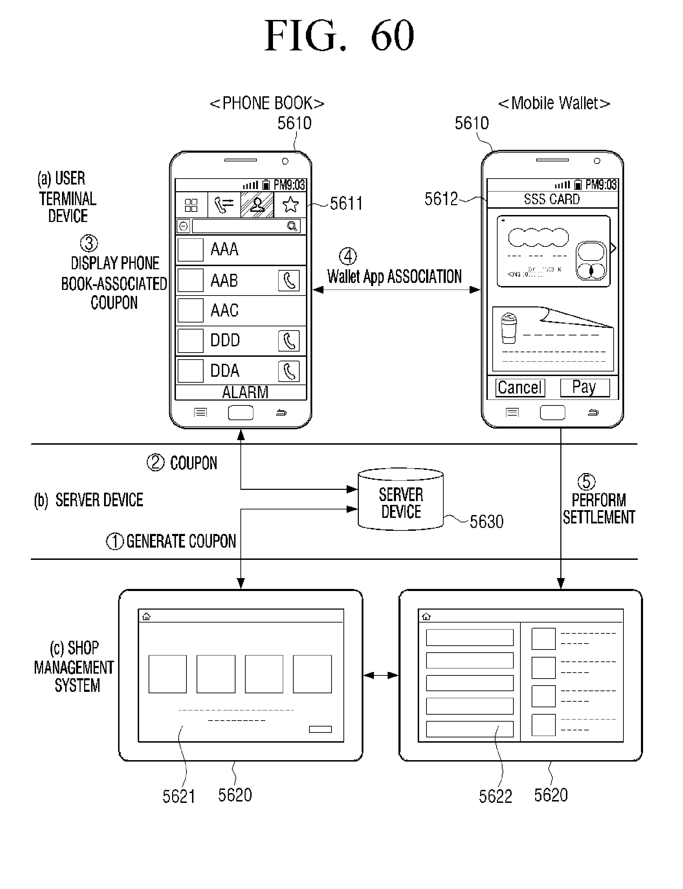

FIG. 60 is a view provided to explain a configuration and an operation of a network system according to such exemplary embodiment. For the sake of convenience of explanation, just like FIG. 58, FIG. 60 also explains that a network system includes a user terminal device 5610, a server device 5630, and a shop management system 5620. However, it is obvious that the kinds and number of devices constituting a network system are not limited thereto.

According to FIG. 60, a coupon (□) generated by the shop management system 5620 is registered with the server device 5630. When a specific event occurs, the server device 5630 issues a coupon itself to the user terminal device 5610. That is, issuance of a coupon is not notified as in the exemplary embodiment in FIG. 58. Instead, a coupon is directly transmitted. FIG. 60 only illustrates a coupon. However, an invitation letter or other available information may be issued too. Such available information may be automatically pushed as in the above described various examples or may be issued by means of a user's search.

Available information such as an issued coupon may be stored in a ROM, a flash memory, etc. in the user terminal device 5610. The phone book program may copy the stored available information and transmit the information to a storage area which is managed by the wallet program. Or, the phone book program may notify the memory address which stores available information to the wallet program, such that the wallet program can use the memory address.

Meanwhile, in case where a program which is installed in a user terminal device such as a phone book program, a calendar program, and a gallery program or a wallet program uses a standardized application program interface (API), or the same API which is generated by the same manufacturer or the same programmer, applications may interface with each other through the API. Accordingly, as described above, available information may be directly shared. In other cases, operation for sharing API is needed in order for applications to interface with each other. For instance, in case where a phone book program and a wallet program are associated with each other, a wallet program producer requests a phone book program or a manufacturer of a user terminal device where a phone book program is installed to open the API such that the API of the phone book program can be updated. Consequently, various applications including a phone book program and the wallet program may be associated with each other.

The user terminal device 5610 may display received available information on a phone book screen 5611. Specifically, an alarm menu may be displayed together with a phone book list, on a phone book screen 5611. As described above, the alarm menu 5613 may be provided on a layout itself of a phone book by a phone book program, or may be generated on a graphic layer which is different from a phone book program and thus be implemented as a menu which is separately displayed on a phone book screen 5610. In this case, in case where a user selects an alarm menu 5613, the user terminal device 5610 may display information on a coupon available to the user (□).

Then, when a specific event occurs, the user terminal device 5610 executes a wallet program (□) and displays the screen 5612. Here, an event may not only be an event where a user directly selects an icon corresponding to a wallet program but also an event where a customer enters a shop, an event where a customer is provided with broadcast shop information from a shop management system, an event where a shop management system is tagged, etc. A user may use a wallet program and perform a settlement with respect to the shop management system 5620 (□). Specifically, a settlement device in the shop management system 5620 is tagged, while a wallet program being executed, the controller 120 applies an issued coupon and performs a settlement.

FIG. 60 explains that a phone book screen 5610 is used to display an alarm message. However, not only a phone book program but also a calendar program, a gallery program, etc, may be used. Or, an advertisement application may be utilized for a separate advertisement.

An advertisement service method as explained in FIG. 60 may also be provided by a program which is installed in a non-transitory readable medium. That is, a program which is installed in a non-transitory readable medium may sequentially perform a step of downloading available information such as a coupon from a server device and providing a settlement program with the downloaded available information. Consequently, the settlement program may utilize various characteristic information which is recorded in the user terminal device.

As described above, the overall service such as an advertisement, a selection, a settlement, etc. for a product may be implemented by a network system.

In a network system explained in FIGS. 58 and 60, the shop management system 5620 may perform a continual customer management in consideration of a user's purchase history, coupon issuance history, whether a coupon is used, etc. That is, the shop management system 562, in case where a user terminal device 5610 which downloads a coupon issued by the shop management system 562 performs a settlement, designates the user of the shop management system 562 as a target and provides subsequent various additional services. For instance, the target customer may be provided with a higher discount rate than an ordinary customer or be provided with additional service such as a free gift, an increase in point saving rate, extension of discount period, etc.

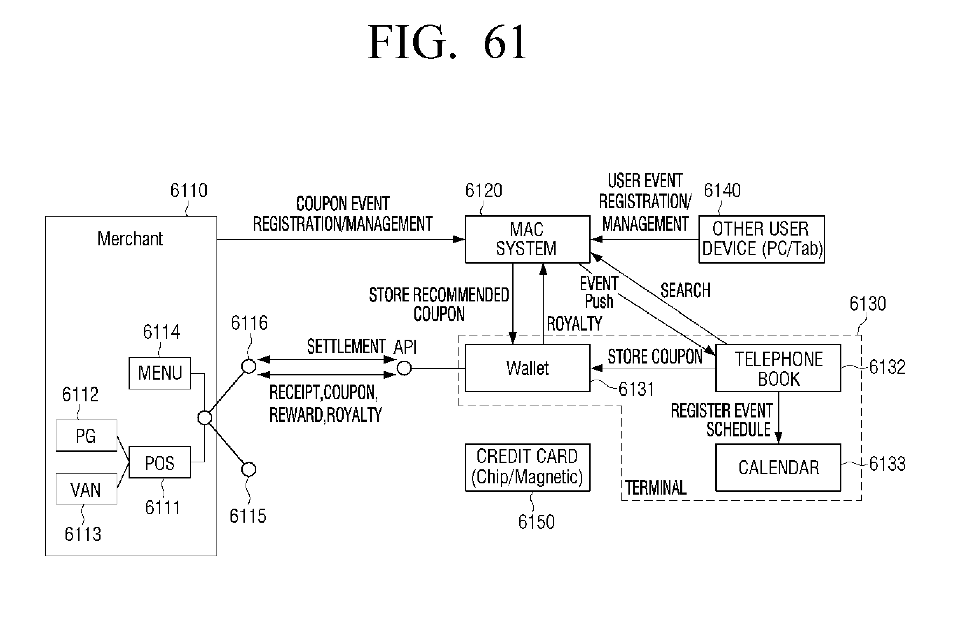

FIG. 61 illustrates an example of a detailed configuration of a network system. According to FIG. 61, a network system includes a shop management system 6110, Mobile Advertising & Commerce (MAC) system 6120, a user terminal device 6130, and other user devices 6140 which are provided in a shop.

A shop management system 6110 includes a PoS system 6111, a payment gateway module (PG module) 6112, a value-added network (VAN) module 6113, an electronic menu 6114, various kinds of accessory units 6115, 6116, etc.

A PoS system 6111 means a device which collects and manages various information related with purchase. A PG module 6112 is a module for providing various forms of electronic payment services such as a credit card, a cellphone, account transfer, cash settlement, etc. A VAN module 6113, when a settlement is performed by using a credit card, etc., is a module for approving a settlement by relaying the credit card use information to a credit card company. An electronic menu may be a display unit where products which are carried by a shop are displayed and selected.

An accessory unit may not only be a credit card reader 6115, an NFC module 6116 but also a barcode, a QR recognizer, etc. The PoS system 6111 of the shop management system 6110 may organize sales history based on information which is inputted through the electronic menu 6114, in response to settlement information being received through various accessory units, perform a settlement using a PG module 6112, a VAN module 6113 and manage the settlement information.

The MAC system 6120 may use various information which is received from other user devices 6140) or the shop management system 61010 and provide various information with respect to the user terminal device 6130.

The user terminal device 6130 uses various programs such as a wallet program 6131, a phone book program 6132, a calendar program 6133, etc. in order to support shopping service. Though not illustrated, a gallery program or other programs may be used for shopping service.

The MAC system 6120 may be associated with a wallet program of the user terminal device 6130 and provide a coupon or other advertisement information. Or, the MAC system 6120 may be associated with the phone book program 6132 of the user terminal device, push a coupon, event information and various advertisement information. That is, as described in the exemplary embodiments on push-based advertisement service, the user terminal device 6130 may receive various advertisement information issued by an advertiser.

Or, as shown in the above-described search-based advertisement service, the user terminal device 6130 may receive various advertisement information through search.

Meanwhile, available information which corresponds to an alarm message displayed on a phone book program 6132, a calendar program, and other programs may be provided to the wallet program 6131.

That is, as explained in FIGS. 58 and 59, in case where an alarm message on a coupon, an event, etc. is selected, available information corresponding to the selected message is downloaded to a user terminal device. The downloaded available information is managed by the wallet program 6131. Or, as explained in FIG. 60, in case where available information is downloaded without a separate alarm, the downloaded available information is directly managed by the wallet program 6131.

When the wallet program 6131 is tagged with an accessory unit 6116 of the shop management system 6110, the wallet program 6131 may perform a settlement by using available information which is managed by the wallet program 6131, e.g., a coupon, an event card, etc.

In addition, the user may directly perform a settlement by using a credit card 6150, not a wallet program. In this case, the user may receive a paper-based receipt, but may receive an electronic receipt through the wallet program 6131.

Meanwhile, in case where a shop is of large size, a PoS may be implemented as a plurality of devices.

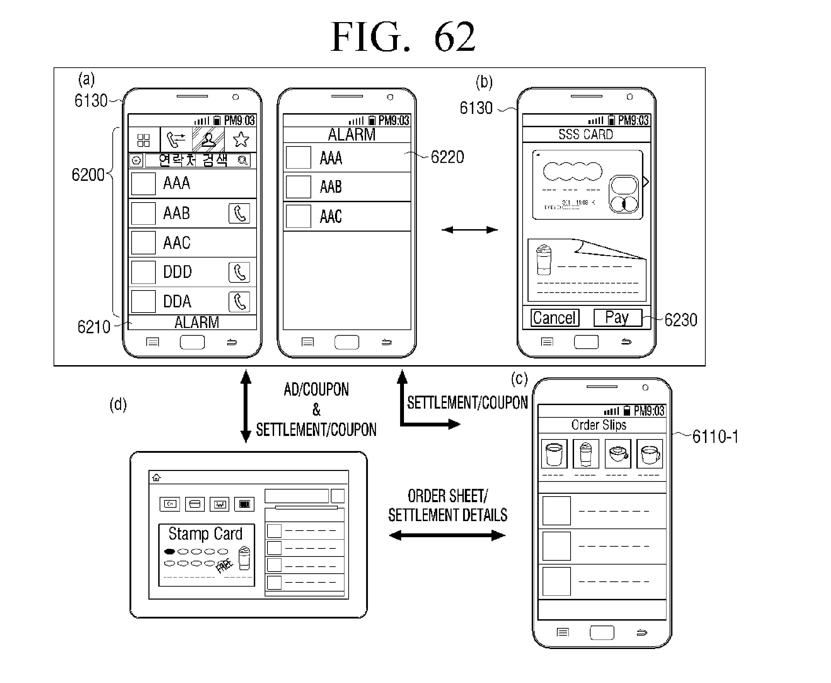

FIG. 62 illustrates an exemplary embodiment of a configuration of a network system including a plurality of PoS terminals. (A) of FIG. 62 illustrates a process of a user terminal device 6130's providing advertisement information through a phone book screen. That is, a menu 6210 for displaying an alarm message together with various contact information 6210 may be displayed on a phone book screen 6130. When the user selects the menu 6210, a screen 6220 for displaying various alarm messages is displayed. Not only a shop telephone number and an advertisement image but also various advertisement information such as various coupons and event information may be displayed on the screen 6220.

In case where the user selects one of displayed alarm message items, available information corresponding to the selected items is downloaded to the user terminal device 6130 and is displayed as in (B) of FIG. 62. (B) of FIG. 62 illustrates a state where a coupon is issued. The user may select the coupon and perform a settlement by selecting a pay button 6230. The settlement may be performed not only through a main Pos terminal 6110 but also through a sub Pos terminal 6110-1. The sub Pos terminal 6110-1 may be a device which is individually possessed by a sales representative. The sub Pos terminal 6110-1 transmits an order sheet and detailed information on the settlement to the main Pos terminal 6110.

(D) of FIG. 62 illustrates the main Pos terminal 6110. The main Pos terminal 6110 may be a device that is used by an administrator. The main Pos terminal 6110 may display different management screens according to various steps such as a phase of preparing daily business, a step of performing business, a step of closing accounts after closing the shop, etc. Such screen may be generated based on information managed by a PoS. Examples of such information will be explained below in further detail.

According to various network systems described above, commerce service associated with a phone book-based advertisement, a wallet and a mobile PoS may be provided.

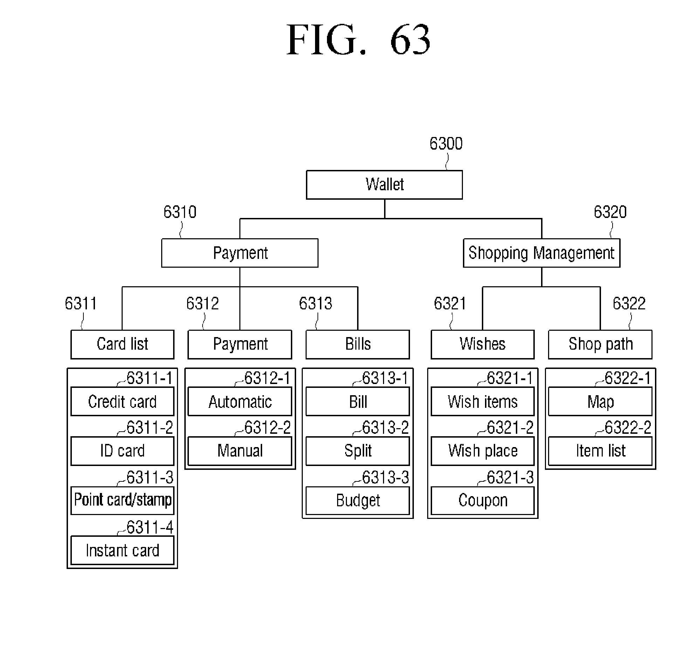

FIG. 63 is a view illustrating an example of a structure of information managed by as a wallet program.

The wallet program 6300 may be classified into a payment part 6310 which is responsible for settling a settlement amount and a shopping management part 6320. The payment part 6310 manages information such as a card list 6311, a settlement mode 6312, a bill 6313, and the shopping management part 6320 manages information such as wishes 6321, shop path 6322, etc.

The card list 6311 includes various information such as credit card information 6311-1, ID card information 6311-2, a point card /stamp 6311-3, an instant card 6311-4, etc. From among the above, the point card /stamp 6311-3 and the instant card 6311-4 may include various available information issued from an external device. That is, in case where available information such as a coupon, a stamp card, and an event card for providing various services such as discount at a shop, a free gift, sampling event, free entry, a free gift is issued, the information may be stored in the point card/stamp 6311-3 part. Or, in case where available information such as a service ticket allowing one free service, an invitation letter is issued, the available information may be included in an instant card and be managed together.

When a user terminal device performs a settlement using a wallet application 6300, the user terminal device may use available information stored in a point card/stamp 6311-3, an instant card 6311-4, etc., together with a credit card selected from a credit card information 6311-1.

Meanwhile, the settlement mode 6312 includes mode information such as an automatic mode 6312-1, a manual mode 6312-1, etc. In addition, the bill 6313 includes a bill, an allotted amount, installments 6313-1 ∼ 6313-3, and the information 6321 includes information on an item to be purchased, location of purchase, a coupon 6321-1 ∼ 6321-3, etc. Path information 6322 includes information on a map or an item list 6321-1 ∼ 6321-3.

The user terminal device 5030 may execute the wallet program 6300, manage and use various information as illustrated in FIG. 63.

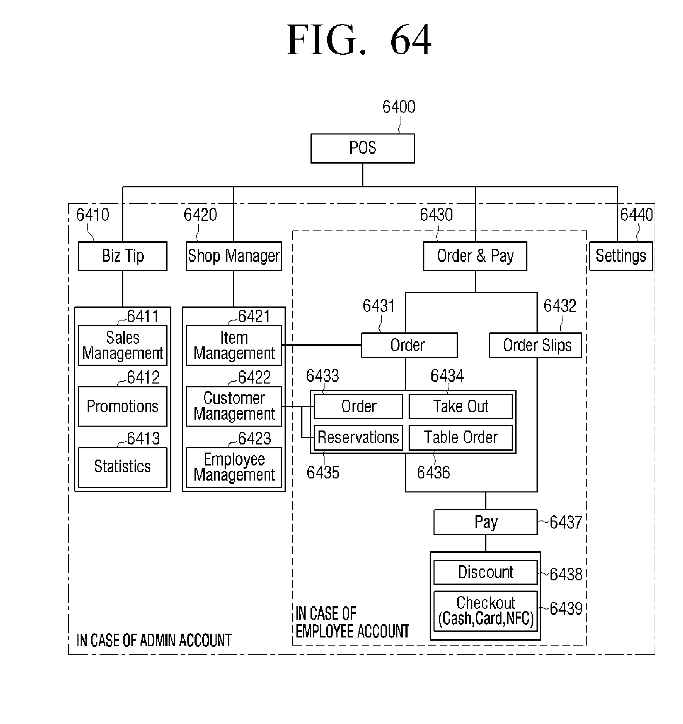

FIG. 64 illustrates an example of a structure of information which is managed by a PoS system in a shop management system. According to FIG. 64, POS information 6400 which is managed by the POS system includes various information such as biz tip 6410, shop manager 6420, order & pay 6430, and setting 6440.

The biz tip 6410 includes sales management 6411, promotion 6412, statistics information 6413, etc. The promotion module 6412 may use a coupon-generating tool, etc. and generate available information such as various coupons, an event card, an invitation letter, and a stamp card. The promotion module 6412 may refer to statistics information for generating available information. For instance, sales information by product based on statistics information 6413 may be displayed on the system. When rates of sales are low, a shop manager may select a menu for generating a special discount coupon for the corresponding product on a screen of the PoS system. When a menu selection is completed, the promotion module 6412 may use various service information which is inputted by the shop manager for the corresponding product and generate a discount coupon. Or, the shop management system may use statistics information 6413 or customer management information 6422 and generate a discount coupon or an event card for excellent customers or customers who have not purchased products at the shop recently. As described above, the generated available information is transmitted to the server device and then to the registered user terminal device.

Besides, the shop manager 6420 includes item management information, customer management information, information on sales representative management, etc. Among the above, the customer management information may include name, address, phone number, purchase history and other details of a customer who has prior purchase history. Also, in case of a customer for whom available information is issued, the content of the issued available information, e.g., the coupon number, other benefits may be recorded and managed.

Order & Pay information 6430 is classified into order 6431, order slips 6432, settlement 6437, etc. The order information 6431 may store information on delivery 6433, packaging 6434, reservation 6435, table order 6436, etc. The settlement 6437 may store information on discount 6438, a settlement 6439, etc.

As illustrated in FIG. 64, Order & Pay information 6430 may be accessed by a sales representative account, but information other than the Order & Pay information may be off-limits such that they can be accessed only by an administrator account.

When transaction with a new customer is performed, the administrator uses a display and a keyboard (not illustrated) provided by the shop management system and inputs personal information, transaction history of the customer, etc. When the corresponding shop wishes to issue a coupon or provide an event, the administrator may register the relevant event with the shop management system.

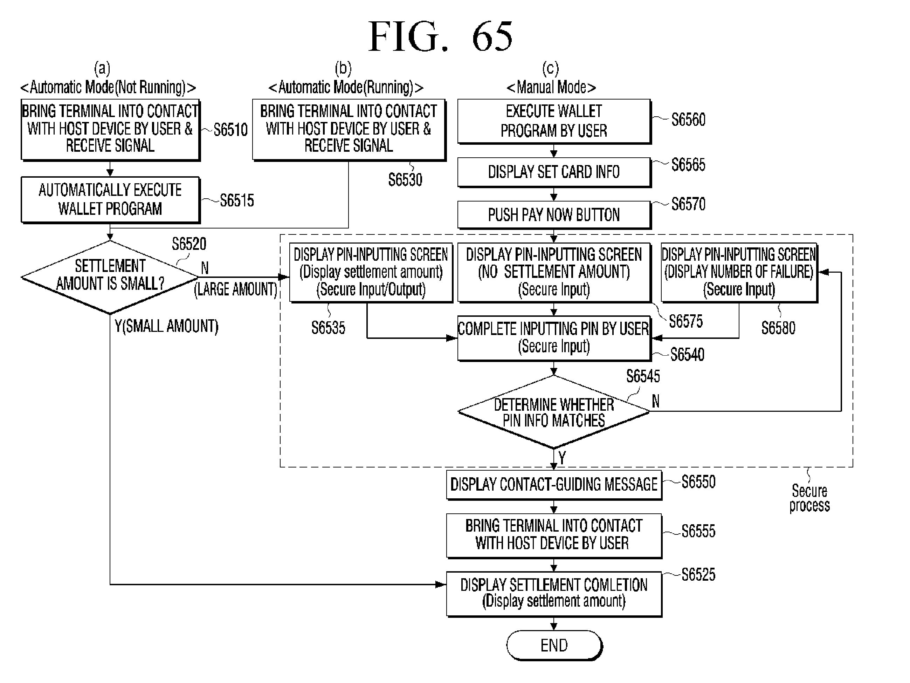

FIG. 65 is a view provided to explain a user terminal device where the wallet program explained in FIG. 63 is provided, and as settlement process in a network system including a PoS system which manages the information explained in FIG. 64.

According to FIG. 65, settlement mode is classified into automatic mode and manual mode. In case where a wallet program is not executed (a) with the automatic mode being set, a user brings a terminal device into contact with an accessory of a shop management system. Various kinds of signals may be transmitted or received through short distance wireless communication by means of the contact(S6510).

When a signal is received, the user terminal device automatically executes the wallet program(S6515). Various available information which is issued by using alarm messages which are transmitted from various kinds of external devices may be registered with the wallet program.

When the wallet program is executed, the user terminal device determines whether the settlement price is high or low (S6520).

Meanwhile, when a wallet program is being executed (b) with the automatic mode being set, in case where a user brings the terminal device into contact with a PoS (S6530), a process of determining whether the settlement price is high or low may proceed directly, without the automatic execution of the wallet program (S6520). In this case, in case where there is registered available information, the program may discount a settlement amount based on the available information or process with a settlement by processing it free.

A standard amount for determining whether the settlement amount is small or not may be arbitrarily determined. For instance, if the standard amount is set to be KRW 300,000, the user terminal device directly performs a settlement of the amount not more than KRW 300,000 and displays a state of "settlement completed" (S6525).

Meanwhile, the transaction amount exceeds KRW 300,000, a PIN input screen is displayed (S6535). When the user finishes inputting a password on a PIN input screen (S6540), whether the inputted password matches the predetermined password information (S6545) is displayed. When the inputted password does not match the predetermined password information, a password input screen is displayed again (S6580). In this case, the number of password mismatch may be displayed. Meanwhile, when the password matches, a message displaying a contact with a PoS is displayed (S6550). Here, when the user brings the terminal device into contact with the shop management system (S6555), a settlement is performed by tranceiving the terminal device and a state of "settlement accomplished" is displayed (S6525). It is apparent that available information may be used in this process too. When a settlement has been completed, the amount whose settlement has been completed may be displayed.

Meanwhile, when a manual mode is set (c), a user himself should select and execute a settlement application icon. When the user executes the settlement application (S6560), the user terminal device displays card information which is set (S6565). Here, when the user presses a settlement execution button (S6570), a step of displaying a password input screen proceeds (S6575). The subsequent phases have been explained above and the explanation thereof will be omitted.

A step of authenticating a user by using a PIN input screen may be security-processed. For instance, the user terminal device encrypts a password by using an encryption algorithm first and then provides the password to the PoS.

As described above, various information such as a coupon, an event, contact information, etc. may be provided through a phone book, a gallery program, etc., and such advertisement information may be used in a settlement program such as a wallet program to be reflected in a settlement. Consequently, an operation ranging from an advertisement, a settlement to purchase history management, etc. may be continually performed, which significantly improves convenience in shopping service.

The shop management system may provide the user terminal device with advertisement or other information through various methods and improve interest or accessibility to a product. Further, when such information leads to actual purchase, additional benefit may be provided to the customer and develop the customer into an excellent customer. Hereinafter, a shopping method and a customer management method which utilizes a network system will be explained.

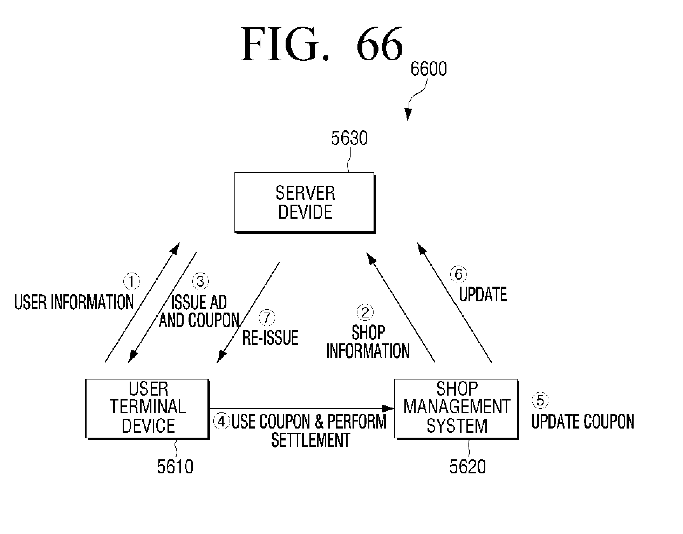

FIG. 66 is a view provided to explain a shopping method and a customer management method which utilizes a network system. According to FIG. 66, the network system 6600 includes a user terminal device 5610, a shop management system 5620, and a server device 5630. For the sake of convenience in explanation, it is illustrated that the network system has the same configuration as the network system explained in FIG. 56, but the kinds and number of elements included in the network system are not limited thereto.

According to FIG. 66, the user terminal device 5610 provides the stored user information with the server device 5630 (□), and the shop management system 5620 generates shop information to provide the information to the server device 5630 (□).

The use information may include not just the name, telephone number, email address, nickname, birth date, address, user ID of a user who owns the user terminal device 5610 but also information such as name, telephone number, email address, messenger address or nickname, birth date, address, user ID, etc. of acquaintances which are registered with a phone book list of the user. More specifically, shop information may include various information that can be provided by the shop, such as shop name, shop image, shop location, telephone number, web page address, information on products of shop, product image, discount rate, discount period, event information, a coupon (coupon ID, serial number, coupon image, coupon name, coupon type, etc.), an invitation letter, an advertisement phrase, etc.

The server device 5630 records shop information received from the shop management system 5620 in a shop database and user information received from the user terminal device 5610 is recorded in a user database. In case where there exist a plurality of shop management system 5620, the server device divides shop database by shop and records the shop information for each of the shops. In case where a plurality of users are managed, user information is divided by user and then recorded. When new information is received from the shop management system 5620 or the user terminal device 5610, the server device 5630 may update the shop database or user database based on the received information.

When a specific event occurs, the server device 5630 compares information of the shop database and user database and then transmits an alarm message or available information corresponding to the user terminal device 5610 (□). For instance, in case where shop information which matches user information received from the user terminal device 5610 is newly updated, the server device 5630 may transmit information that can be issued by the user terminal device 5610 (e.g., advertisement, a coupon, an invitation letter, etc.) from among the shop information. Or, in case where user information which corresponds to the pre-stored shop information is newly updated, at least some of the information from among the shop information which matches the user information may be transmitted to the user terminal device 5610. Besides, as described above in various exemplary embodiments, various kinds of information may be transmitted to a use terminal device 5610 according to a push method or a search method.

The user terminal device 5610 may receive information received from a phone book calendar, a gallery program. etc. or a separately provided advertisement, and then may provide the information to a wallet program, i.e., a settlement program.

Afterwards, a user who possesses the user terminal device 5610 may visit a shop managed by the shop management system 5620 and may actually purchase a product. That is, the user may feel an urge to visit a shop or purchase a product due to various kinds of information that is displayed on a phone book screen, a calendar screen or a wallet screen of the user terminal device. As described above, the shop management system 5620 may obtain advertisement effect using the network system.

A settlement may be performed in various forms. By way of example, a user may perform a settlement through a method of short range wireless communication (□). In this case, the user terminal device 5610 is tagged by the settlement device in the shop management system, a settlement may be performed using a coupon managed by the wallet program or other available information. A settlement method has been explained in detail above in FIG. 65, and thus the explanation thereof will be omitted.

When a settlement is completed, the shop management system 5620 may manage purchase history for the user of the user terminal device 5610. The shop management system 5620 may update various kinds of services which support the user of the user terminal device 5610 based on the purchase process of the user and the shop owner's policies. For instance, in case where a coupon previously issued by the shop management system 5620 is used in the settlement process, the sales strategy of a shop owner who runs the shop management system 5620 may be considered to be successful. Accordingly, the shop owner may establish policies of providing various benefits such as providing increased discount rate impromptu, issuing a coupon which allows the customer to enjoy higher discount rate than ordinary customers, providing a free gift, extending discount period, providing an opportunity to participate in events, etc. By way of example, when it is assumed that a policy of issuing an additional discount coupon is established, the shop management system 5620 may update a coupon based on the policy (□), and transmit the updated coupon to the server device 5630 (□). Accordingly, the information which is registered in the shop database managed by the server device 5630 may be updated.

The server device 5630 transmits the updated information back to the user terminal device 5610 (□). That is, the user is re-issued with a coupon providing discount rate higher than that of ordinary customers. Through the above series of processes, the user may enjoy various kinds of additional benefits such as discount or receiving a free gift, and the user enjoys advertisement and promotion effect. Accordingly, shopping service may be promoted.

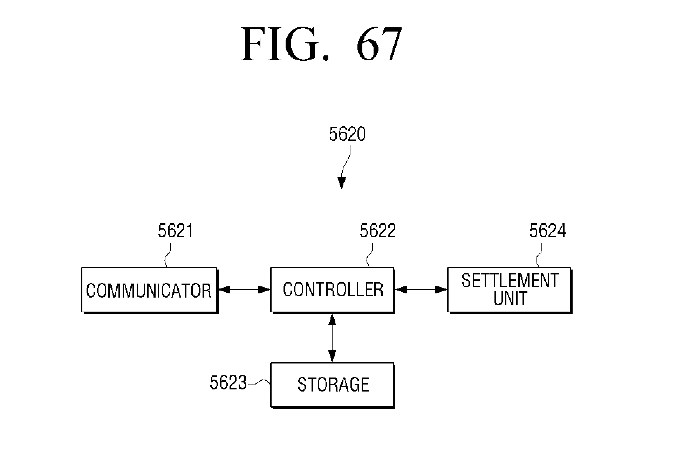

FIG. 67 illustrates an example of a configuration of the shop management system 5620 for constituting a network system. According to FIG. 67, the shop management system 5620 includes a communicator 5621, a controller 5622, a storage 5623, and a settlement unit 5624.

The communicator 5622 is an element for performing communication with various external devices such as the server device 5630. The communicator 5621 may perform communication through various kinds of wired or wireless communication method. Specifically, the communicator5621 may transmit shop-related information related to the shop management system to the server device 5630. As described above, shop information may include various information that can be provided by the shop, such as shop name, shop image, shop location, telephone number, web page address, information on products of shop, product image, discount rate, discount period, event information, a coupon (coupon ID, serial number, coupon image, coupon name, coupon type, etc.), an invitation letter, an advertisement phrase, etc. The controller 5622 may directly generate available information that can be actually used such as a coupon, an invitation letter from among the shop information by using an authoring tool, but not limited thereto. That is, the controller may receive available information from external devices and then deliver the available information to the server device 5630.

The storage may store various kinds of programs and information. Specifically, as described above, various shop information including a coupon may be stored in the storage 5623. Besides, information such as a user's purchase history information may be stored in the storage. By way of example, the storage 5623 may store various kinds of programs and information as in FIG. 63.

The controller 5622 may transmit various information stored in the storage 5623 to the server device 5630 through the communicator 5621. By way of example, a coupon generated by the controller 5622 may be transmitted to the server device 5630 and then be issued to the matching user terminal device 5610.

The settlement unit 5624 is an element for performing a settlement between the user terminal device. The settlement unit 5624 may be implemented in various forms depending on a settlement method. Specifically, the settlement unit 5624 may include a credit card reader, a barcode reader, a QR code recognizer, an NFC module, etc. When the settlement unit 5624 includes NFC module, in case where the user terminal device 5610 is tagged, the settlement unit 5624 performs a settlement by communicating through the short range wireless communication. The settlement method has been explained above in detail and thus the explanation thereof will be omitted.

The user terminal device 5610 may use a coupon in the settlement process. By way of example, when a discount coupon is used, the settlement may be performed for the discounted settlement amount.

The controller 5623 may determine whether a coupon has been used in the settlement process. Specifically, the controller checks a coupon ID or a serial number which is inputted by the settlement unit 5624 and then determines whether the inputted coupon matches the coupon stored in the storage 5623. When the information on the inputted coupon matches that of the stored coupon, the controller 5623 determines that the inputted coupon is a coupon issued by the shop management system and controls the settlement unit 5624 to perform a settlement by applying a benefit corresponding to the coupon.

In case where a coupon issued by the shop management system has been used, the controller 5623 may generate an updated coupon to a user with the user terminal device 5610 which has used the coupon. For instance, the controller may generate an upgraded coupon which allows an increased discount rate or extended discount period, a coupon which allows expansion of the scope of products for which discount is applied, a coupon which allows provision of a free gift and stores the coupon in the storage 5623. The controller may transmit the upgraded coupon to the server device 5630 through the communicator 5621. Accordingly, the user may be re-issued an upgraded coupon from the user terminal device 5610 which the user owns. In this case, a subsequent purchase may be encouraged by the re-issued coupon. Thus, a different service is provided respectively for a user who uses a coupon issued by the shop management system and a user who does not, thereby boosting the degree of interest, desire to use a coupon, desire for subsequent purchase, etc.

Or, in addition to re-issuance of a coupon, additional benefits may be provided at a shop itself. That is, the controller 5623 may apply additional benefit as well as the benefit provided by the coupon and proceed with a settlement. For instance, even if a 10% discount coupon is use, a benefit of 20% discount may be provided. Accordingly, the user may be provided with benefit differentiated from the benefit which is provided to other users through different paths, and the degree of interest of various kinds of alarm message or available information is provided by the shop management system.

When a product purchase is completed, the controller 5622 may store the information on purchase history of the user who purchased the product in the storage 5623 to be managed.

Though not illustrated in FIG. 67, the shop management system may further include a broadcasting means for broadcasting various kinds of information in a shop. Accordingly, the shop management system may broadcast SSID (Service Set Identifier), IP address, Wi-Fi address, which are owned by the shop management system etc. In this case, a user's user terminal device which enters a shop may receive broadcast information and recognize the shop management system. The user terminal device 5610 may execute a wallet program and search available information which corresponds to the recognized shop management system 5620 from among the available information managed by the wallet program. In case where a search result shows that there is an available coupon, the user terminal device 5610 displays the identified coupon on a screen. In this state, when the user selects the coupon and tags the user terminal device 5610 to the settlement unit 5624, the settlement unit 5624 performs a settlement as described above. As described above, the settlement unit 5622 may provide additional benefit impromptu or generate an upgraded coupon that can be used later on.

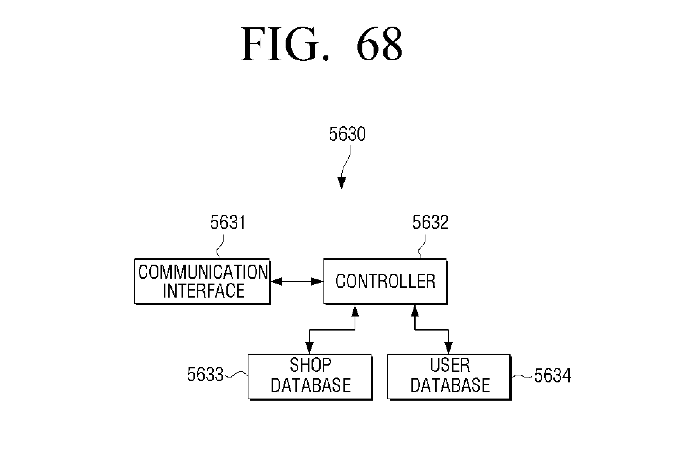

FIG. 68 illustrates an example of a server device 5630 for constituting a network system illustrated in FIG. 66. According to FIG. 68, the server device 5630 includes a communication interface 5631, the controller 5632, the shop database 5633, and user database5634.

The communication interface 5631 is an interface for performing communication with various external devices including the shop management system and the user terminal device.

The shop database5633 is a database for recording shop information received from various shop management system which performs communication with the server device 5630. In case where a plurality of shop management systems are managed, shop information received from each of the system may be recorded by shop. For instance, shop information received from the shop AAA may be stored in the zone 1, and shop information received from the shop BBB may be stored in the zone 2.

The user database 5634 is a database for recording user information received from the user terminal device 5610 which performs a communication with the server device 5630. In case where a plurality of users are registered, database zones may be divided by user and then the user information may be recorded.

Each zone of the shop database 5633 and the user database 5634 may be divided physically or logically in a storage according to an exemplary embodiment, or may be implemented in individual storage which is independently divided.

The controller 5632 registers the information received through the interface 5631 in a predetermined zone within the shop database 5633 or the user database 5634.

The controller compares user information and the shop information registered in the shop database 5633 with the user information registered in the user database 5634 and searches matched information. As a result of the search, matching user information and shop information are identified, a coupon included in the searched shop information is issued to the user terminal device corresponding to the searched user information. Whether the information matches may be determined depending on whether a text matches. For instance, in case where user information includes a word, a shop CCCC, the controller 5632 searches shop information including a keyword such as CCCC or a shop CCCC. Accordingly, when shop information including the corresponding key word is found, the controller 5632 may use as least some of the found shop information and provide an alarm message or available information. Transmission order, a transmission method, transmission condition, etc. of an alarm message or available information may be implemented in various ways as described above, and thus illustration and explanation thereof will be omitted.

When a plurality of shop information is found, the controller 5632 may transmit to the user terminal device 5610 only representative information (e.g., the name of a shop) for each of the plurality of shop information in a list form.

FIG. 68 illustrates an example of a server device 5630 for constituting a network system illustrated in FIG. 66. It is apparent that the above described examples may be implemented as a server device 5630 having the same configuration as in FIG. 68.

The user terminal device constituting the network system described in FIG. 66 may be implemented to have the same configuration illustrated in other described exemplary embodiments, or may be implemented to have elements which are appropriately combined. The elements constituting the user terminal device has been explained above in detail and thus the explanation thereof will be omitted.

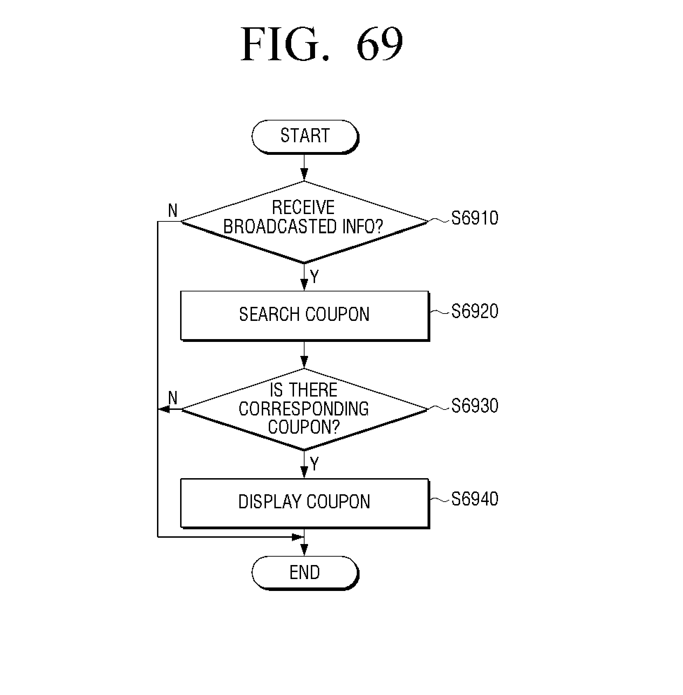

As described above, in case where a specific event occurs, the wallet program may be automatically executed and the function of the wallet program may be performed. An event may be an event where a wallet program enters a shop and receives shop information which is broadcast by the shop management system. FIG. 69 is a flowchart provided to explain the operations performed by the wallet program in the above-described wallet program.

According to FIG. 69, the user terminal device 5610 may receive information broadcast by the shop management system (S6910). When the user terminal device 5610 receives information, the wallet program is automatically executed. The wallet program searches a coupon which is previously issued by the user terminal device 5610 (S6920). As result of the search, when a coupon corresponding to the preissued coupon is found (S6930), the wallet program displays the found coupon on the screen (S6940). Accordingly, when a user performs interaction (e.g., tagging) for selecting a coupon and performing a settlement, the settlement applies the selected coupon and performs a settlement.

Such wallet program may be installed in non-transitory computer-readable medium mounted onto the user terminal device. Accordingly, the wallet program may sequentially perform a step of being provided with available information through other applications such as a phone book, a calendar program, a step of storing the provided available information, in case being accessed by the shop management system, a step of searching available information corresponding to the shop management system from among available information, a step of applying the searched available information and performing a settlement with the settlement device of the shop management system. Meanwhile, as described above, the user terminal device may be implemented as various devices such as a cellphone, tablet, PC, TV, PC, laptop computer, PDA, kiosk, etc.

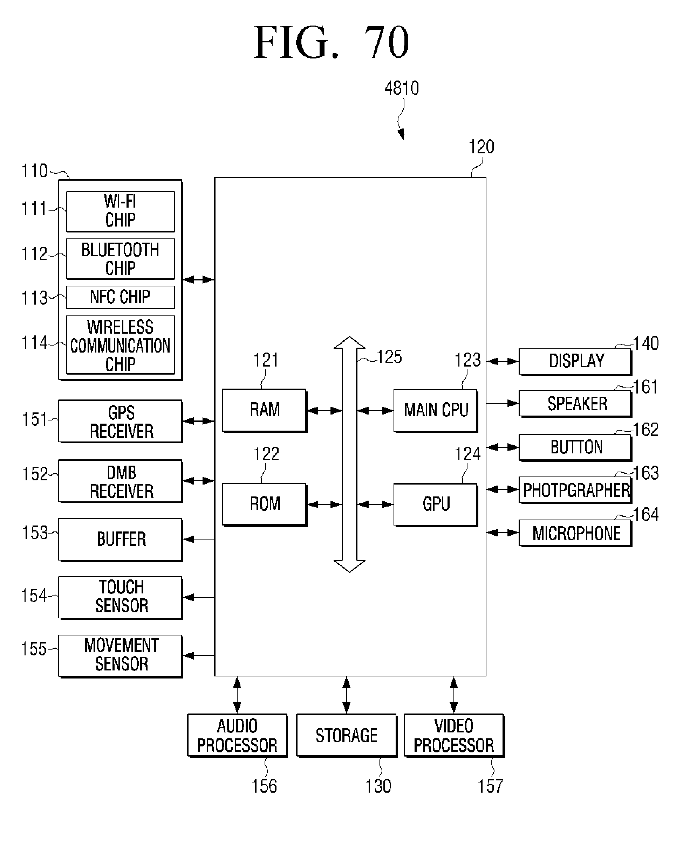

FIG. 70 illustrates an example of configuration of a user terminal device having comprehensively a plurality of functions. User terminal device explained in the above-described exemplary embodiments may be implemented in a form as in FIG. 70.

According to FIG. 70, the user terminal device 5610 includes a communicator 110, a controller 120, a storage 130, a display 140, a GPS receiver 151, a DMB receiver 152, a buffer 153, a touch sensor 154, a movement sensor 155, an audio processor 156, a video processor 157, a speaker 161, a button 162, a photographer 163, and a microphone 164.

The controller may control an operation of a user terminal device by using a program stored in the storage. Specifically, the controller 120 executes a phone book and display the phone book screen on a display 140.

The controller 120 may include RAM 121, ROM 122, main CPU 123, GPU(Graphic Processing Unit) 124, bus 125, etc. RAM 121, ROM 122, main CPU123, GPU(Graphic Processing Unit) 124, etc. may be connected with one another through the bus 125. In addition, various kinds of interface may be further included, the explanation thereof will be explained.

The main CPU 123 accesses the storage 130 and performs booting by using O/S stored in the storage 130. ROM 122 stores an instruction set, etc. for booting a system. When a turn-on instruction is inputted and power supply is provided, the stored O/S which is stored in the storage is copied in RAM 121 according to the instruction stored in the ROM 122, and O/S is executed to boot the system. When booting is completed, the main CPU 123 copies various kinds of programs stored in the storage 130 to the RAM 121, and executes the program copied to the RAM 121 to perform each operation. When a phone book program is selected, the main CPU 123 copies the phone book program to the RAM 121 to be executed.

The GPU 124 may generate wallpaper, icon-displaying screen, unlock screen and other screens according to the control by the main CPU 123. Specifically, the GPU 124 may perform rendering various screens according to executions of various programs such as a phone book program, a calendar program, a gallery program, a wallet program, etc.

The GPU 124 performs arithmetic operations on attribute values such as coordinate values, shapes, sizes, colors, etc. of objects which will be displayed on searching words-inputting area and a contact information-displaying area, based on the screen data stored in the storage 130. The GPU 124 may generate the above-described various screens based on the calculated attribute values. The generated screen data is stored in the buffer. The screen data stored in the buffer 153 may be displayed by the display 140.

The communicator is an element performing communication with various external devices according to various forms of communication methods. The communicator 110 includes Wi-Fi chip 111, a Bluetooth chip 112, an NFC chip 113, and a wireless communication chip 114. The wireless communication chip 114 means a chip performing communication according to various communication standards such as IEEE, Zigbee, 3G(3rd Generation), 3GPP(3rd Generation Partnership Project), and LTE(Long Term Evolution). The communicator 110 may be provided with chips based on at least one or other communication standards from among the above-described chips and use the chips to perform communication with the server devices, etc.

The controller 120 transmits to external server devices through the communicator 110 searching words which is inputted through an execution screen of various programs such as a phone book program, a calendar program, a gallery program, etc.

The GPS receiver 151 is a unit which receives GPS signals from GPS satellite, and calculates current position of the user terminal device 5610. According to exemplary embodiments, when transmitting searching words to external server device, the controller 120 may transmit position information of the user terminal device calculated by the GPS receiver 151. Accordingly, the server device may sort and transmit information based on the location of the user terminal device 5610.

The DMB receiver 172 is unit which receives and processes DMB signals. The buffer 153 is an element for storing screen data which will be displayed by the display 140.

The touch sensor 154 is an element which senses touches on the surface of the display 140. The controller 120 may determine which object is selected by comparing coordinate values of objects within the displayed screen and the touch coordinate values of the sensor 154.

The motion sensor 155 is an element which senses motion such as rotating of the user terminal device 5610 by using a gyro sensor, a geomagnetic sensor, an acceleration sensor, etc. The controller 120 may perform various controlling operation according to motion sensed by the motion sensor 173 as well as touch manipulation sensed by the touch sensor 154.

The audio processor 156 is an element which processes audio data included in contents. The audio processor 156 may perform various processing such as decoding, amplifying and noise filtering regarding the audio data.

The video processor 157 is an element which performs processing video data included in contents. The video processor 157 may perform various image processing such as decoding, scaling, noise filtering, frame rate converting and resolution converting regarding the video data.

The audio processor 156 and the video processor 157 may be driven when programs for replaying contents received from external sources or contents in the storage 130 are implemented.

The display 140 may display image frame generated in the video processor 157. Further, the speaker 161 outputs audio data generated in the audio processor 156.

The button 162 may be mounted within a body of the user terminal device 5610 in various formats such as a home button, a push button, a touch button and a wheel button.

The photographer 163 is an element which performs photographing. The controller 120 may display the photographed images together with the contact information in the phone book screen.

The microphone 164 is an element which receives user voices or other sounds and converts them to audio data. The controller 120 may use the user voices inputted through the microphone 164 while calling, or convert the user voices to audio data and store the user voices in the storage 130. Further, the controller 120 may perform searching information by recognizing voice inputting words inputted through the microphone 164 as searching words.

FIG. 70 comprehensively illustrates sorts of elements that can be mounted in the user terminal device when the user terminal device 5610 comprehensively supports various functions such as communication, DMB and GPS receiving. Thus, according to embodiments, some of the elements illustrated in FIG. 70 may be deleted or modified, and other units may be further added.

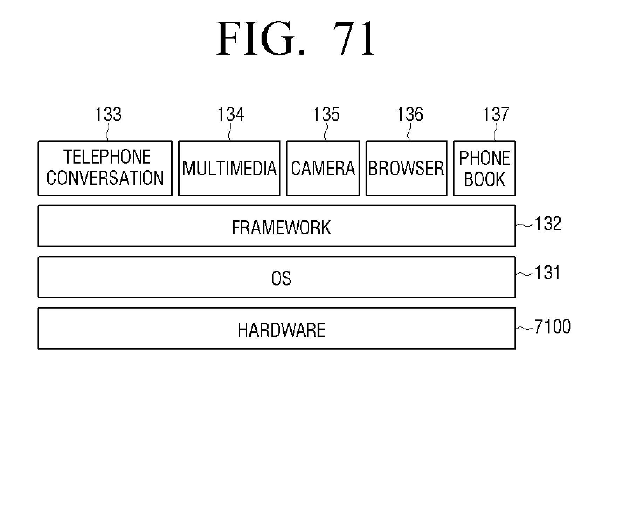

FIG. 71 illustrates an example of software architecture that can be applied to the user terminal device. According to FIG. 71, the user terminal device 5610 may include various software such as OS 131, framework 132, call application 133, multimedia application 134, camera application 135, browser 136, and phone book application 137 as well as hardware 4100.

The hardware 7100 indicates various elements such as a display 140, a speaker 161, a button 162, a photographer 163, a microphone 164, a GPS receiver 151, a DMB receiver 152, a communicator 110, etc.

Operating System (OS, 131) performs controlling and managing overall operation of the hardware 7100. OS 131 is class which manages basic functions of hardware management, memory and security. OS 131 may control operation of the user terminal device by driving a module such as display driver to drive the display, communication driver to trans-receive data, a camera driver to drive the photographer, an audio driver to drive the audio processor, an electrical power manager, etc.

As upper class of OS 131, the framework class 132 exists. The framework 132 performs a role of connecting OS class 131 with sorts of application programs 133 ∼ 137 to the OS class. For example, the framework class 132 includes location manager, notification manager and frame buffer which displays image on the display.

As upper class of the framework 132, an application class exists to implement various functions. Within the application class, the phone book program 137 exists. When the phone book program 137 is executed, the phone book program may be associated with the server device to provide advertisement information. Or, the above described advertisement service method may be implemented by a calendar program, a gallery program, etc. as well as a phone book program.

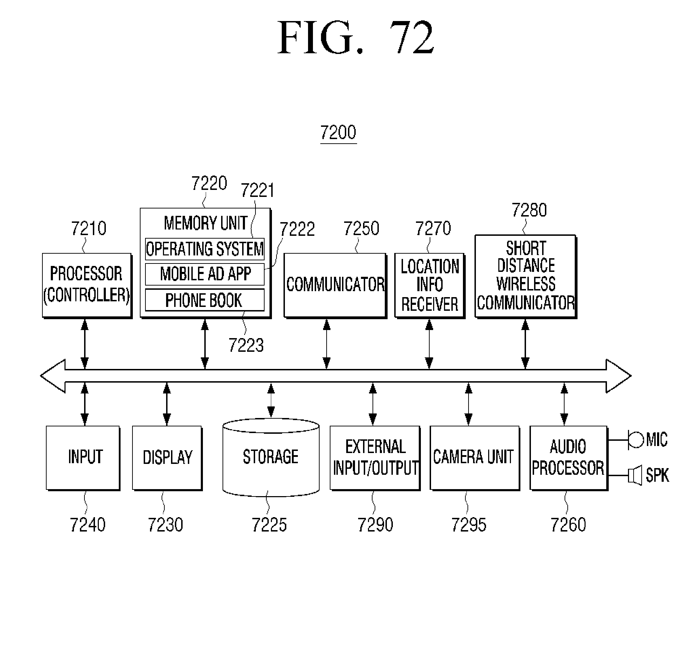

FIG. 72 is a block diagram illustrating another configuration example of the user terminal device. Referring to FIG. 72, the user terminal device mobile device 7200 includes a controller 7210, a memory unit 7220, a storage unit 7225, a display 7230, an input unit 7240, a communicator 7250, an audio processing unit 7260, a location information receiving unit 7270, a short-range wireless communicator 7280, an external input/output port 7290, and a camera unit 7295. The memory unit 7220 stores an operating system 7221, a mobile advertising application 7222 and a phone book 7223, wallet program, etc.

The location information receiving unit 7270 receives information regarding locations via a global satellite navigation system (e.g., a Global Positioning System (GPS), Global Navigation Satellite System (GNSS or GLONASS), etc.). Specifically, the location information receiving unit 7270 may receive the signals from three or more satellites and calculate a current location of a mobile device 100 by analyzing the signals from the three or more satellites. The location information regarding the mobile device 7200 is used to receive location-based mobile advertisements.

For example, the location information receiving unit 7270 may be activated under the control of the controller 7220 when the mobile advertising application is executed, and calculate the location information of the user terminal device 7200. The controller 7210 may transmit the calculated location information to the server device, etc. through the communicator 7250.

The short-range wireless communicator 7280 supports short range wireless communication and other mobile devices. The short-range wireless communicator 7280 may support Near Field Communication (NFC) and Radio Frequency Identification (RFID) communication. Since NFC and RFID technologies are well known to people skilled in the art, the detailed descriptions will be omitted. The short-range wireless communicator 7280 may receive mobile advertising messages. Specifically, the short-range wireless communicator 7280 may receive mobile advertising messages from short-range wireless communication devices installed near, for example, the entrances of buildings, such as a restaurant, a department store, a shopping mall, and the like. Specifically, the user terminal device 7200 may receive mobile advertising messages from the short-range wireless communication device installed near an entrance of a building when the user terminal device 7200 enters the building or when the user terminal device 7200 contacts the short-range wireless communication device.

The external input/output port 7290 serves as an interface connecting the user terminal device 7200 to an external terminals (e.g., a recharger, a headset system, a PC, etc.). The external input/output port 7290 may include a Universal Serial Bus (USB) standard interface, a micro USB standard interface, a 4-pole earphone standard interface, and the like. Or, the external input/output port 7290 may include specific standard interfaces according to mobile device manufacturers.

The camera unit 7295 is an element for photographing an object and may convert images of a subject to electrical signals and store the electrical signals in a form of digital data. The camera unit 7295 may be implemented with a Complementary Metal Oxide Semiconductor (CMOS) image sensor or a Charge Coupled Device (CCD) image sensor. The camera unit 7295 may support picture-photographing and video-photographing functions. Specifically, the camera unit 195 may be driven at the time of scan menu input and take a photograph of a QR code. The photographed QR code is transferred to the controller 7220.

The audio processing unit 7260 may be formed of audio parts that receive, transmit audio signals and encode and decode them. Examples of the audio parts include codecs and audio amplifiers. The audio processing unit 7260 is connected to a microphone MIC and a speaker SPK. The audio processing unit 7260 converts analog audio signals, receives via the microphone MIC it into digital audio signals, and then makes it digitalized. The audio processing unit 7260 may also convert digital audio signals output from the controller 7220 into analog audio signals, and outputs them via the speaker SPK. The audio processing unit 7260 may also output various audio signals created in the user terminal device 7200 to the speaker. For instance, the audio processing unit 7260 may output audio signals that come from replaying of the MP3 files, video files to the speaker. In particular, the audio processing unit 7260 may output a sound effect to notify a user of the reception of a mobile advertising message

The communicator 7250 may establish communication channels for making a call or transmitting data. In particular, the communicator 7250 may perform communication with external devices, under the control of the controller 7220. Specifically, in order to synchronize the phone book with the mobile advertising server 200, the communicator 7250 may transmit the information, periodically or each time that the information is altered, under the control of the controller 7220. The communicator 7250 may also receive mobile advertising messages, issued from the server device 200.

When the mobile advertising application 7222 is executed, the communicator 7250 may transmit an access request signal to the mobile advertisement providing server 2700 under the control of the controller 7220. The access request signal includes an Identifier (ID) and password. If the communicator 7250 is connected to the mobile advertisement providing server 2700, the communicator 7250 may transmit the location information of the user terminal device 7200 thereto under the control of the controller 7220.

The communicator 7250 may receive mobile advertising messages, issued by advertisers within a certain range of area from the current location of the user terminal device, from the mobile advertising web server 600. If a search mode for mobile advertising messages is altered in the user terminal device, the communicator 7250 transmits the altered search mode to the mobile advertisement-providing server 2700 and may receive mobile advertising messages according to the altered mode therefrom, via the mobile advertisement-providing server 2700.

The communicator 7250 may transmit a request signal for downloading coupons or stamps in a mobile advertising message to the mobile server device 200 or the advertisement-providing server 2700. Also, the communicator 7250 may also transmit a user's input comments, grading (such as by stars), and the like. The communicator 7250 may transmit various signals for controlling the reception and display of mobile advertisements to the external devices and receive reply signals therefrom.

The input unit 7240 may include input keys and function keys that receive numerical or alphabetical information and set and control a variety of functions in the user terminal device 7200. The input unit 140 includes input keys and function keys that receive numerical or alphabetical information and set and control a variety of functions in the mobile device 100. For example, the input unit 140 may include a call key for requesting a voice call/a video call, a key for requesting the termination of a voice/video call, a volume key for controlling the output volume of audio signals, direction keys, and the like. The input unit 140 creates signals for controlling mobile advertising services and transfers the signals to the controller 110. The input unit 140 may be implemented with one of a touch pad, a touch screen, a key pad, a joystick, a wheel key, and the like, or a combination thereof.

The display 7230 displays various kinds of menus of the user terminal device 7200 and information input by the user or information provided to the user. The display 7230 may provide various types of screens according to the operations of the user terminal device 7200, such as an idle screen, a message writing screen, a call screen, and the like. In particular, the display unit 7230 displays a screen for notifying a user of the reception of a mobile advertising message, a screen for showing a received mobile advertising message in a preset search mode, various screens according to the execution of the mobile advertising application, and the like.

The display 7230 may be formed of a Liquid Crystal Display (LCD), an Organic Light Emitting Diode (OLED), an Active Matrix Organic Light Emitting Diodes (AMOLED), or the like. If the display 7230 is formed of a touch screen, the display 7230 may also serve as the input unit 7240.

The memory unit 7220 may store programs required for controlling the operations and functions according to exemplary embodiments of the present invention, user data, and the like. The memory unit 7220 may also store an Operating System (OS; 7221) for controlling the entire operation and for booting the user terminal device 7200. The memory unit 120 may store application programs for controlling the options of the user terminal device 7200, such as a camera function, an audio playback function, an image/video playback function, a short-range wireless communication function, and the like. The memory unit 7220 may also store user data created when the user terminal device 7200 is used, such as text messages, game files, music files, movie files, and the like. The memory unit 7220 may store a phone book program for managing the phone book 7223. The phone book management program transmits to the data server 220 the phone book 123 or various intrinsic information registered with the phone book 123 to manage the phone book. Or, the phone book management program may associate the phone book with the advertisement information to manage them. For example, when the phone book management program outputs a list of phone book items, the phone book management program may represent whether each item includes mobile advertising messages. The representation may be achieved with an icon in a numerical form. If a specific item is selected from the list, the phone book management program outputs the details. The details of the selected item may be represented as various screens as described above in various exemplary embodiments.

The memory unit 7220 may store a mobile advertising application 7222. The mobile advertising application 7222 may receive mobile advertising messages, issued by advertisers within a certain distance of the current location of the user terminal device 7200, and display the mobile advertising messages according to a variety of search modes. The method for mobile advertisement service via the mobile advertising application 122 has been described above in detail, and the explanation thereof will be omitted.

The storage 7225 is a device for storing user data. The storage 7225 may be installed separately from the memory unit 7220 or may include an internal memory allocated to a part of the memory unit 7220. Alternatively, the storage 7225 may include an external memory device, such as a Secure Digital (SD) card, a micro-SD card, a T-flash memory card, and the like.

The controller 7220 may control the entire operation of the user terminal device 7200 and the signals flowing among the components therein. The signals flow among the components via bus lines. The controller 7220 may be a Central Processing Unit (CPU), Application Processors (APs), and the like. The controller 7220 controls the reception and display of mobile advertising messages based on the mobile advertising application 7222 and the phone book 7223.

Meanwhile, as described in FIG. 70, the user terminal device 7200 may selectively further include elements having add-on functions, such as a broadcast module for receiving broadcasts; an audio source playback module, such as a Moving Picture Experts Group (MEPG) Audio Layer 3 (MP3) module; a proximity sensor for detecting the presence of nearby objects; and the like. With the spread of digital convergence, although user terminal devices vary too greatly to list their modifications in this description, it will be easily appreciated by those skilled in the art that the other units equivalent to the above-listed units may be further included in the mobile device.

As described above, according to various exemplary embodiments, the user terminal device may provide advertisement information through various methods. The user terminal device may display the advertisement information in a form of alarm message. When the alarm message is selected, the user terminal device may register information corresponding to the alarm message with the wallet program.

Accordingly, various kinds of available information which is issued to a user may be displayed together with information on a credit card, a bank card, and ID card. Available information may include various information such as a point card, a coupon, a stamp card, and an event coupon. The user may select from the above information and use thee selected information for a settlement.

Specifically, the wallet program, i.e., a settlement program, may sequentially perform a step of registering available information downloaded from a server device by various other applications such as a phone book, a calendar, a gallery, advertisement applications, etc., in response to a settlement being initiated, calculating a settlement amount by applying the registered available information and proceeding with a settlement process for the settlement amount, thereby performing a settlement.

Explaining in detail the settlement process, the settlement program may provide a screen for selecting a settlement means. When a settlement means is selected, the settlement program generates a PIN(Personal Identification Number) input screen to be displayed on a screen. A user may input his/her own password on the PIN input screen. When password input is completed, the user terminal device checks whether the PIN number matches. In case where the PIN does not match, re-inputting his password is requested and when the PIN matches, a settlement proceeds. The settlement may be performed by an NFC tagging or wireless authentication method. In case where the settlement is performed using an NFC tagging, the user terminal device displays a message which guides a contact with the PoS(Point of Sale) terminal device. When the user moves the user terminal device and brings the user terminal device into contact with the PoS system with reference to such message, the user terminal device and the PoS system tranceives the settlement information and performs the settlement. When the settlement is performed by a wireless authentication method, the user terminal device may encrypt various kinds of information on the settlement means selected by the user and transmit the encrypted information to perform the settlement. As described above, according to another exemplary embodiment, advertisement and purchase may be performed as a continual process.

As described above, the user terminal device may provide shopping service together with the PoS (Point of Sale) terminal device, etc. Shopping service may be broadly divided into a step of searching and selecting a product, a step of purchasing a product, a step of performing management after purchase, etc. The advertisement information provided by using a phone book may work favorably to a user, in the step of searching and selecting a product. However, according to another exemplary embodiment, not just the step of searching and selecting a product but also the step of purchasing and the step of performing management after purchase may be performed naturally in a network system including a user terminal device, a server device and a PoS system.

As described above, according to various exemplary embodiments, the user terminal device 100 may be associated with the server device 200 and provide various services. Such server device 200 may be operated by an entrepreneur who sells or advertise a product. However, small merchants who do not have time or financial resources sufficient enough to operate such server device may be considered. Thus, according to still another exemplary embodiment, a system which is capable of providing the above-described various services even to small merchants will be explained.

### < Service-providing system for small merchants >

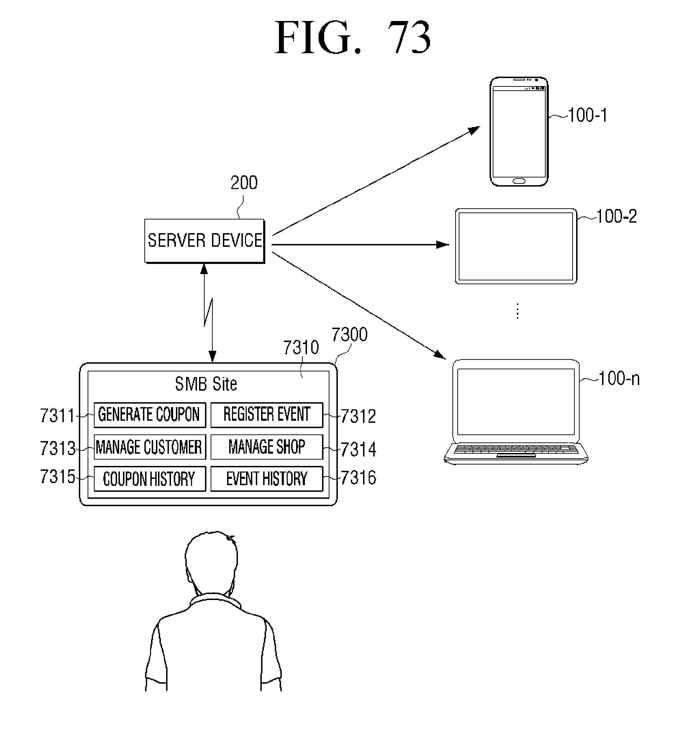

FIG. 73 illustrates an example of a configuration of a service providing system which provides services to small merchants. Referring to FIG. 73, the service-providing system includes a plurality of user terminal devices 100-1 ∼ 100-n, the server device 200 and the entrepreneur terminal device 7300.

The entrepreneur terminal device 7300 and user terminal devices 100-1 ∼ 100-n may be implemented as various types of electric devices such as a cellphone, tablet, PC, TV, PC, laptop computer, PDA, kiosk, etc. The names, the entrepreneur terminal device 7300 and user terminal devices 100-1 ∼ 100-n, may differ depending on whether a person who uses the terminal device is an entrepreneur who runs or manages a specific shop or a user who purchases a product or service at the shop. Thus, it is apparent that the kind of the terminal device itself may be the same.

That is, an entrepreneur who does not afford to run the server by himself may use an entrepreneur terminal device 7300 and is capable of accessing a server device 200. The server device 200 provides a service screen via the entrepreneur terminal device 7300.

An entrepreneur may subscribe to a service provided by the server device 200 via the service screen. That is, when the entrepreneur selects a subscription menu on a service screen, the server device 200 provides a guide screen for guiding various information such as personal information of the entrepreneur, shop information, and terms for subscribing to the service. When the entrepreneur inputs various kinds of required information and satisfies the terms for subscription (e.g., age, agreement to information provision and use, payment for fee for providing information, etc.), the information on the entrepreneur and the shop owned by the entrepreneur is registered. The server device 200 assigns an entrepreneur account to the entrepreneur. The entrepreneur establishes an ID and password for the entrepreneur account and use the entrepreneur account.

FIG. 73 illustrates an example of a service screen 7310 provided to the entrepreneur terminal device 7300 shown in case where the entrepreneur signs in by an entrepreneur's account.

The service screen 7310 may be named a SMB (Small Merchant Business). Menus for various kinds of menus 7311 ∼ 7316 which are available to an entrepreneur may be displayed on a service screen 7310. FIG. 73 illustrates a case where a coupon generating menu 7311, an event registration menu 7312, a customer management menu 7313, a shop management menu 7314, history on coupon use 7315, history on an event 7316, etc. are displayed.

When the coupon-generating menu 7311 or the event registration menu 7312 are registered, the server device 200 provides a screen which is capable of generating various kinds of available information such as a coupon or an event card. The entrepreneur terminal device 7300 may display such generation screen, and the entrepreneur may generate available information such as an appropriate coupon, an event card, etc. at the generation screen. Various kinds of tools which are capable of conveniently generating a coupon or an event card may be provided at the generation screen.

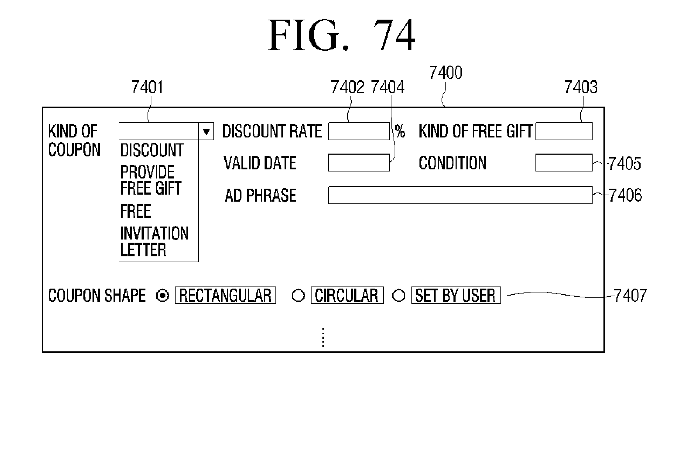

Referring to FIG. 74, at the generating screen 7400, various tools such as a selection area 7401 for selecting kinds of coupons, an input area 7402 for selecting discount rate in case of a discount coupon, an input area 7403 for inputting the name of a free gift to be provided in case of a free gift coupon, a selection area 7404 for selecting a valid date by which a coupon is used, a selection area 7405 for selecting conditions for coupon use, an advertisement phrase input area 7406 for inputting an advertisement phrase included in a coupon, a selection area 7407 for selecting a coupon shape, etc. may be displayed. Some from among the tools may not be selected depending on the kinds of coupons, and thus such tools may be displayed as non-activated state where selection is impossible. For instance, in case of a free gift coupon, a discount rate input area 7402 is not needed, and thus the area 7402may be displayed dim. Or, areas other than a selection area 7401 for selecting kinds of a coupon may be selectively displayed depending on kinds of a coupon.

FIG. 74 illustrates a case where a coupon is generated depending on a set value inputted by a user. However, the case illustrated in FIG. 74 is merely an example, and the tools displayed on the generating screen 7400, the positions and contents of the tools, etc. may be implemented differently. For instance, as another example which is different from FIG.74, a user may implement a screen by receiving a coupon image which a user directly draws as it is, displaying various reference coupon images which a user may select, and inputting texts which are to be inserted in the coupon image and editing by a user. The entrepreneur, by using the screen which is generated as in FIG.74, may input various data to generate available information, and generate available information accordingly.

When generation is completed, the entrepreneur terminal device 7300 transmits to a server device a request for generating available information. The server device 200, when a request for generating available information is input, provides various available information, that is, a coupon or an event card is generated, and is stored in database. The server device 200, when a terminal device which satisfies a preset condition is detected from among user terminal apparatuses 100-1 ∼ 100-n, may transmit to the terminal device available information. Accordingly, a user of the user terminal apparatus may use the available information, that is, a coupon or an event card for e-shopping, and receive various services such as discount or free gifts, or the like. Consequently, the entrepreneur, though not directly making a coupon or an event card, may provide a coupon or an event card through the server device 200. Accordingly, the entrepreneur may develop various advertising activities.

In addition, if menus such as the customer management menu 7313 or the shop management menu 7314 are selected, the server device 200 may provide a management screen including information on customers who have purchased in the shop or visited the shop, or information such as products which are sold in the shop, workers, or sales revenue, or the like. Accordingly, without having a separate management system, entrepreneur may suitably manage his/her own business by an access to the server device 200 through the terminal device 7300.

In addition, in the service screen 7310, menus such as the history on coupon use 7315 or the history on an event 7316 may be provided. The entrepreneur may select these menus and request history information to the server device 200. The server device 200, when a coupon or an event card issued by the registered entrepreneurs is downloaded to a user terminal device, or the coupon or the event card is used for e-shopping by the user terminal device, stores the history information. Accordingly, when request for history information is input from the entrepreneur terminal apparatus 7300, the stored history information may be provided to the entrepreneur. The history information may include the number of downloads, the number of use, information of a user thereof, information of purchased products, purchase data, and purchase time of various available information.

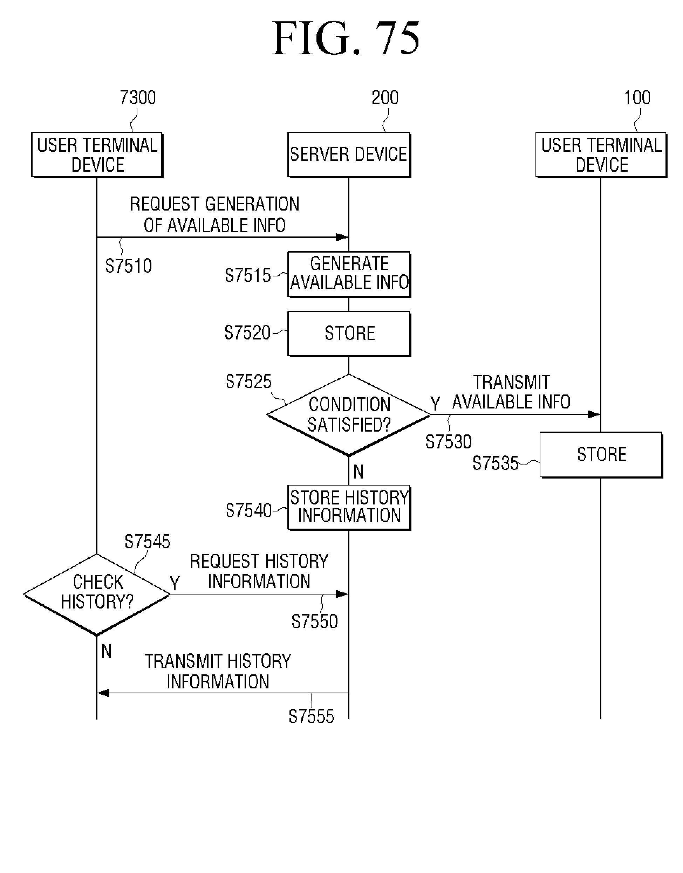

FIG. 75 is a timing diagram provided to explain a method of providing information of a service providing method. According to FIG.75, the entrepreneur terminal device 7300 requests generation of available information to the server device 200 (S7510). Request for generation of available information may be automatically transmitted to the server device 200, when the entrepreneur enters various data on the screen which is displayed on the entrepreneur terminal device 7300 and presses a completion button.

The server device 200 generates available information (S7515) according to request of generation of available information, and stores the information (S7520). As described above, the server device 200 may generate and store available information by entrepreneurs by assigning accounts for various entrepreneurs, and using data which is input through the accounts.

In this state, the entrepreneur terminal apparatus 7300, when a preset condition is satisfied (S7525), transmits available information to the user terminal device 100 which satisfies the condition (S7530). The user terminal device 100 which receives available information stores (S7535) the available information. Here, the condition may be set in a diverse manner as described above in the exemplary embodiments.

For instance, when a phone book program is executed in the user terminal device 100, and a keyword is input on the phone book screen, the user terminal device 100 may transmit the keyword to the server device 200. The server device 200 may search for entrepreneur information which includes a keyword, and when the entrepreneur information is present, may determine that the condition is satisfied. As another example, when new contact list information is added to a phone book or new schedule information is added to a calendar at the user terminal device 100, the user terminal device 100 may transmit the entered information to the server device 200. The server device 200, when the entrepreneur information which includes the transmitted information is present, may determine that the condition is satisfied.

As still another example, the server device 200 may identify location of the user terminal device 100, and when entrepreneur corresponding to the location occurs, the server device 200 may determine that the transmission condition is satisfied. In this case, the user terminal device 100 may selectively transmit entrepreneur information of a shop which is located within a specific radius from present location of the information.

In addition, transmission condition of the active information may be set differently according to the exemplary embodiments. When this condition is not satisfied (S7525), the server device 200 does not issue active information.

Meanwhile, it has been illustrated in FIG.75 that active information is transmitted immediately, but as described in other exemplary embodiments, the server device 200 may transmit an alarm message notifying that there is active information, and when the user terminal device 100 transmits a request for download in response to the alarm message, the server device may transmit active information then.

The server device 200, when active information is transmitted, may store history information related to transmission of the active information (S7540). The history information may include various information such as a type of transmitted active information, the number of transmission, target of transmission, timing of transmission, date of transmission, and the like.

The entrepreneur terminal device 7300, when a confirmation command for history information is input (S7545), may request history information to the server device 200 according to the command (S7550). The server device 200 transmits history information to the entrepreneur terminal device 7300 according to the request (S7555).

As described above, the server device 200 may provide various services such as issuance of active information such as a coupon or an event card, advertisement service, information check service, and management service for the registered entrepreneurs. In particular, the server device 200 may track coupon use information for each of users and download information, and thus, analysis service on purchase pattern or consumption pattern of individual users or statistics service may be provided.

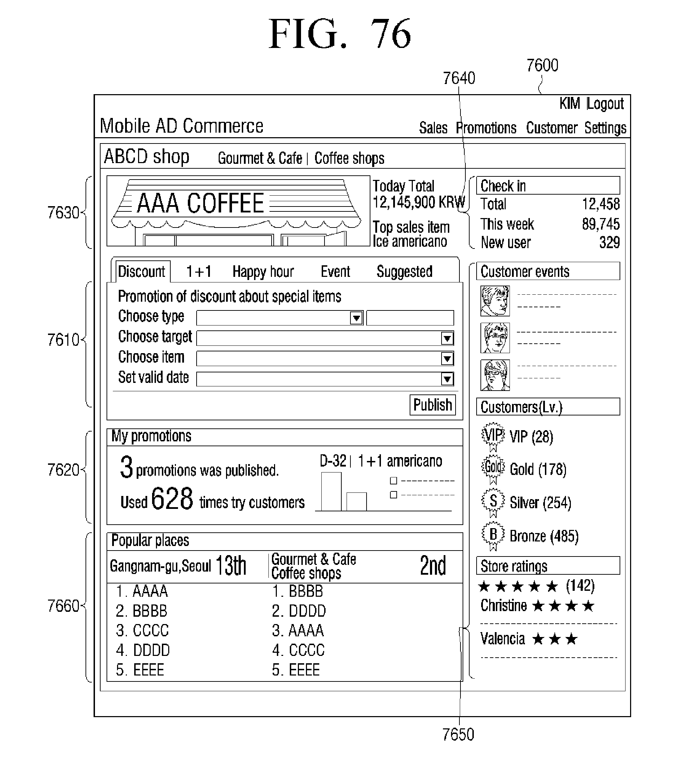

FIG.76 is a view illustrating an example of a management screen which is displayed on the entrepreneur terminal device 7300. According to FIG.76, the entrepreneur terminal device 7300, by accessing the server device 200, may display the management screen 7600 provided by the server device 200. In the management screen 7600, various information may be displayed according to a preset layout.

Specifically, an area for issuing a coupon for a specific item 7610, an area for displaying and history information related to the use and downloading of available information which is being executed 7620, an area for displaying various information related with sales 7630, a check-in area 7640, an area for displaying customer information 7650, an area displaying information on adjacent region, etc.

Accordingly, even small merchants running small-sized shops may effectively manage his/her shop and establish various sales promotion strategies.

As described above, the service providing system according to still another exemplary embodiment may be utilized by various shop owners.

In case the number of entrepreneurs who subscribe to the service providing system, the kinds and the number of information provided to users also increase. In this case, when too much information is provided, a user may find it difficult to utilize the information. Taking this into consideration, according to still another exemplary embodiment, information appropriate in consideration of circumstances of a user terminal device may be selectively provided. Hereinafter, a method of providing a service which is responsive to the circumstances of a user terminal device will be explained below.

### <Exemplary embodiment illustrating the provision of a service which is responsive to the circumstances of a user terminal device >

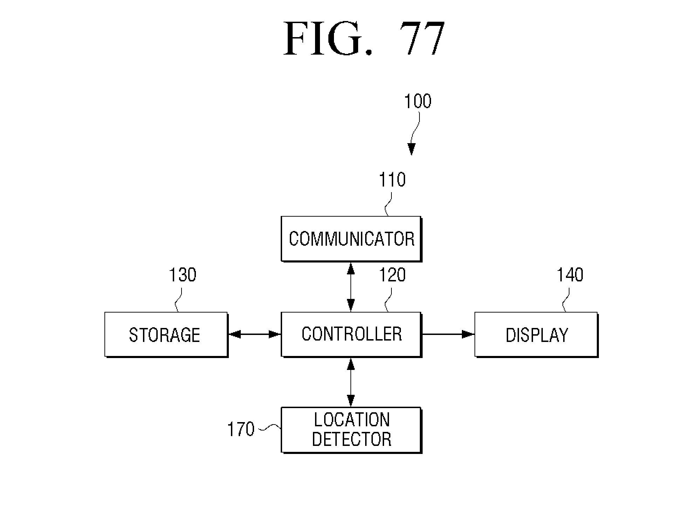

FIG. 77s is a block diagram illustrating a configuration of a user terminal device according to anther exemplary embodiment. Referring to FIG. 77, a user terminal device includes a communicator 110, a controller 120, a storage 130, a display 140 and a location detector 170.

The location detector 170 is an element for detecting location of a user terminal device. By way of example, the location detector 170 may locate location by using a GPS (Global Positioning System) as described in the GPS receiver 151 illustrated in FIG. 71. Specifically, the location detector 170 calculates reception time of a signal received from at least the satellites and a distance from the current location, thereby detecting the current location. By way of another example, the location detector 170 may detect the current location of the user terminal device 100 based on the station information which is connected by the communicator 110. Or, the location detector 170 may infer the current location of the user terminal device 100 based on the location information which is provided from external devices which are connected in wireless or wired manner. As described above, the location detector 170 provides location information which displays the current location of a user terminal device.

The storage may store various programs needed for operations of the user terminal device 100, data, etc. By way of example, the storage 130 may store a coupon which can be used in electronic shopping, or available information such as an event card, a stamp card, etc. Such available information may be information which is downloaded from external server devices as described above. That is, as described in the above-described various exemplary embodiments, the communicator 110 may receive various kinds of advertisement information which is provided from the server device or available information. The storage 130 may receive such information.

The controller 120 may use location information which is provided by the location detector 170 and available information stored in the storage 120 and then may proceed with the electronic shopping processes. While the electronic shopping processes proceeds, the display 140 displays various screens under the control of the controller 120, and a user may proceed with electronic shopping through such screen.

Hereinafter, various examples of methods using such information will be explained.

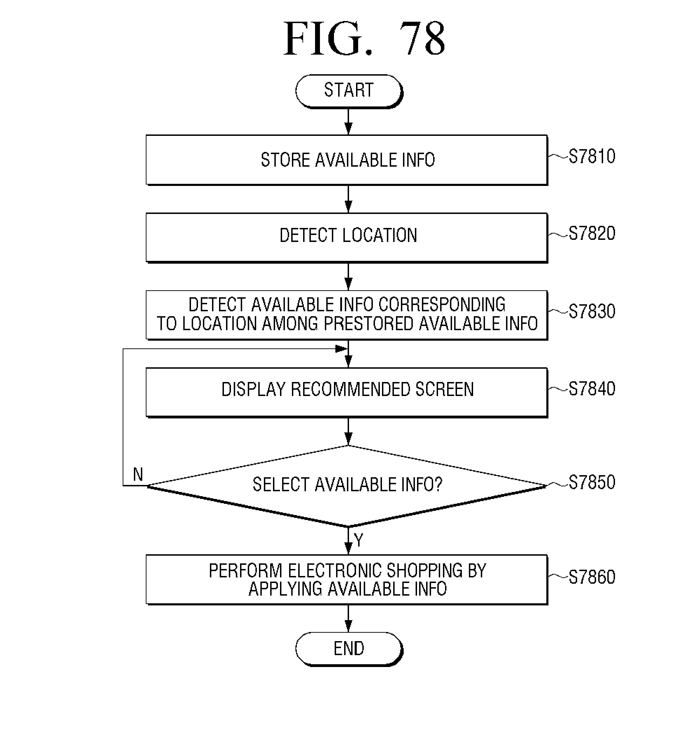

According to FIG. 78, the controller 110, when available information is downloaded from the server device 200 through the communicator 110, stored the available information (S7810). In this state, when location of the user terminal device is detected (S7820), the controller 120 selectively detects available information corresponding to the location (S7830). Then, a recommendation screen is configured to recommend the detected available information and then is displayed on the display 140 (S7840). The controller 120 may execute location-based recommendation application and recommend available information.

The user may select available information on the recommendation screen. The controller 120, when available information is selected (S7850), may use the selected available information and perform electronic shopping (S7860). The electronic shopping may be performed by means of a wallet program. The electronic shopping may proceed differently depending on the kinds of available information. That is, the available information may be implemented variously such as in a form of coupon information, event information, stamp card information.

For instance, in case where one discount coupon is selected, the controller provides a wallet program with the discount coupon. The wallet program uses the discount coupon and performs arithmetic operations on the discounted settlement amount. The controller 120 performs a settlement once approval of the discounted amount is made. The settlement process using a discounted coupon has been explained in detail above, and thus the explanation thereof will be omitted.

FIG. 78 provides explanation based on available information. However, not just available information such as a coupon, an event card but also advertisement information may be provided in the same manner.

The controller 120 sequentially recommends available information displayed on the recommendation screen based on various standards. For instance, the controller 20 may calculate a distance between the position of the user terminal device 100 and the position of the shop which issues the available information by available information.

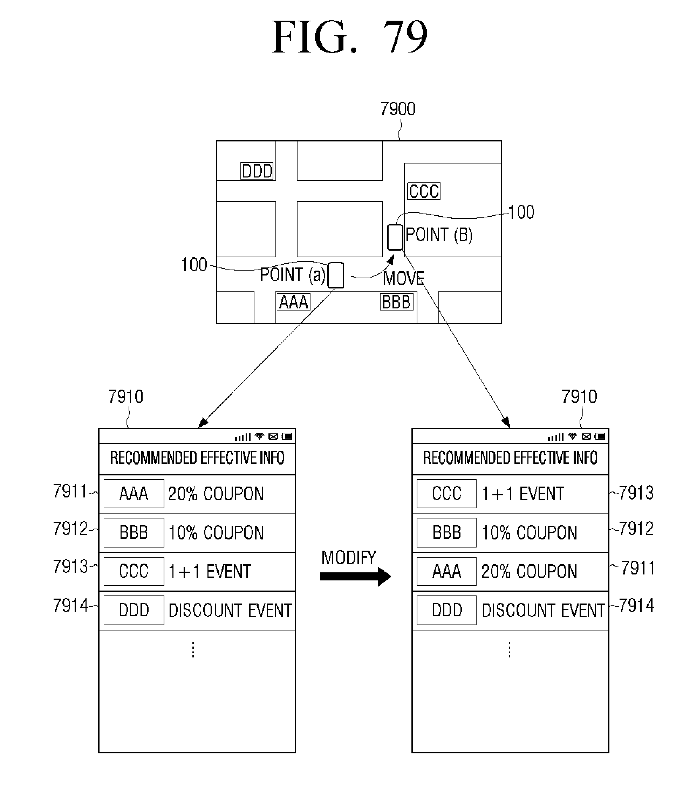

FIG. 79 is a view provided to explain a method of recommending available information based on the distance from the current location. In an environment as in the map 7900 in FIG. 79, in case where the user terminal device 100 is located in the location (a), available information is sequentially displayed, the available information starting from the shop AAA which is closest from the location (a) through the shop DDD which is farthest from the available information 7911. In this state, in case where the user terminal device 100 moves to the location (b), the recommendation screen 7910 is altered and then the available information 7913 of the shop CCC which is closest to the location (b) is displayed in the top priority.

Meanwhile, according to the exemplary embodiment, the server device 200 may selectively provide only available information or advertisement information issued by the shop which is registered with the phone book, but not limited thereto. Instead, the way the server device 200 provides available information or advertisement information varies according to exemplary embodiments.

In addition to the location or distance, the controller 120 may recommend available information based on various criteria. For instance, the controller 120 may assign priority to each of available information and sequentially recommend available information based on the priority. Or, the controller may recommend a coupon which can be has been already downloaded and can be used readily than other coupons rather than a coupon that should be downloaded.

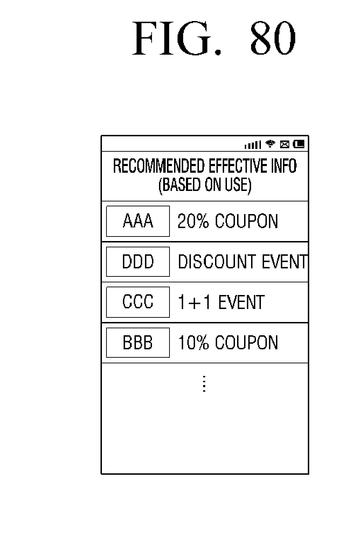

FIG. 80 illustrates an example of a screen configuration which recommends available information based on degree of popularity. The level of popularity may be calculated based on the number of recommendation, the number of receiving and making phone call at a shop, the number of visiting the shop, a coupon-related history, the number of coupons, discount rate, discount amount, the price of the free gift, etc. The controller may receive such information from the server 200 and recommend available information based on the received information.

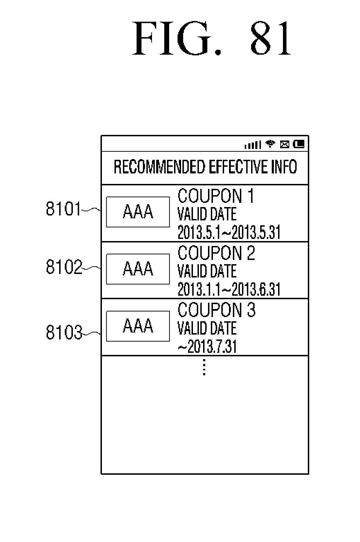

FIG. 81 illustrates an example of configuration of a screen which recommends available information based on the valid date. Referring to FIG. 81, the controller may recommend various kinds of coupons or event cards in an order where the valid date of the coupons or event card expires.

As described above, location-based recommendation may apply even in an exemplary embodiment where available information is recommended based on criterion such as level of popularity, valid date, etc. It is apparent that the above way of recommendation may be used not just for available information but also for advertisement information.

Meanwhile, the exemplary embodiment described above explains that the user terminal device 100 independently recommends information based on a location. However, the operation of information recommendation may be performed by the server device 200.

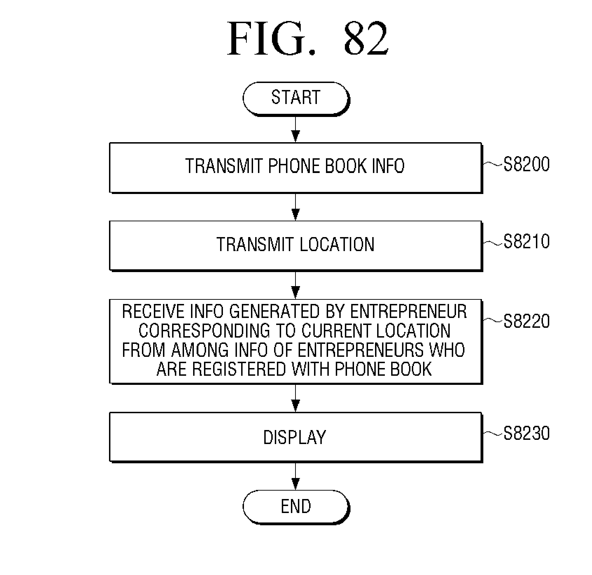

FIG. 82 is a flowchart provided to explain another method for recommending available information. Referring to FIG. 82, the user terminal device 100 transmits phone book information to the server device 200 (S8200). Also, the user terminal device100 may transmit location information to the server device 200 (S8210). The phone book information and location information may be transmitted periodically and be transmitted when various events such as an event where a phone book event is updated, an event when the user terminal device 100 moves more than a certain distance, an event where the user terminal device 100 is turn-off first and then turn-on, an event where a user command for renewing information is updated, etc. occurs.

According to another exemplary embodiment, the server device 200 may obtain location information of the user terminal device 100 from a separate external device such as a station which controls a cell which is connected to the user terminal device 100.

When the location of the user terminal device 100 is identified, the server device 200 may transmit to the user terminal information 100 the information issued by an entrepreneur which corresponds to the current location from among the entrepreneur information which is registered with the phone book (S8220). The information may include address information or image of the entrepreneur, various advertisement information, various kinds of available information, etc.

The user terminal device 100 may display the received information in a pop up format (S8230). The server device 200 may determine information to be recommended or the ranking of the information in recommendation based on various standards such as the current location of the user terminal device, the level of popularity of each information, etc.

As described above, according to the exemplary embodiment, information which is responsive to the environment of the user terminal device may be recommended, and the level of using information may increase.

Meanwhile, the user terminal device may associate the entrepreneur information which is provided from the server device, etc. with a phone book and use the entrepreneur information.

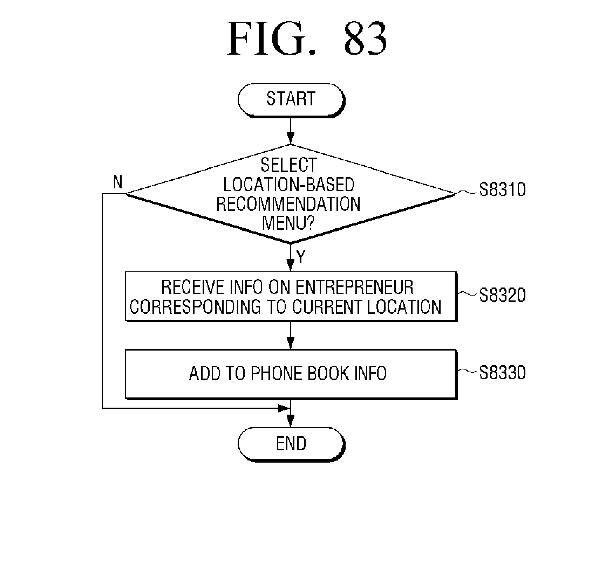

FIG. 83 is a flowchart provided to explain in detail an exemplary embodiment where information provided form the server device is used for a phone book. Referring to FIG. 83, a user may select a location-based recommendation menu from among menus provided by the user terminal device 100. The display 140 which is provided to the user terminal device 100 displays a screen which includes a location-based recommendation menu.

When a location-based recommendation menu is selected on a screen (S8310), the communicator 110 may receive from the server device 200 the entrepreneur information which corresponds to a current location of the user terminal device 100 (S8320).

The server device 200 may receive the location information of the user terminal device 100 directly from the user terminal device 100 or from other devices, and then collectively transmits entrepreneur information corresponding to the location information. When the location information of the user terminal device 100 is directly detected from the user terminal device 100, the user terminal device 100 may include a location detector 170 for detecting the location of the user terminal device 100.

When entrepreneur information is transmitted through the communicator 110 by the server device 200, the controller adds the transmitted entrepreneur information to phone book information (S8330). The phone book information refers to information which is stored in the storage 130 provided by the user terminal device 100. The phone book program which is executed by the controller 120 may use phone book information and constitute a phone book screen.

According to such exemplary embodiment, a user may collectively download from the server device 200 phone numbers of various kinds of shops and small merchants in the region and use them. Such exemplary embodiment may be performed by region, but may be performed by specific building or shop.

For instance, in case of a large-sized shopping mall, small merchants may be densely populated inside. In this case, when a user enters inside of the large-sized shopping mall, the server device 200 may collectively provide the phone numbers of all the small merchants in the shopping mall. Such service may be provided through a contract between an entrepreneur running the shop and the server device 200.

Meanwhile, the controller may classify the downloaded entrepreneur information as a new group in group menus in the phone book screen and store the downloaded information. The downloaded overall entrepreneur information may be grouped in the new group.

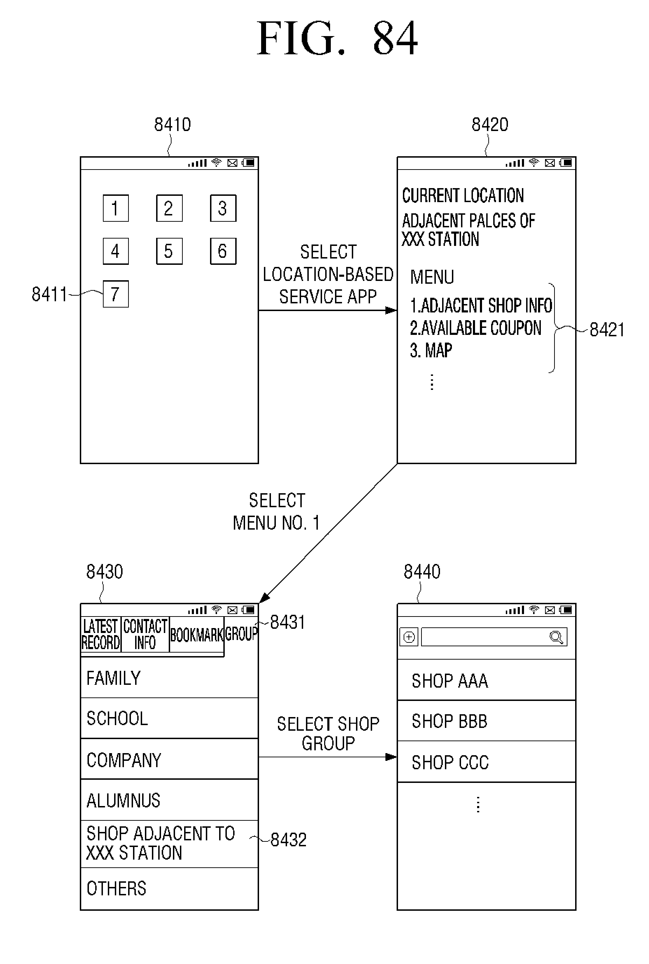

FIG. 84 is a view provided to explain an operation of a user terminal device 100 according to an exemplary embodiment of FIG. 83. Referring to FIG. 84, icons regarding location-based service applications may be displayed on a home screen or an icon-arranging screen 8410 of the user terminal device 100. When the user selects the icon 8411, the controller 120 executes the location-based service application. Accordingly, the controller 120 identifies current location of the user terminal device 100 by using the location detector 170 and displays a screen 8420 which includes various kinds of menus 8421 which can be provided based on the current location.

When the location-based service menu is selected on the screen 8420, the controller 120 transmits location information to the server device 200 and receives the overall entrepreneur information of the corresponding location.

In case where a phone book program is executed in this state, the controller 120 displays the phone book screen 8430.

A new group 8432 which divides the received entrepreneur information into groups is additionally displayed on the group menu 8431 of the phone book screen 8430. When a user selects the group 8432, the controller displays a phone book screen 8440 which includes various kinds of entrepreneur information received from the server device 200.

Meanwhile, FIGS. 83 and 84 explain that information on all the entrepreneurs in the area is provided. However, the server device 200 may selectively provide information on some entrepreneurs only based on information related to the entrepreneurs stored in the phone book of the user terminal device 100 or other conditions.

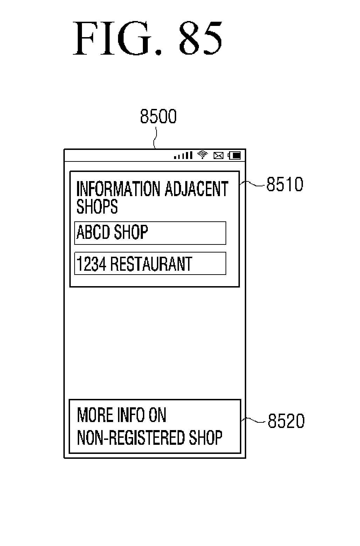

Referring to FIG. 85, the user terminal device 100 selectively displays a screen 8500 which selectively displays only information 8510 related to the shop registered with the phone book of the user terminal device 100 from among the shops within a certain diameter based on the current location. Here, the information may be advertisement information, available information, etc. rather than contact information. In case where the user wishes to check shop information, the user may select more menus for shop information. In case where the controller 120 selects the corresponding menu 8520, the controller may request the server device 200 for information on all of the shops and display the information.

Meanwhile, FIGS. 83 and 84 explain exemplary embodiments where the received information is used by the phone book program. However, the received information received from the server device 200 may be used for various programs such as a calendar program, a gallery program, etc., in addition to the phone book program.

That is, in case where event card information, etc. is received from the server device 200, the controller 120 may provide the corresponding information to the calendar program and renew the calendar based on the schedule described in the event card. Or, in case where a coupon image, an event card image, a stamp coupon image, an advertisement image, etc. are received, the controller 120 may provide the image to the gallery program and arrange the image such that a user may read the image together with other photos or videos.

Meanwhile, in the above exemplary embodiment, various kinds of information provided from the server device 200 may be displayed through various kinds of application-executing screen such as a phone book screen or a calendar screen or displayed by a separate popup window. However, received information may be displayed by other various methods. For instance, when a user makes an outgoing call using a user terminal device 100, until a counter answers the outgoing call, a call standby screen may be displayed. According to still another exemplary embodiment, such call standby screen maybe used to provide various kinds of information. Hereinafter, still another exemplary embodiment which provides information by using a call standby screen will be explained in detail.

### <Exemplary embodiment which provides information using a call standby screen>

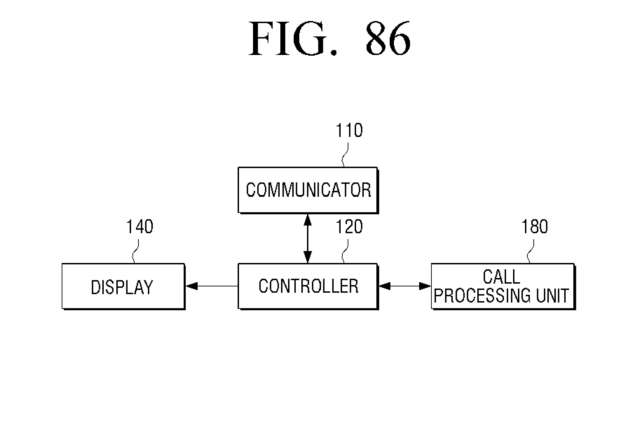

FIG. 86 is a block diagram illustrating a configuration of a user terminal device according to still another exemplary embodiment. Referring to FIG. 86, the user terminal device 100 includes a communicator 110, a controller 120, a display 140 and a call-processing unit.

The call-processing unit is an element for performing telephone conversation. The call processing unit 180 may include a RF processing module, a data processing module, a microphone, a speaker, etc. The RF processing module (not illustrated) includes an RF transmitter (not illustrated) which outputs an RF transmitting signal by converting or amplifying the frequency of a signal to be transmitted, an RF receiver (not illustrated) which performs low-noise amplification and converts the frequency into base band, etc. The data-processing module (not illustrated) may include a modem, a codec which performs modulation and demodulation on an RF signal, etc. When a communication link is connected to a counterpart, the call-processing unit 180 generates an RF transmitting signal based on an audio signal inputted from a microphone and outputs the RF transmitting signal through a communication link and converts the RF receiving signal received from the counterpart into an audio signal and outputs the received audio signal through a speaker, which allows a voice call to be performed.

When a phone number is input and a call connection button is selected, the controller 120 controls the call-processing unit 180 to perform an outgoing call. When the outgoing call is made, the communicator 110 transmits the outgoing call information to the server device 200. Here, the outgoing call information may include a telephone number of a counterpart. When the outgoing call information is received, the server device 200 searches the information issued by an entrepreneur which has the corresponding outgoing call information from among -pre-stored information, and transmits the searched information to the user terminal device 100.

When information is received through the communicator 110, the controller 120 constitutes a call standby screen based on the received information and displays the call standby screen through a display 140, until the outgoing call is connected. Here, the received information may include at least one of various information such as an advertisement phrase, an image, a coupon, an event guide card, a message for informing the latest coupon issuance, etc.

Accordingly, the user, while waiting for the outgoing call to be connected, may check various kinds of information issued by a counterpart. For instance, in case where a user checks issuance of the latest issued coupon through the call standby screen, the user may input a request for downloading the latest coupon. The controller 120 may transmit the download request to the server device 200 and download the coupon.

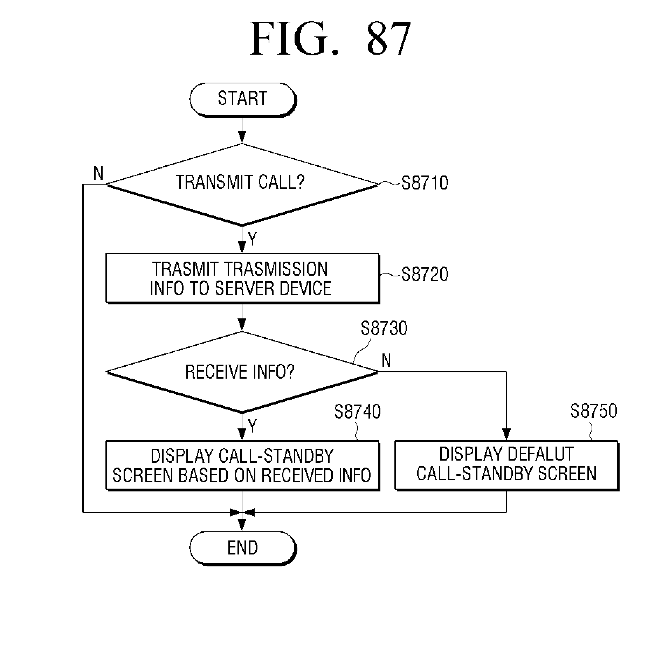

FIG. 87 is a flowchart provided to explain a service-providing method of a user terminal device according to an exemplary embodiment. Referring to FIG. 87, the user terminal device 100, when a call transmission is performed(S8710), transmits the transmission information to the server device (S8720).

Accordingly, when various information issued by an entrepreneur which has the corresponding transmission information from the server device 200 (S8730), the user terminal device 100 displays a call standby screen based on the received information (S8740).

By comparison, the user terminal device 100, when information is not received, displays a default call standby screen (S8750). A default call standby screen may be configured to include any user icon, transmission information, etc.

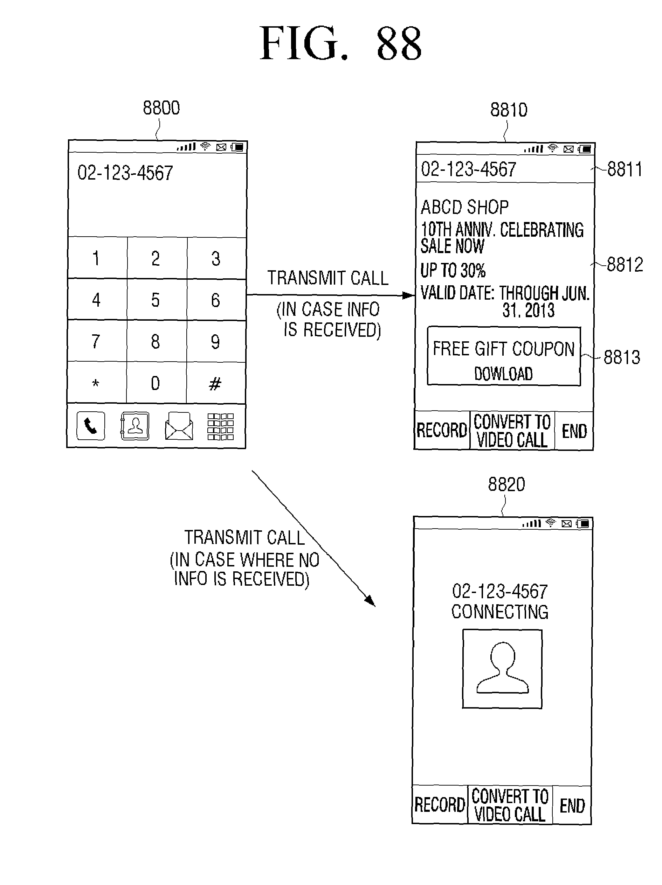

FIG. 88 is a view provided to explain an operation of a user terminal device 100 which provides service according to FIG. 87. Referring to FIG. 88, when a telephone number is inputted through a telephone screen 8800is inputted or contact information is selected through a phone book screen first and then a call button is selected, an outgoing call is made.

When various information is received from the server device 200 after making an outgoing call, the controller 120 displays a call standby screen 8810 including the received information. Referring to FIG. 88, transmitter information 8811, advertisement information 8812, a coupon 8813, etc. may be included in the call standby screen 8810.

Meanwhile, in case where no information is received after making an outgoing call, the controller 120 displays a default call standby screen 8820. In this case, when there is a registered image with respect to a , the controller 120 may display the image on the default call standby screen 8820.

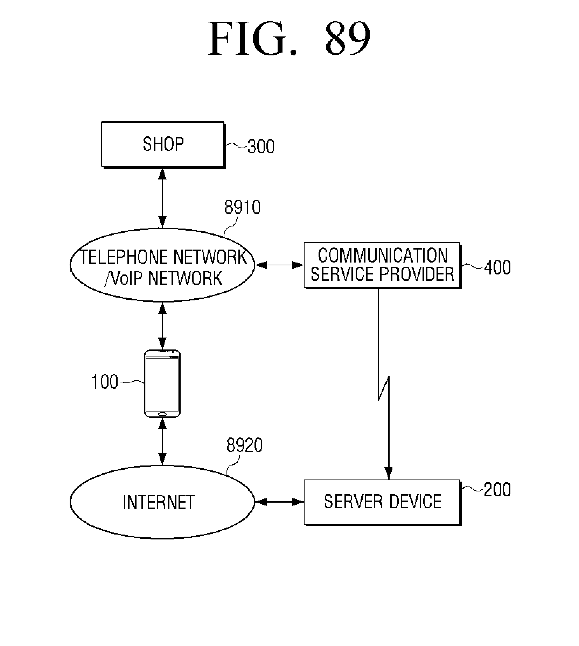

FIG. 89 is a view illustrating a configuration of a network system according to an exemplary embodiment. Referring to FIG. 89, the user terminal device 100 may perform a telephone conversation with a calling party, i.e., a shop 300, through a telephone link or VoIP link 8910. A communication service provider 400 refers to a communication management system which is managed by a communication service provider.

The user terminal device 100 may perform communication with the server device 200 through a network such as Internet 8920.

The server device 200 may receive transmission information of the user terminal device 100 from a communication service provider 400. The server device 200, when the transmission information is received, detects available information corresponding to the transmission information and transmits the detected available information to the user terminal device 100.

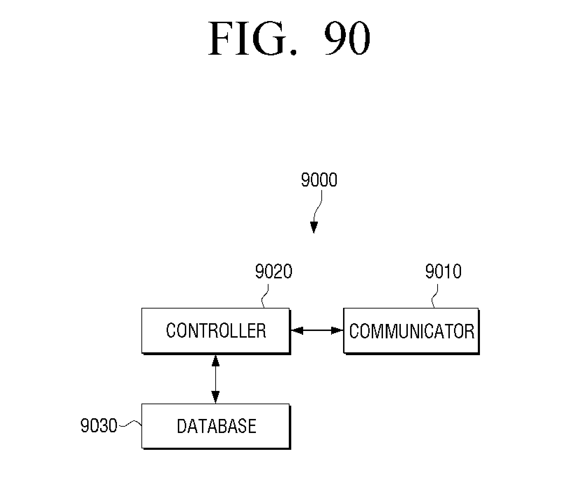

FIG. 90 is a block diagram illustrating a configuration of a server device 200 which uses location of the user terminal device and provides various services. Referring to FIG. 90, the server device 200 includes a communicator 9010, a controller 9020, and a database 9030.

The database 9030 is an element for storing various information provided from the service provider. Specifically, the database 9030 may store various information such as various advertisement information, a coupon, an event card, etc.

The communicator 9010 is an element for performing communication with various user terminal device 100.

The controller 9020 may perform various operations based on various information provided from the user terminal device 100 and information stored in the database 9030.

Operations of the controller 9020 may be performed in various methods according to an exemplary embodiment.

By way of example, the controller 9020 may receive phonebook information from the user terminal device 100. The controller 9020 determines whether the information stored in the database 9030 includes information issued by a service provider who is registered with the phone book information. When the information issued by a service provider is included in the information stored in the database 9030, the controller transmits the information to the user terminal device 100.

As another example, when an outgoing call is made in the user terminal device, the controller 9020 obtains the outgoing call information through the communicator 9010.

In the above examples, information may include at least one of messages for informing the issuance of an advertisement phrase, an image, a coupon, an event guide card, and latest issuance of a coupon.

Meanwhile, the controller 9020 may provide only information which has not been provided to the user terminal device 100 among the information stored in the database 9030. For instance, in case there exists a new coupon, the controller may automatically transmit the new coupon based on the location information of the user terminal device and transmission information.

Also, the controller 9020, when the information on the user terminal device which transmits the transmission information is not stored in the database 9030, may register a user of the user terminal device with the database 9030 as a new customer. In this state, the controller 9020, when an instruction of checking a new customer is inputted from a service provider which has transmission information, may transmit the information on the registered new customer to the service provider.

As described above, the server device 200 may provide various information by various methods according to an exemplary embodiment.

The service method according to exemplary embodiments may be implemented in a form of a program that can be executed through various computer means and be registered with a non-transitory readable medium.

Specifically, a recording medium where a program is stored, which performs communication with plurality of user terminal devices and sequentially performs a step of receiving information stored in each of user terminal devices, updating database where advertisement information is stored by using the received information, in case of a searching word being inputted on a phone book screen of one user terminal device among the plurality of user terminal devices, searching advertisement which corresponds to the searching word in the database, and transmitting the search result to the user terminal device, thereby providing advertisement service, is mounted on the server device, thereby being capable of supporting the above-described advertisement service method.

Further, in the above-described device, a search method which includes a step of displaying a phone book screen, in case of an searching word being inputted on the phone book screen, transmitting the searching word to the server device, receiving information corresponding to the searching word among the information stored in the server device and displaying the received information on the phone book screen may be executed. Such searching method may be encoded as a program, be stored in a non-transitory readable medium and then may be mounted onto the user terminal device to be used.

Further, in a user terminal device, a recording medium where a program is stored, which sequentially performs a step of displaying a phone book screen, in case of an searching word being inputted on the phone book screen, transmitting the searching word to the server device, receiving information corresponding to the searching word among the information stored in the server device and displaying the received information on the phone book screen, is mounted, thereby being capable of supporting the above-described advertisement service method.

Or, a recording medium where a program is stored, which performs a step of displaying advertisement information on an execution screen of an application, in case of advertisement information being selected, automatically executing a settlement program and displaying a settlement screen which includes a settlement means, in case of a settlement means being selected on the settlement screen, performing a settlement using the settlement means, is mounted on a user terminal device, thereby supporting the shopping method.

Non-transitory readable media may store program instruction, data file, data structure, etc. individually or in combination with the above. Meanwhile, a program instruction which is stored in a recording medium may be specially designed or configured or may be published to those skilled in the art and thus available to those skilled in the computer software field. The computer readable media include a hardware device which is specially configured to store and perform instructions of programs such as magnetic media such as hard disk, floppy disk, and magnetic tape, optical media such as CD-ROM, and DVD, CD-ROM, DVD, magneto-optical media such as a floptical disk, and ROM, RAM, floppy disk, etc. Instruction includes not only a machine language code which is produced by a complier but also a high-level language code which is capable of being executed by a computer using an interpreter. The above described hardware may be configured to operate as at least one software module for operating the operations of the present invention.

The foregoing embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A method of providing an advertisement service of a user terminal device, the method comprising:
registering a contact number of at least one advertiser in a phone book;
receiving advertisement information issued from an advertiser registered in the phone book from a server device;
alarming a reception of the advertisement information; and
displaying the received advertisement information in response to a confirmation request signal regarding the advertisement information being received.

2. The method as claimed in claim 1, wherein the alarming comprises:
displaying a number icon indicating a number of advertisement information which is not confirmed on a home screen; and
displaying an alarm message regarding the unconfirmed advertisement information in response to the number icon being selected.

3. The method as claimed in claim 1, wherein the alarming comprises:
displaying an alarm menu on a phone book screen; and
displaying an alarm message regarding unconfirmed advertisement information on the phone book screen in response to the alarm menu being selected.

4. The method as claimed in claim 1, wherein the alarming comprises:
displaying a sliding dialogue window including an alarm message indicating that there is unconfirmed advertisement message.

5. The method as claimed in claim 1, wherein the registering comprises:
reading a QR code or a bar code, and detecting contact information of an advertiser from the QR code or the bar code; and
adding the detected contact information to the phone book.

6. The method as claimed in one of claims 1 to 5, further comprising:
in response to a confirmation request signal regarding the advertisement not being input for a predetermined time, deleting the received advertisement information.

7. A method of providing an advertisement service of a user terminal device, the method comprising:
registering contact information of at least one advertiser in a phone book;
alarming an issuance of advertisement information of an advertiser registered in the phone book;
in response to a confirmation request regarding the advertisement information being input, receiving the advertisement information issued from the advertiser from a server device; and
displaying the received advertisement information.

8. A method of providing an advertisement service of a user terminal device, the method comprising:
displaying an execution screen of an application installed in the user terminal device;
in response to intrinsic information being input through the execution screen, transmitting the intrinsic information to a server device; and
receiving and displaying advertisement information issued from an advertiser corresponding to the intrinsic information from the server device.

9. The method as claimed in claim 8, wherein the receiving and displaying advertisement information comprises:
displaying an alarm message regarding advertisement information issued from an advertiser corresponding to the intrinsic information;
in response to the alarm message being selected, downloading the advertisement information from the server device; and
displaying the downloaded advertisement information,
wherein the application is at least one of phone book program, calendar program, and gallery program.

10. The method as claimed in claim 8 or claim 9, wherein the advertisement information includes at least one of photo, image, message, coupon, stamp card, invitation letter, and event card.

11. A method of managing data of a server device, the method comprising:
receiving a contact number of an advertiser who subscribes to a mobile advertisement service;
receiving intrinsic information stored in a user terminal device of a subscriber who subscribes to the mobile advertisement service;
searching whether the contact number of an advertiser is included in the intrinsic information; and
in response to the contact number of an advertiser being included in the intrinsic information, registering information of the subscriber in client information database automatically.

12. A method of providing an advertisement service of a server device, the method comprising:
receiving and storing intrinsic information stored in a user terminal device;
in response to an advertiser corresponding to the intrinsic information issuing advertisement information, notifying the issuance of advertisement information to the user terminal device; and
in response to a confirmation request regarding the advertisement information being transmitted from the user terminal device, transmitting the advertisement information to the user terminal device.

13. The method as claimed in claim 12, wherein the intrinsic information includes at least one of phone book of the user terminal device, contact information of an advertiser stored in the phone book, schedule information written in a calendar screen, photo stored in the user terminal device, and metadata of the photo.

14. A method of providing an advertisement service of a user terminal device, the method comprising:
displaying a phone book screen including a contact information search area;
in response to a search word being input to the contact information search area, transmitting the search word to a server device;
receiving advertisement information corresponding to the search word from among advertisement information registered in database of the server device;
searching contact information corresponding to the search word from among contact information stored in the user terminal device; and
displaying the searched contact information and the received advertisement information on the phone book screen.

15. The method as claimed in claim 14, further comprising:
in response to new contact information being stored, transmitting the new contact information to the server device and registering the new contact information in database of the server device.

16. The method as claimed in claim 14, wherein the received advertisement information are aligned and displayed on the phone book screen with reference to at least one of a distance from a location of the user terminal device, a number of registrations, a number of calls, and a number of recommendations.

17. A user terminal device, comprising:
a storage configured to store an application;
a display configured to display an execution screen of the application;
a communicator configured to perform communication with a server device; and
a controller configured to, in response to intrinsic information being input on the execution screen, transmit the intrinsic information to the server device, and in response to available information corresponding to the intrinsic information being registered in the server device, display an alarm message corresponding to the available information on the execution screen.

18. The device as claimed in claim 17, wherein the controller, in response to the alarm message being selected, receives the available information from the server device and stores the information in the storage so that a wallet program shares the available information stored in the storage, and in response to the wallet program being executed, provides a settlement service which reflects the available information by the wallet program.

19. The device as claimed in claim 17 or claim 18, wherein the application is at least one of phone book program, calendar program, and gallery program, and intrinsic information includes at least one of phone book of the user terminal device, contact information of an advertiser stored in the phone book, schedule information written in a calendar screen, a photo stored in the user terminal device, and metadata of the photo, and the available information includes at least one of coupon, stamp card, invitation letter, and event card.

20. A user terminal, comprising:
a storage configured to contact information;
a display configured to display a phone book screen including a contact information search area;
a communicator configured to, in response to a search word being input to the contact information search area, transmit the search word to a server device, and receive advertisement information corresponding to the search word from among advertisement information registered in database of the server device; and
a controller configured to search contact information corresponding to the search word from among contact information stored in the storage,
and display the searched contact information and the received advertisement information,
wherein the controller, in response to new contact information being stored in the storage, transmits the new contact information to the server device and registers the new contact information in database of the server device.

21. A method of providing an advertisement service of a server device, the method comprising:
performing communication with a plurality of user terminal devices, and
receiving information stored in each of the plurality of user terminal devices;
updating database where advertisement information is stored using the received information;
in response to a search word being input on a phone book screen of a user terminal device from among the plurality of user terminal devices,
searching advertisement information corresponding to the search word from the database; and
transmitting a search result to the user terminal device.

22. The method as claimed in claim 21, further comprising:
arranging the search result with reference to at least one of a distance from a location of the user terminal device, a number of registrations, a number of calls, and a number of recommendations, and configuring the search result with a format in accordance with a phone book screen of the user terminal device.

23. A searching method of a user terminal device, comprising:
displaying a phone book screen;
in response to a search word is input on the phone book screen,
transmitting the search word to a server device;
receiving information corresponding to the search word from among information stored in the server device; and
displaying the received information on the phone book screen.

24. A server device, comprising:
a communication interface configured to perform communication with a shop management system and a user terminal device;
shop database configured to record shop information received from the shop management system for each shop;
user database configured to record user information received from the user terminal device for each user; and
a controller configured to compare shop information recorded in the shop database and user information recorded in the user database to search matched information, and in response to matching user information and
shop information being searched, issue a coupon included in the searched shop information to a user terminal device corresponding to the searched user information.

25. A shop management system, comprising:
a storage configured to store a coupon;
a communicator configured to perform communication with a server device and transmit the coupon to the server device;
a settlement unit configured to perform a settlement by communicating with a user terminal device which receives the coupon through the server device using a short range wireless communication method; and
a controller configured to, in response to the coupon being used in the settlement process, generate an updated coupon, store the updated coupon in the storage, and transmit the updated coupon to the server device.

26. A non-transitory readable medium storing a program to perform a searching method, the searching method comprising:
displaying a phone book screen;
in response to a search word being input on the phone book screen,
transmitting the search word to a server device;
receiving information corresponding to the search word from among information stored in the server device; and
displaying the received information on the phone book screen.

27. A non-transitory readable medium storing a program to perform a method of providing a shopping service, the shopping service providing method comprising:
displaying advertisement information on an execution screen of an application;
in response to advertisement information being selected, displaying a settlement screen including a settlement means by executing a wallet program automatically; and
in response to a settlement means being selected on the settlement screen,
performing a settlement using the selected settlement means.

28. A non-transitory readable medium storing a program to perform a data sharing method, the data sharing method comprising:
displaying an application execution screen including an alarm message received from a server device;
in response to the alarm message being selected, downloading available information corresponding to the alarm message from the server device; and
registering the downloaded available information in a settlement program.

29. A non-transitory readable medium storing a program to perform a settlement method, the settlement method comprising:
receiving available information downloaded from a server device through another application;
storing the available information;
in response to a shop management system being accessed, searching available information corresponding to the shop management system from among pre-stored available information; and
performing a settlement with a settlement system of the shop management system by applying the searched available information.

30. A non-transitory readable medium storing a program to perform a settlement method, the settlement method comprising:
registering available information downloaded from a server device by another application;
in response to a settlement being initiated, calculating a settlement amount by applying the registered available information; and
proceeding with a settlement process regarding the settlement amount.

31. A user terminal device, comprising:
a communicator configured to perform communication with a server device;
a storage configured to store available information received from the server device;
a detector configured to detect a location of the user terminal device;
a display configured to display a screen for recommending available information corresponding to the location from among the stored available information; and
a controller configured to, in response to at least one available information being selected on the screen, perform an electronic shopping using the selected available information.

32. The device as claimed in claim 31, wherein the controller calculates a distance between a location of the user terminal device and a shop which issues the available information for each available information, and recommends a predetermined number of available information in an order of a shortest distance.

33. The device as claimed in claim 31, wherein the controller recommends the available information based on popularity from among available information which is issued from a shop within a predetermined distance with reference to a location of the user terminal device.

34. The device as claimed in one of claims 31 to 33, wherein the available information is at least one of coupon information and event information, and in response to an event for performing the electronic shopping occurring, the controller recommends the available information by executing a wallet application and a location-based recommendation application respectively, and in response to at least one available information being selected from among the recommended available information, the controller calculates a settlement amount using the selected available information.

35. A user terminal device, comprising:
a storage configured to store phone book information;
a location detector configured to detect a location of a user terminal device;
a display configured to display a screen including a location-based recommendation menu;
a communicator configured to, in response to the location-based recommendation menu being selected,receive entrepreneur information which corresponds to an entrepreneur located within a predetermined area with respect to the location of the user terminal device, from among entrepreneur information registered in a server device ; and
a controller configured to add the received entrepreneur information to the phone book information.

36. The device as claimed in claim 35, wherein the controller displays a phone book screen using the phone book information when a phone book program is executed, and additionally displays a new group of the received entrepreneur information in a group menu of the phone book screen.

37. A user terminal device, comprising:
a display;
a call processor for telephone call;
a communicator configured to, in response to an outgoing call being made, transmit outgoing call information to a server device, and receive information issued from a counterpart from the server device; and
a controller configured to compose a call standby screen including the information until the outgoing call is connected.

38. The device as claimed in claim 37, wherein the information includes at least one of advertisement phrase, image, coupon, event guide card, and message to inform on a currently-issued coupon.

39. A user terminal device, comprising:
a display;
a storage configured to store phone book information;
a location detector configured to detect a location of the user terminal device;
a communicator configured to transmit a location of the user terminal device to a server device; and
a controller configured to, in response to advertisement information issued from an entrepreneur corresponding to the location from among entrepreneurs registered in the phone book information being received from the server device, display the received advertisement information on the display.

40. A server device, comprising:
a database configured to store information issued from a pre-registered entrepreneur;
a communicator configured to receive location information from a user terminal device; and
a controller configured to detect information issued from an entrepreneur registered in a phone book program of the user terminal device, and
transmit the detected information to the user terminal device.

41. A server device, comprising:
a communicator configured to, in response to an outgoing call being made by a user terminal device, obtain outgoing call information;
a database configured to store information issued from a pre-registered entrepreneur; and
a controller configured to detect information issued from an entrepreneur corresponding to outgoing call information of the user terminal device and transmit the detected information to the user terminal device.

42. The device as claimed in claim 41, wherein the information includes at least one of advertisement phrase, image, coupon, event guide card, and message to inform on a currently-issued coupon.

43. The device as claimed in claim 41, wherein the controller, in response to information regarding the user terminal device which transmits the outgoing call information not being stored, registers a user of the user terminal device in the database as a new customer, and in response to a new customer confirmation request being input from an entrepreneur having the outgoing call information, transmits information regarding the registered new customer to the entrepreneur.

44. A service providing method of a server device, the method comprising:
in response to an available information generation request being input from a registered entrepreneur, generating available information regarding the entrepreneur;
storing the available information;
in response to a predetermined condition being satisfied, transmitting the available information to a user;
storing history information regarding the available information; and
in response to a request for the history information being input from the entrepreneur, providing the history information to the entrepreneur.

## Amended claims

### Amended claims under Art. 19.1 PCT

1. A method of providing an advertisement service of a user terminal device, the method comprising:
registering a contact number of at least one advertiser in a phone book;
receiving advertisement information issued from an advertiser registered in the phone book from a server device;
alarming a reception of the advertisement information; and
displaying the received advertisement information in response to a confirmation request signal regarding the advertisement information being received.

2. The method as claimed in claim 1, wherein the alarming comprises:
displaying a number icon indicating a number of advertisement information which is not confirmed on a home screen; and
displaying an alarm message regarding the unconfirmed advertisement information in response to the number icon being selected.

3. The method as claimed in claim 1, wherein the alarming comprises:
displaying an alarm menu on a phone book screen; and
displaying an alarm message regarding unconfirmed advertisement information on the phone book screen in response to the alarm menu being selected.

4. The method as claimed in claim 1, wherein the alarming comprises:
displaying a sliding dialogue window including an alarm message indicating that there is unconfirmed advertisement message.

5. The method as claimed in claim 1, wherein the registering comprises:
reading a QR code or a bar code, and detecting contact information of an advertiser from the QR code or the bar code; and
adding the detected contact information to the phone book.

6. The method as claimed in one of claims 1 to 5, further comprising:
in response to a confirmation request signal regarding the advertisement not being input for a predetermined time, deleting the received advertisement information.

7. A method of providing an advertisement service of a user terminal device, the method comprising:
displaying a phone book screen including a contact information search area;
in response to a search word being input to the contact information search area, transmitting the search word to a server device;
receiving advertisement information corresponding to the search word from among advertisement information registered in database of the server device;
searching contact information corresponding to the search word from among contact information stored in the user terminal device; and
displaying the searched contact information and the received advertisement information on the phone book screen.

8. The method as claimed in claim 7, further comprising:
in response to new contact information being stored, transmitting the new contact information to the server device and registering the new contact information in database of the server device.

9. The method as claimed in claim 7, wherein the received advertisement information are aligned and displayed on the phone book screen with reference to at least one of a distance from a location of the user terminal device, a number of registrations, a number of calls, and a number of recommendations.

10. A user terminal device, comprising:
a storage configured to store an application;
a display configured to display an execution screen of the application;
a communicator configured to perform communication with a server device; and
a controller configured to, in response to intrinsic information being input on the execution screen, transmit the intrinsic information to the server device,
and in response to available information corresponding to the intrinsic information being registered in the server device, display an alarm message corresponding to the available information on the execution screen.

11. The device as claimed in claim 10, wherein the controller, in response to the alarm message being selected, receives the available information from the server device and stores the information in the storage so that a wallet program shares the available information stored in the storage, and in response to the wallet program being executed, provides a settlement service which reflects the available information by the wallet program.

12. The device as claimed in claim 10 or claim 11, wherein the application is at least one of phone book program, calendar program, and gallery program, and intrinsic information includes at least one of phone book of the user terminal device, contact information of an advertiser stored in the phone book, schedule information written in a calendar screen, a photo stored in the user terminal device, and metadata of the photo, and the available information includes at least one of coupon, stamp card, invitation letter, and event card.

13. A server device, comprising:
a communication interface configured to perform communication with a shop management system and a user terminal device;
shop database configured to record shop information received from the shop management system for each shop;
user database configured to record user information received from the user terminal device for each user; and
a controller configured to compare shop information recorded in the shop database and user information recorded in the user database to search matching information, and in response to matching user information and shop information being searched, issue a coupon included in the searched shop information to a user terminal device corresponding to the searched user information.
